(19) Europäisches Patentamt
European Patent Office
Office européen des brevets

(11) Veröffentlichungsnummer : **0 039 312**
**B1**

(12) # EUROPÄISCHE PATENTSCHRIFT

(45) Veröffentlichungstag der Patentschrift : **28.12.83**

(51) Int. Cl.$^3$ : **G 03 C 5/52**, G 03 C 7/02

(21) Anmeldenummer : **81810155.2**

(22) Anmeldetag : **24.04.81**

(54) **Farbphotographisches Aufzeichnungsmaterial für das Silberfarbbleichverfahren; Verfahren zur Herstellung dieses Materials und seine Verwendung zur Herstellung photographischer Bilder.**

(30) Priorität : **30.04.80 CH 3342/80**

(43) Veröffentlichungstag der Anmeldung : **04.11.81 Patentblatt 81/44**

(45) Bekanntmachung des Hinweises auf die Patenterteilung : **28.12.83 Patentblatt 83/52**

(84) Benannte Vertragsstaaten : **BE CH DE FR GB IT LI**

(56) Entgegenhaltungen : **DE-A- 2 018 363**

(73) Patentinhaber : **CIBA-GEIGY AG**
**Patentabteilung Postfach**
**CH-4002 Basel (CH)**

(72) Erfinder : **Lenoir, John, Dr.**
**Avenue Général Guisan 34**
**CH-1700 Fribourg (CH)**
Erfinder : **Jan, Gérald, Dr.**
**Rte. de la Poudrière 33**
**CH-1700 Fribourg (CH)**
Erfinder : **Fryberg, Mario, Dr.**
**Dery-le-Mont**
**CH-1724 Praroman-le-Mouret (CH)**

**EP 0 039 312 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

# Farbphotographisches Aufzeichnungsmaterial für das Silberfarbbleichverfahren ; Verfahren zur Herstellung dieses Materials und seine Verwendung zur Herstellung photographischer Bilder

Die vorliegende Erfindung betrifft ein farbphotographisches Aufzeichnungsmaterial für das Silberfarbbleichverfahren, das in mindestens einer Silberhalogenidemulsionsschicht oder in einer eine Silberhalogenidemulsionsschicht angrenzenden Kolloidschicht mindestens einen diffusionsfesten, bleichbaren und öllöslichen Monoazofarbstoff enthält.

Bekannt ist die Verwendung von wasserlöslichen Polyazo- oder Azoxyfarbstoffen für das Silberfarbbleichverfahren (A. Meyer, J. Phot. Ser. 13, (1965), 90 ; Research Disclosure 17643/VII A, Dezember 1978). Die Verwendung solcher Azofarbstoffe bietet zunächst insofern Vorteile, dass eine leichte und homogene Anfärbung der hydrophilen, kolloidalen Bindemittel einer photographischen Schicht, insbesondere Gelatine, möglich ist. Bei der Verarbeitung belichteter Silberfarbbleichmaterialien entstehen ferner an den Belichtungsstellen wasserlösliche Spaltprodukte oder Azofarbstoffe, die leicht auswaschbar sind. Von den Nachteilen, die jedoch bei Verwendung wasserlöslicher Azofarbstoffe auftreten, ist besonders die Tendenz dieser Farbstoffe zur Diffusion in und zwischen photographischen Schichten zu erwähnen. Zur Ueberwindung dieses Nachteils wurde bereits die Verwendung von Reaktivfarbstoffen vorgeschlagen. Dies brachte aber eine zu starke Beeinflussung der rheologischen, chemischen und mechanischen Eigenschaften der herzustellenden photographischen Schicht mit sich. Auch der Einsatz höher-molekularer wasserlöslicher Azofarbstoffe brachte kein vollständig zufriedenstellendes Ergebnis. Zwar wird damit die Diffusionsfestigkeit erhöht, doch entsteht in der Neigung solcher Farbstoffe, durch Aggregation Micellen zu bilden, ein weiterer Nachteil, der das rheologische Verhalten der Giesslösung und die Farbdichte des photographischen Bildes empfindlich stört.

CH-A-600 385 beschreibt ein Silberfarbbleichverfahren, in dem wasserunlösliche Azofarbstoffe mit maskierten Auxochromen in Gelatine dispergiert werden. Diese Farbstoffe bleichen jedoch nur sehr langsam und unvollständig. Ausserdem bedarf die Regenerierung des gewünschten Bildfarbstoffes einer speziellen Behandlung in einem stark alkalischen Medium. Andere wasserunlösliche Azofarbstoffe, die in Silberfarbbleichmaterialien eingearbeitet wurden, sind nur schwer zugänglich und zeigen eine zu geringe Stabilität gegen pH-Wertänderungen und Lichteinwirkung (US-A-3 544 326 ; Research Disclosure 14983, September 1976).

Aufgabe der vorliegenden Erfindung ist somit die Bereitstellung von neuen photographischen Aufzeichnungsmaterialien für das Silberfarbbleichverfahren unter Verwendung von wasserunlöslichen Farbstoffen, die sich gut in die Schichten der Aufzeichnungsmaterialien einarbeiten lassen und aufgrund ihrer Echtheiten zu einem Material führen, das Abbildungen verbesserter Qualität liefert.

Es wurden nun öllösliche Azofarbstoffe für die Verwendung in photographischen Schichten von Silberfarbbleichmaterialien gefunden, die dem Aufzeichnungsmaterial die gewünschten Eigenschaften verleihen und photographische Bilder hoher Qualität liefern.

Gegenstand der vorliegenden Erfindung ist daher ein farbphotographisches Aufzeichnungsmaterial für das Silberfarbbleichverfahren, das in mindestens einer Silberhalogenidemulsionsschicht oder in einer an die Silberhalogenidemulsionsschicht angrenzenden Kolloidschicht mindestens einen diffusionsfesten, bleichbaren und öllöslichen Monoazofarbstoff enthält, dadurch gekennzeichnet, dass der Monoazofarbstoff der Formel

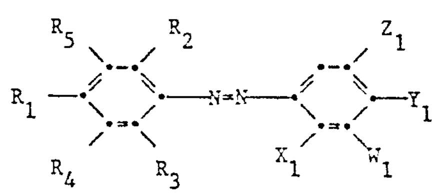

(1)

entspricht, worin

$R_1$ Wasserstoff, gegebenenfalls substituiertes Alkyl mit 1 bis 18 Kohlenstoffatomen, gegebenenfalls substituiertes Alkoxy mit 1 bis 16 Kohlenstoffatomen, gegebenenfalls substituiertes Alkenyl mit 2 bis 4 Kohlenstoffatomen, gegebenenfalls substituiertes aliphatisches Acyl mit 2 bis 5 Kohlenstoffatomen, gegebenenfalls substituiertes Benzoyl, gegebenenfalls substituiertes Carbalkoxy mit 2 bis 20 Kohlenstoffatomen, $—NV_1COU_1$, worin $V_1$ Wasserstoff oder Alkyl mit 1 bis 4 Kohlenstoffatomen, und $U_1$ gegebenenfalls substituiertes Alkyl mit 1 bis 12 Kohlenstoffatomen oder gegebenenfalls substituiertes Alkenyl mit 2 bis 4 Kohlenstoffatomen ist ; Carbonamido oder Sulfonamido, N-alkyl- oder N,N-dialkyl-substituiertes Carbonamido oder Sulfonamido, wobei die Alkylteile je 1 bis 12 Kohlenstoffatome enthalten und gegebenenfalls weiter substituiert sind ; gegebenenfalls substituiertes Alkysulfon mit 1 bis 12 Kohlenstoffatomen, gegebenenfalls substituiertes Arylsulfon, gegebenenfalls substituiertes Aryloxy oder gegebenenfalls substituierter Arylsulfonsäureester, ferner Hydroxyl, Cyano, Nitro oder Halogen,

$R_2$ Wasserstoff, gegebenenfalls substituiertes Alkyl mit 1 bis 12 Kohlenstoffatomen, gegebenenfalls substituiertes Alkoxy mit 1 bis 6 Kohlenstoffatomen, gegebenenfalls substituiertes Carbalkoxy mit 2 bis 5

Kohlenstoffatomen, N-alkyl- oder N,N-dialkylsubstituiertes Sulfonamido oder Carbonamido, wobei die Alkylteile je 1 bis 8 Kohlenstoffatome enthalten und gegebenenfalls substituiert sind ; gegebenenfalls substituiertes Alkylsulfon mit 1 bis 6 Kohlenstoffatomen, gegebenenfalls substituiertes Arylsulfon, oder gegebenenfalls substituiertes Aryloxy, ferner Cyano, Nitro oder Halogen,

$R_3$ Wasserstoff, gegebenenfalls substituiertes Alkyl oder Alkoxy mit 1 bis 4 Kohlenstoffatomen, gegebenenfalls substituiertes Phenoxy, N-alkyl- oder N,N-dialkylsubstituiertes Sulfonamido oder Carbonamido, wobei die Alkylteile je 1 bis 6 Kohlenstoffatome enthalten, und gegebenenfalls substituiert sind ; gegebenenfalls substituiertes Alkylsulfon mit 1 bis 4 Kohlenstoffatomen, gegebenenfalls substituierter Phenylsulfonsäureester, Cyano, Nitro, Halogen, gegebenenfalls substituiertes Carbalkoxy mit 1 bis 16 Kohlenstoffatomen, $—P(O)(OT^1)_2$, worin $T^1$ Alkyl mit 1 bis 4 Kohlenstoffatomen ist,

$R_4$ Wasserstoff, gegebenenfalls substituiertes Alkyl mit 1 bis 4 Kohlenstoffatomen, gegebenenfalls substituiertes Alkoxy mit 1 bis 6 Kohlenstoffatomen, gegebenenfalls substituiertes Carbalkoxy mit 2 bis 16 Kohlenstoffatomen, N-alkyl- oder N,N-dialkyl substituiertes Sulfonamido oder Carbonamido, wobei der Alkylteil je 1 bis 12 Kohlenstoffatome enthält und gegebenenfalls substituiert ist ; $—NQ_1COT_1$, worin $Q_1$ Wasserstoff oder Alkyl mit 1 oder 2 Kohlenstoffatomen und $T_1$ gegebenenfalls substituiertes Alkyl mit 1 bis 4 Kohlenstoffatomen ist ; gegebenenfalls substituiertes Alkylsulfon mit 1 bis 12 Kohlenstoffatomen oder gegebenenfalls substituiertes Arylsulfon, ferner Hydroxyl, Cyano, Nitro oder Halogen,

$R_5$ Wasserstoff, gegebenenfalls substituiertes Alkyl mit 1 bis 4 Kohlenstoffatomen oder gegebenenfalls substituiertes Carbalkoxy mit 2 bis 13 Kohlenstoffatomen,

$X_1$ Wasserstoff, gegebenenfalls substituiertes Alkyl oder Alkoxy mit 1 bis 6 Kohlenstoffatomen, $—NL_1CO—M_1$, worin $L_1$ Wasserstoff oder gegebenenfalls substituiertes Alkyl mit 1 bis 4 Kohlenstoffatomen und $M_1$ gegebenenfalls substituiertes Alkyl oder Alkoxy mit 1 bis 24 Kohlenstoffatomen ist ; gegebenenfalls substituiertes Alkylsulfonylamino mit 1 bis 25 Kohlenstoffatomen oder Hydroxyl,

$Y_1$ Wasserstoff, gegebenenfalls substituiertes Alkyl mit 1 bis 6 Kohlenstoffatomen, gegebenenfalls substituiertes Alkoxy mit 1 bis 12 Kohlenstoffatomen, gegebenenfalls substituiertes Carbalkoxy mit 2 bis 5 Kohlenstoffatomen, N-alkyl- oder N,N-dialkylsubstituiertes Amino, wobei die Alkylreste je 1 bis 6 Kohlenstoffatome enthalten und gegebenenfalls substituiert sind, gegebenenfalls substituiertes Arylsulfonylamino, $—NE_1COG_1$, worin $E_1$ Wasserstoff oder gegebenenfalls substituiertes Alkyl mit 1 bis 8 Kohlenstoffatomen und $G_1$ gegebenenfalls substituiertes Alkyl mit 1 bis 12 oder gegebenenfalls substituiertes Alkoxy mit 1 bis 4 Kohlenstoffatomen ist ; $—NE_1P(O)(OG^1)_2$, worin $E_1$ die oben angegebene Bedeutung hat und $G_1$ Alkyl mit 1 bis 12 Kohlenstoffatomen ist ; Halogen oder Hydroxyl,

$Z_1$ Wasserstoff, gegebenenfalls substituiertes Alkyl mit 1 bis 12 Kohlenstoffatomen, gegebenenfalls substituiertes Alkoxy mit 1 bis 6 Kohlenstoffatomen, $—NA_1COD_1$, worin $A_1$ Wasserstoff oder gegebenenfalls substituiertes Alkyl mit 1 bis 8 Kohlenstoffatomen und $D_1$ gegebenenfalls substituiertes Alkyl mit 1 bis 18 Kohlenstoffatomen ist ; gegebenenfalls substituiertes Acyl mit 2 bis 9 Kohlenstoffatomen, gegebenenfalls substituiertes Carbalkoxy mit 2 bis 19 Kohlenstoffatomen, gegebenenfalls substituiertes Alkylsulfonylamino mit 1 bis 6 Kohlenstoffatomen, Halogen oder diejenigen Atome bedeutet, um zusammen mit $Y_1$ einen gegebenenfalls substituierten 5- oder 6-gliedrigen, gesättigten oder ungesättigten, gegebenenfalls ein oder 2 Heteroatome enthaltenden Ring zu bilden und

$W_1$ Wasserstoff, gegebenenfalls substituiertes Alkyl oder Alkoxy mit je 1 bis 4 Kohlenstoffatomen oder Halogen bedeutet.

Gegenstand der Erfindung ist ferner das Verfahren zur Herstellung des photographischen Aufzeichnungsmaterials, seine Verwendung zur Herstellung photographischer Bilder sowie das Verfahren zur Herstellung photographischer Bilder unter Verwendung von Silberfarbbleichmaterialien, welche die erfindungsgemässen öllöslichen Azofarbstoffe in den photographischen Schichten enthalten.

Der Substituent $R_1$ ist Wasserstoff oder Alkyl mit 1 bis 18 Kohlenstoffatomen, wobei die Alkylreste geradkettig oder verzweigt sein können. Beispielsweise kommen in Betracht : Methyl, Aethyl, Propyl, i-Propyl, Butyl, i-Butyl, tert. Butyl, Amyl, tert.-Amyl (1,1-Dimethylpropyl), 1,1,3,3-Tetramethylbutyl, 1-Methyläthylpentyl, Hexyl, 1-Methylpentyl, Neopentyl, 1-, 2- oder 3-Methylhexyl, Heptyl, n-Octyl, tert. Octyl, 2-Aethylhexyl, n-Nonyl, Isononyl, tert. Nonyl, Decyl, tert ; Decyl, Undecyl, Dodecyl, Tetradecyl, Hexadecyl oder Octadecyl, sowie die dazugehörenden Isomeren.

Bevorzugt sind Alkylreste mit 1 bis 12 Kohlenstoffatomen. Besonders bevorzugt sind solche mit 1 bis 6 Kohlenstoffatomen. Sie können mit Carbalkoxy mit 2 bis 12, insbesondere mit 2 bis 6 Kohlenstoffatomen substituiert sein. Als weiterer Substituent kommt Alkoxy mit 1 bis 4 Kohlenstoffatomen infrage.

Bedeutet $R_1$ Alkoxy mit 1 bis 16 Kohlenstoffatomen, so können als Alkoxyreste die den genannten Alkylresten analogen Reste in Frage kommen. Alkoxyreste mit 1 bis 8 Kohlenstoffatomen werden dabei bevorzugt. Als Substituent der Alkoxyreste ist $—(OC_2H_4)_n—O(CH_2)_mCH_3$ zu nennen, worin n 1 oder 2 und m ganze Zahlen von 0 bis 3 bedeuten.

Weiter ist $R_1$ Alkenyl mit 2 bis 4 Kohlenstoffatomen und kann insbesondere Vinyl bedeuten. Substituenten für diese ungesättigten Reste sind Cyano und Carbalkoxy mit 2 bis 9 Kohlenstoffatomen. Cyano und Carbalkoxy können sowohl allein als auch zusammen Substituenten am Alkenyl sein.

Ferner bedeutet $R_1$ aliphatisches oder aromatisches (Carbonsäure-) Acyl. Ist $R_1$ ein aliphatisches Acyl, so enthält der Acylrest 2 bis 5 Kohlenstoffatome, die gegebenenfalls mit Methoxy oder Aethoxy substituiert sind. Acyl mit 2 oder 3 Kohlenstoffatomen ist bevorzugt. Besonders geeignet ist Acetyl. Ist $R_1$ ein aromatisches Acyl, so ist Benzoyl bevorzugt. Dieses kann in para-Stellung weiter substituiert sein,

z. B. mit Chlor, $-CO_2B$, $-SO_2B$ oder $-COB$, worin B Alkyl mit 1 bis 8, insbesondere 1 bis 4 Kohlenstoffatomen bedeutet.

Bedeutet $R_1$ Carbalkoxy, so enthält der Alkoxyteil 1 bis 19 Kohlenstoffatome. Bevorzugt wird Alkoxy mit 1 bis 16, insbesondere 1 bis 8 Kohlenstoffatomen. Diese Alkoxyteile entsprechen dabei den genannten Alkylresten. Als Substituenten für die genannten Alkoxyteile sind $-(OC_2H_4)_n-OCH_3$ und $-(OC_2H_4)_n-OC_2H_5$ zu nennen, worin n die oben genannte Bedeutung hat.

Steht $-NV_1\overset{\overset{O}{\|}}{C}-U_1$ für $R_1$, so kann $V_1$ Wasserstoff oder Alkyl mit 1 bis 4 Kohlenstoffatomen bedeuten. Wasserstoff ist bevorzugt. $U_1$ ist Alkyl mit 1 bis 12, vorzugsweise 1 bis 8, insbesondere 1 bis 4 Kohlenstoffatomen. Als Substituenten kommen Methoxy und Hydroxyl infrage. Ferner ist $U_1$ Alkenyl mit 2 bis 4 Kohlenstoffatomen.

$R_1$ ist Carbonamido der Formel $-CONH_2$ oder Sulfonamido der Formel $-SO_2NH_2$. Desweiteren ist $R_1$ N-alkyl- oder N,N-dialkylsubstituiertes Carbonamido oder Sulfonamido. Die Alkylreste enthalten dabei je 1 bis 12, insbesondere 1 bis 10 Kohlenstoffatome. Bevorzugt sind solche mit je 1 bis 5 Kohlenstoffatomen. Als Substituenten für die Alkylreste können z. B. Methoxy, Hydroxyl oder Amino infrage kommen.

Der Substituent $R_1$ ist ferner Alkylsulfon mit 1 bis 12, insbesondere 1 bis 8 Kohlenstoffatomen. Besonders bevorzugt ist Alkylsulfon mit 1 bis 6 Kohlenstoffatomen. Der Alkylteil kann z. B. mit Methoxy, Aethoxy oder Hydroxyl weiter substituiert sein.

Ist $R_1$ Arylsulfon, so ist Phenylsulfon bevorzugt. Es ist gegebenenfalls mit Alkyl mit 1 bis 5 Kohlenstoffatomen oder Hydroxyl, vorzugsweise in para-Stellung, substituiert. Dieselben Substitutionsverhältnisse können vorliegen, wenn $R_1$ Aryloxy, vorzugsweise Phenoxy, oder Arylsulfonsäureester, insbesondere Phenylsulfonsäureester ist.

Ferner ist $R_1$ Hydroxyl, Cyano, Nitro oder Halogen. Ist $R_1$ Halogen, so wird Chlor oder Brom bevorzugt.

Der in ortho-Stellung zur Azogruppe stehende Substituent $R_2$ ist Wasserstoff oder Alkyl mit 1 bis 12 Kohlenstoffatomen. Als Alkylreste können entsprechend die für $R_1$ in der Bedeutung von Alkyl genannten Reste in Frage kommen. Alkylreste mit 1 bis 8 Kohlenstoffatomen sind bevorzugt. Besonders bevorzugt ist Methyl. Als Substituenten kann Halogen, insbesondere Fluor infrage kommen.

Ist $R_2$ Alkoxy mit 1 bis 6 Kohlenstoffatomen, so sind Methoxy und Aethoxy besonders bevorzugt. Sie können mit weiteren Methoxygruppen substituiert sein.

$R_2$ ist ferner Carbalkoxy mit 2 bis 5, insbesondere 2 oder 3 Kohlenstoffatomen. Als Substituent an den jeweiligen Alkoxyteilen kann z. B. Methoxy und Aethoxy genannt werden.

Ferner ist $R_2$ N-alkyl- oder N,N-dialkylsubstituiertes Sulfonamido oder Carbonamido, worin die Alkylteile dieser Gruppen je 1 bis 8, vorzugsweise je 1 bis 4 Kohlenstoffatome enthalten. Diese können gegebenenfalls mit Methoxy substituiert sein.

Eine weitere Bedeutung von $R_2$ ist Alkylsulfon mit 1 bis 6, besonders 1 bis 4 Kohlenstoffatomen. Als Substituenten können z. B. Methoxy und Hydroxyl infrage kommen.

Ist $R_2$ Arylsulfon, so ist Phenylsulfon besonders geeignet. Dieses kann mit Alkyl mit 1 bis 5 Kohlenstoffatomen weiter substituiert sein.

Bedeutet $R_2$ Aryloxy, so ist es vorzugsweise Phenoxy. Als Substituent am Aryloxy bietet sich Alkyl mit 1 bis 8, insbesondere 1 bis 5 Kohlenstoffatomen an. Dieses befindet sich bevorzugt in der para-Stellung des jeweiligen Aryloxyrestes.

Desweiteren ist $R_2$ Cyano, Nitro oder Halogen. Ist $R_2$ Halogen, so ist Chlor oder Brom bevorzugt.

Der ebenfalls zur Azogruppe in ortho-Stellung sich befindliche Substituent $R_3$ kann die Bedeutung von Wasserstoff oder Alkyl haben. Ist $R_3$ Alkyl, so enthält es 1 bis 4 Kohlenstoffatome, wobei Methyl bevorzugt ist. Gegebenenfalls ist $R_3$ mit Methoxy substituiert.

Ist $R_3$ Alkoxy, so enthält es 1 bis 4 Kohlenstoffatome und ist gegebenenfalls mit Methoxy weiter substituiert.

$R_3$ bedeutet ferner Phenoxy. Dieses kann mit Halogen, insbesondere Chlor substituiert sein.

Hat $R_3$ die Bedeutung N-alkyl- oder N,N-dialkylsubstituiertes Sulfonamido oder Carbonamido, so kommen für diese Gruppen die oben genannten Alkylreste mit je 1 bis 6, vorzugsweise 1 oder 2 Kohlenstoffatomen in Frage. Zwei Alkylsubstituenten am Stickstoffatom des Sulfonamido- und Carbonamidorestes sind bevorzugt. Diese sind gegebenenfalls mit Methoxy weiter substituiert.

Bedeutet $R_3$ Alkylsulfon, so enthält der Alkylteil 1 bis 4 Kohlenstoffatome. Bevorzugt ist Methylsulfon.

Steht $R_3$ für Phenylsulfonsäureester, so ist es gegebenenfalls mit Alkyl mit 1 bis 5 Kohlenstoffatomen substituiert.

Ferner ist $R_3$ Cyano, Nitro oder Halogen, wobei in der letzteren Bedeutung Chlor und Brom besondere Bedeutung zukommt.

In der Bedeutung von Carbalkoxy enthält $R_3$ im Alkylteil 1 bis 16, insbesondere 1 bis 12, vorzugsweise 1 bis 6 Kohlenstoffatome. Als Substituenten kommen Methoxy oder Aethoxy infrage.

Ist $R_3$ $-P(O)(OT^1)_2$, so ist $T^1$ ein Alkylrest mit 1 bis 4 Kohlenstoffatomen. Alkylreste mit 1 oder 2 Kohlenstoffatomen sind besonders geeignet.

Der Substituent $R_4$ hat neben der Bedeutung von Wasserstoff auch die von Alkyl mit 1 bis 4 Kohlenstoffatomen. Ein bevorzugter Alkylrest ist Methyl. Die Alkylreste können mit Hydroxyl oder

Halogen, insbesondere mit Fluor substituiert sein.

Bedeutet $R_4$ Alkoxy mit 1 bis 6, insbesondere 1 oder 2 Kohlenstoffatomen, so sind die Reste gegebenenfalls mit Methoxy weiter substituiert.

Ferner ist $R_4$ auch Carbalkoxy mit 2 bis 16 Kohlenstoffatomen. Vorzugsweise enthält der Alkylteil 2 bis 9 Kohlenstoffatome. Als Substituenten am Alkylteil kommen z. B. Methoxy, Aethoxy oder $-OC_2H_4-OCH_3$ infrage.

Desweiteren ist $R_4$ N-alkyl- oder N,N-dialkylsubstituiertes Sulfonamido oder Carbonamido, wobei die Alkylteile dieser Gruppen je 1 bis 6 Kohlenstoffatome enthalten. Alkylteile mit je 1 bis 4, insbesondere aber 1 oder 2 Kohlenstoffatomen sind bevorzugt. Sie können mit Methoxy substituiert sein.

Steht $R_4$ für $-NQ_1\overset{O}{\overset{\|}{C}}-T_1$, so bedeutet $Q_1$ Wasserstoff oder Alkyl mit 1 oder 2 Kohlenstoffatomen, wobei Wasserstoff bevorzugt ist, und $T_1$ Alkyl mit 1 bis 4 Kohlenstoffatomen. Die Alkylreste $Q_1$ und $T_1$ sind gegebenenfalls mit Hydroxyl, Cyano, Chlor oder Brom substituiert.

Für $R_4$ in der Bedeutung von Alkylsulfon kommen Alkylreste mit 1 bis 12, insbesondere 1 bis 6 Kohlenstoffatomen in Frage. Von diesen Alkylresten ist Methyl ganz besonders bevorzugt. Die Alkylreste können mit Amino substituiert sein.

Ist $R_4$ Arylsulfon, so ist Phenylsulfon bevorzugt. Als Substituenten kommen Alkylreste mit 1 bis 5 Kohlenstoffatome in Betracht, die bevorzugt die para-Stellung der Arylreste substituieren.

Ferner kann $R_4$ die Bedeutung von Hydroxyl, Cyano, Nitro oder Halogen haben, wovon Hydroxyl, Cyano und Chlor besonders geeignet sind.

Für den Substituenten $R_5$ kommen die Bedeutungen Wasserstoff oder Alkyl mit 1 bis 4 Kohlenstoffatomen in Betracht. Von den Alkylresten ist Methyl der bevorzugte. Die Alkylreste können mit Carbalkoxy mit 2 oder 3 Kohlenstoffatomen substituiert sein.

Ist $R_5$ Carbalkoxy mit 2 bis 13 Kohlenstoffatomen im Alkoxyteil, so werden davon solche mit 2 bis 7, insbesondere aber 2 oder 3 Kohlenstoffatomen bevorzugt. Als Substituent an den Alkylteilen bietet sich Methoxy an.

Der Substituent $X_1$ kann neben Wasserstoff, Alkyl oder Alkoxy mit je 1 bis 6, insbesondere 1 bis 4 Kohlenstoffatomen bedeuten. In der Bedeutung von Alkoxy ist $X_1$ bevorzugt Methoxy. Substituenten an den Alkyl- und Alkoxyresten sind z. B. Hydroxyl oder Methoxy.

$X_1$ kann für $-NL_1\overset{O}{\overset{\|}{C}}-M_1$ stehen. Darin sind $L_1$ Wasserstoff oder Alkyl mit 1 bis 4 Kohlenstoffatomen, wobei von den Alkylresten Methyl bevorzugt ist, und $M_1$ Alkyl oder Alkoxy mit 1 bis 24 Kohlenstoffatomen. Die Alkylreste können jeder der für den Substituenten $R_1$ in der Bedeutung von Alkyl angegebenen Isomeren darstellen und zusätzlich noch die geradkettigen Alkylreste mit 19, 20, 22 oder 24 Kohlenstoffatomen bedeuten. Dasselbe trifft für die Alkoxyreste zu. Bevorzugt werden solche Alkylreste, die 1 bis 13, insbesondere 1 bis 8 Kohlenstoffatome enthalten. Für Alkoxy kommen vorzugsweise Reste mit 1 bis 4 Kohlenstoffatomen in Betracht. Besonders geeignet sind Methoxy oder Aethoxy. Substituenten für die Alkyl- und Alkoxyreste können Fluor, Chlor, Carbalkoxy mit 2 bis 5, vorzugsweise 2 oder 3 Kohlenstoffatomen, Phenyl, para-$(Cm_3H_{2m_3+1})-C_6H_4-$, Phenoxy, para-$(Cm_3H_{2m_3+1})-C_6H_4-O-$, worin $m_3$ ganze Zahlen von 1 bis 8 bedeutet ; oder Alkoxy mit 1 bis 5 Kohlenstoffatomen sein.

Ist $X_1$ Alkylsulfonylamino ($-NHSO_2-$Alkyl), so enthält der Alkylteil 1 bis 25 Kohlenstoffatome. Davon sind solche mit 1 bis 12, insbesondere 1 bis 6 Kohlenstoffatomen bevorzugt. Als Substituenten am Alkylteil sind z. B. Methoxy, Cyano oder Phenyl zu nennen.

Ferner kann $X_1$ die Bedeutung von Hydroxyl besitzen.

Für den Substituenten $Y_1$ kommen die Bedeutungen Wasserstoff und Alkyl mit 1 bis 6 Kohlenstoffatomen in Frage. Von den Alkylresten sind Methyl und Aethyl bevorzugt.

Als Alkoxyreste kommen für $Y_1$ solche mit 1 bis 12, insbesondere 1 bis 8 Kohlenstoffatomen in Betracht. Sie können mit Methoxy Aethoxy sowie mit Resten der Formeln $-OC_2H_4OC_2H_5$ oder $-OC_2H_4OCH_3$ weiter substituiert sein.

Bedeutet $Y_1$ Carbalkoxy mit 2 bis 5, insbesondere 2 oder 3 Kohlenstoffatomen, so können diese mit Alkoxygruppierungen wie $-OC_2H_4-OCH_3$ z. B substituiert sein.

$Y_1$ bedeutet ferner N-alkyl- oder N,N-dialkylsubstituiertes Amino, worin die Alkylteile je 1 bis 6, insbesondere je 1 bis 4 Kohlenstoffatome enthalten. Substituenten für die Alkylteile sind gegebenenfalls Methoxy, Carbalkoxy mit 2 bis 5 Kohlenstoffatomen, Acetyloxy, Hydroxyl, Nitro, Cyano, Phenyl oder Tosyl. Ferner kommen für $Y_1$ in der Bedeutung von Amino auch cyclische Amine, wie z. B. Pyrrolidinyl, Piperidinyl oder Morpholinyl in Frage.

Ist $Y_1$ Arylsulfonylamino ($-NHSO_2$-Aryl), so ist Phenylsulfonylamino bevorzugt. Als Substituent kommt Alkyl mit 1 bis 4 Kohlenstoffatomen infrage.

Ist $Y_1$ $-NE_1\overset{O}{\overset{\|}{C}}-G_1$, so bedeutet $E_1$ Wasserstoff oder Alkyl mit 1 bis 8, insbesondere 1 oder 2 Kohlenstoffatomen. Die Alkylreste sind gegebenenfalls mit Cyano substituiert. $G_1$ kann Alkyl mit 1 bis 12 Kohlenstoffatome bedeuten. Alkylreste mit 1 bis 8 Kohlenstoffatomen sind bevorzugt. Die Alkylreste

können mit Methoxy oder Aethoxy substituiert sein. Weiter kann $G_1$ Alkoxy mit 1 bis 4 Kohlenstoffatomen bedeuten. Davon sind Methoxy und Aethoxy besonders geeignet. Substituent an den Alkoxyresten kann $-(OC_2H_4)_n-OCH_3$ sein, worin n die oben angegebene Bedeutung hat.

Bedeutet $Y_1$ $-NE_1P(O)(OG^1)_2$, so hat $E_1$ die oben angegebene Bedeutung. $G^1$ ist Alkyl mit 1 bis 12, insbesondere 1 bis 6, vorzugsweise 1 bis 4 Kohlenstoffatomen.

Desweiteren ist $Y_1$ Halogen oder Hydroxyl, wobei Chlor das bevorzugte Halogen ist.

Der Substituent $Z_1$ bedeutet Wasserstoff oder Alkyl mit 1 bis 12 Kohlenstoffatomen. Alkylreste mit 1 bis 6 Kohlenstoffatomen sind besonders geeignet. Die Alkylreste sind gegebenenfalls mit Hydroxyl, Halogen oder Cyano substituiert.

Bedeutet $Z_1$ Alkoxy mit 1 bis 6, insbesondere 1 bis 4 Kohlenstoffatomen, so kommt $-O(CH_2)_m-CH_3$ als Substituent am Alkoxyrest in Betracht, worin m 0, 1, 2 oder 3 bedeutet.

Ferner hat $Z_1$ die Bedeutung von $-NA_1\overset{\overset{O}{\|}}{C}-D_1$. $A_1$ kann Wasserstoff oder Alkyl mit 1 bis 8 Kohlenstoffatomen, wobei Methyl bevorzugt ist, bedeuten und $D_1$ Alkyl mit 1 bis 18 Kohlenstoffatomen. Dabei sind Alkylreste mit 1 bis 12, insbesondere 1 bis 8 Kohlenstoffatomen bevorzugt. Die Alkylreste sind gegebenenfalls mit Hydroxyl oder Amino substituiert.

Desweitern kann $Z_1$ die Bedeutung von (Carbonsäure-) Acyl mit 2 bis 9, insbesondere 2 bis 5 Kohlenstoffatomen haben, wobei Acetyl besonders geeignet ist. Substituent kann Methoxy sein.

Bedeutet $Z_1$ Carbalkoxy, so enthält der Alkylteil 1 bis 18, vorzugsweise 1 bis 12 Kohlenstoffatome und ist gegebenenfalls mit $-(OC_2H_4)_n-OCH_3$ substituiert, wobei n die oben angegebene Bedeutung hat.

Ferner kann $Z_1$ Alkylsulfonylamino bedeuten, wobei der Alkylteil 1 bis 6 Kohlenstoffatome enthält. Methyl ist dabei der bevorzugte Alkylrest.

Ist $Z_1$ Halogen, so ist Chlor besonders geeignet.

Ueberdies bedeutet $Z_1$ diejenigen Atome, welche zusammen mit $Y_1$ einen 5- oder 6-gliedrigen, gesättigten oder ungesättigten, gegebenenfalls ein oder zwei Heteroatome enthaltenden Ring bilden. Als Heteroatome kommen Stickstoff und Sauerstoff, entweder einzeln oder zusammen, in Frage. Die Ringe sind gegebenenfalls mit Methyl oder Äthyl substituiert. Als Beispiele seien genannt :

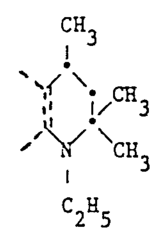 , 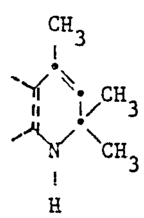 , 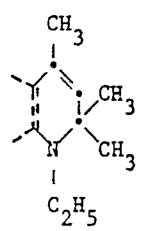 und 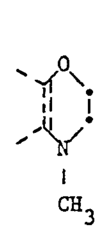

Der Substituent $W_1$ hat neben Wasserstoff die Bedeutung von Alkyl oder Alkoxy mit je 1 bis 4 Kohlenstoffatomen. Bevorzugt sind dabei die Reste Methyl, Methoxy, Aethyl und Aethoxy. Sie sind gegebenenfalls mit Methoxy substituiert.

Bedeutet $W_1$ Halogen, so ist Chlor bevorzugt.

Bevorzugt für die Verwendung in photographischen Schichten von Silberfarbbleichmaterialien sind nun solche öllöslichen Azofarbstoffe, die der Formel

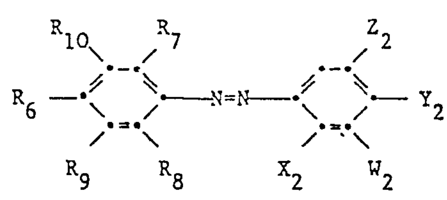 (2)

entsprechen, worin

$R_6$ Wasserstoff, gegebenenfalls substituiertes Alkyl mit 1 bis 12 Kohlenstoffatomen, gegebenenfalls substituiertes Alkoxy mit 1 bis 16 Kohlenstoffatomen, gegebenenfalls substituiertes Alkenyl mit 2 bis 4 Kohlenstoffatomen, gegebenenfalls substituiertes aliphatisches Acyl mit 2 oder 3 Kohlenstoffatomen, gegebenenfalls substituiertes Benzoyl, gegebenenfalls substituiertes Carbalkoxy mit 2 bis 16 Kohlenstoffatomen, $-NV_2COU_1$, worin $V_2$ Wasserstoff oder Alkyl mit 1 oder 2 Kohlenstoffatomen und $U_1$ die oben angegebene Bedeutung hat ; Carbonamido oder Sulfonamido, N-alkyl- oder N,N-dialkylsubstituiertes Carbonamido oder Sulfonamido, wobei die Alkylteile je 1 bis 10 Kohlenstoffatome enthalten und gegebenenfalls weiter substituiert sind ; gegebenenfalls substituiertes Alkylsulfon mit 1 bis 8 Kohlenstoffatomen, gegebenenfalls substituiertes Phenylsulfon, gegebenenfalls substituiertes Phenoxy oder gegebenenfalls substituierter Phenylsulfonsäureester, ferner Hydroxyl, Cyano, Nitro oder Halogen,

$R_7$ Wasserstoff, gegebenenfalls substituiertes Alkyl mit 1 bis 8 Kohlenstoffatomen, gegebenenfalls

substituiertes Alkoxy mit 1 bis 6 Kohlenstoffatomen, gegebenenfalls substituiertes Carbalkoxy mit 2 oder 3 Kohlenstoffatomen, N-alkyl- oder N,N-dialkylsubstituiertes Sulfonamid oder Carbonamido, wobei die Alkylteile je 1 bis 8 Kohlenstoffatome enthalten und gegebenenfalls substituiert sind ; gegebenenfalls substituiertes Alkylsulfon mit 1 bis 6 Kohlenstoffatomen, gegebenenfalls substituiertes Phenylsulfon oder gegebenenfalls substituiertes Phenoxy, ferner Cyano, Nitro oder Halogen,

$R_8$ Wasserstoff, Alkyl oder Alkoxy mit 1 bis 4 Kohlenstoffatomen, gegebenenfalls substituiertes Phenoxy, N-alkyl oder N,N-dialkyl substituiertes Sulfonamid oder Carbonamido, wobei die Alkylteile je 1 bis 4 Kohlenstoffatome enthalten und gegebenenfalls substituiert sind ; Alkylsulfon mit 1 bis 4 Kohlenstoffatomen, gegebenenfalls substituierter Phenylsulfonsäureester, Cyano, Nitro, Halogen, gegebenenfalls substituiertes Carbalkoxy mit 1 bis 16 Kohlenstoffatomen, oder $—P(O)(OT^1)_2$, worin $T^1$ die oben angegebene Bedeutung hat,

$R_9$ Wasserstoff, gegebenenfalls mit Halogen substituiertes Alkyl mit 1 bis 4 Kohlenstoffatomen, gegebenenfalls substituiertes Alkoxy mit 1 bis 6 Kohlenstoffatomen, Carbalkoxy mit 2 bis 16 Kohlenstoffatomen, N-alkyl- oder N,N-dialkyl-substituiertes Sulfonamid oder Carbonamido, wobei die Alkylteile je 1 bis 8 Kohlenstoffatome enthalten und gegebenenfalls substituiert sind ; $—NQ_1COT_1$, worin $Q_1$ und $T_1$ die oben angegebenen Bedeutungen haben ; Alkylsulfon mit 1 bis 6 Kohlenstoffatomen, Phenylsulfon, Hydroxyl, Cyano, Nitro oder Halogen,

$R_{10}$ Wasserstoff, Alkyl mit 1 bis 4 Kohlenstoffatomen oder Carbalkoxy mit 2 bis 13 Kohlenstoffatomen,

$X_2$ Wasserstoff, Alkyl oder Alkoxy mit je 1 bis 6 Kohlenstoffatomen, $—NL_2COM_2$, worin $L_2$ Wasserstoff oder Alkyl mit 1 bis 4 Kohlenstoffatomen und $M_2$ gegebenenfalls substituiertes Alkyl oder Alkoxy mit 1 bis 18 Kohlenstoffatomen ist ; Alkylsulfonylamino mit 1 bis 18 Kohlenstoffatomen oder Hydroxyl,

$Y_2$ Wasserstoff, gegebenenfalls substituiertes Alkyl mit 1 bis 4 Kohlenstoffatomen, Alkoxy mit 1 bis 12 Kohlenstoffatomen, gegebenenfalls substituiertes Carbalkoxy mit 2 bis 5 Kohlenstoffatomen, N-alkyl- oder N,N-dialkylsubstituiertes Amino, wobei die Alkylteile je 1 bis 6 Kohlenstoffatome enthalten und gegebenenfalls substituiert sind ; gegebenenfalls substituiertes Phenylsulfonylamino, $—NE_2COG_2$, worin $E_2$ Wasserstoff oder gegebenenfalls mit Cyano substituiertes Alkyl mit 1 bis 8 Kohlenstoffatomen und $G_2$ Alkyl mit 1 bis 8 Kohlenstoffatomen oder gegebenenfalls substituiertes Alkoxy mit 1 bis 4 Kohlenstoffatomen ist ; $—NHP(O)(OG^2)_2$, worin $G^2$ Alkyl mit 1 bis 6 Kohlenstoffatomen ist ; Halogen oder Hydroxyl,

$Z_2$ Wasserstoff, Alkyl mit 1 bis 12 Kohlenstoffatomen, gegebenenfalls substituiertes Alkoxy mit 1 bis 6 Kohlenstoffatomen, $—NA_2COD_2$, worin $A_2$ Wasserstoff oder Alkyl mit 1 bis 8 Kohlenstoffatomen und $D_2$ Alkyl mit 1 bis 18 Kohlenstoffatomen ist ; Acyl mit 2 bis 7 Kohlenstoffatomen, gegebenenfalls substituiertes Carbalkoxy mit 2 bis 19 Kohlenstoffatomen, Alkylsulfonylamino mit 1 bis 6 Kohlenstoffatomen, Halogen oder diejenigen Atome bedeutet, um zusammen mit $Y_2$ einen gegebenenfalls mit Methyl substituierten 6-gliedrigen, gesättigten oder ungesättigten, gegebenenfalls ein oder zwei Heteroatome enthaltenden Ring zu bilden und

$W_2$ Wasserstoff, Alkyl oder Alkoxy mit je 1 bis 4 Kohlenstoffatome oder Halogen bedeutet.

Geeignete Verbindungen der Formel (2) sind die Verbindungen der Formel

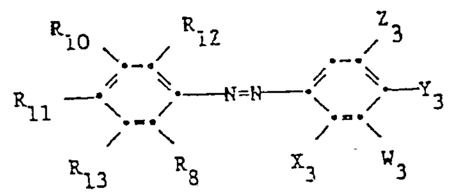

(3)

worin

$R_{11}$ Wasserstoff, gegebenenfalls mit Alkoxy mit 1 bis 4 Kohlenstoffatomen oder mit Carbalkoxy mit 2 bis 12 Kohlenstoffatomen substituiertes Alkyl mit 1 bis 12 Kohlenstoffatomen, Alkoxy mit 1 bis 16 Kohlenstoffatomen, ein Rest der Formel

$$—O—(CH_2)_{m_1}—[OC_2H_4]_n—O(CH_2)_m—CH_3$$

worin $m_1$ ganze Zahlen von 2 bis 16, n 1 oder 2 und m ganze Zahlen von 0 bis 3 bedeuten ; gegebenenfalls mit Cyano und/oder Carbalkoxy mit 2 bis 9 Kohlenstoffatomen substituiertes Alkenyl mit 2 bis 4 Kohlenstoffatomen, aliphatisches Acyl mit 2 oder 3 Kohlenstoffatomen, gegebenenfalls mit Chlor, $CO_2B_1—SO_2B_1$ oder $—COB_1$ substituiertes Benzoyl, worin $B_1$ Alkyl mit 1 bis 8 Kohlenstoffatomen ist ; Carbalkoxy mit 2 bis 16 Kohlenstoffatomen, ein Rest der Formel

$$-\overset{O}{\overset{\|}{C}}-O-(CH_2)_{m_1}-(OC_2H_4)_n-OCH_3 \quad \text{oder} \quad -\overset{O}{\overset{\|}{C}}-O-(CH_2)_{m_1}-(OC_2H_4)_n-OC_2H_5$$

worin $m_1$ und n die oben angegebene Bedeutung haben ; $—NHCOU_2$, worin $U_2$ gegebenenfalls mit Methoxy oder Hydroxyl substituiertes Alkyl mit 1 bis 12 Kohlenstoffatomen oder Alkenyl mit 2 bis 4 Kohlenstoffatomen ist ; Carbonamido, N-alkyl- oder N,N-dialkylsubstituiertes Sulfonamido wobei die Alkylteile je 1 bis 10 Kohlenstoffatome enthalten und gegebenenfalls mit Methoxy, Hydroxyl oder Amino substituiert sind ; Alkylsulfon mit 1 bis 8 Kohlenstoffatomen, gegebenenfalls substituiertes Phenylsulfon, gegebenenfalls substituiertes Phenoxy, gegebenenfalls substituierter Phenylsulfonsäureester, Hydroxyl, Cyano, Nitro oder Halogen,

$R_{12}$ Wasserstoff, gegebenenfalls mit Halogen substituiertes Alkyl mit 1 bis 8 Kohlenstoffatomen, Alkoxy mit 1 bis 6 Kohlenstoffatomen, Carbalkoxy mit 2 oder 3 Kohlenstoffatomen, ein Rest der Formel

$$-\overset{O}{\overset{\|}{C}}-O-C_2H_4OC_2H_5 \quad \text{oder} \quad -\overset{O}{\overset{\|}{C}}-O-CH_2-CH_2-OCH_3$$

N-alkyl- oder N,N-dialkylsubstituiertes Sulfonamido oder Carbonamido, wobei die Alkylteile je 1 bis 8 Kohlenstoffatome enthalten und gegebenenfalls mit Methoxy substituiert sind ; Alkylsulfon mit 1 bis 6 Kohlenstoffatomen, Phenylsulfon, gegebenenfalls mit Alkyl mit 1 bis 8 Kohlenstoffatomen substituiertes Phenoxy, Cyano, Nitro oder Halogen,

$R_{13}$ Wasserstoff, gegebenenfalls mit Fluor substituiertes Alkyl mit 1 oder 2 Kohlenstoffatomen, gegebenenfalls mit Methoxy substituiertes Alkoxy mit 1 bis 6 Kohlenstoffatomen, Carbalkoxy mit 2 bis 13 Kohlenstoffatomen, N,N-dialkylsubstituiertes Sulfonamido oder Carbonamido, worin die Alkylteile je 1 bis 4 Kohlenstoffatome enthalten und gegebenenfalls mit Methoxy substituiert sind ; $—NQ_2COT_2$, worin $Q_2$ Wasserstoff und $T_2$ Alkyl mit 1 bis 4 Kohlenstoffatomen ist ; Methylsulfon, Phenylsulfon, Hydroxyl, Cyano, Nitro oder Halogen,

$X_3$ Wasserstoff, Alkyl oder Alkoxy mit je 1 bis 4 Kohlenstoffatomen, $—NL_3COM_3$, worin $L_3$ Wasserstoff oder Methyl und $M_3$ gegebenenfalls mit Halogen, Carbalkoxy mit 2 bis 5 Kohlenstoffatomen oder gegebenenfalls mit substituiertem Phenyl oder Phenoxy oder Alkoxy mit 1 bis 5 Kohlenstoffatomen substituiertes Alkyl oder Alkoxy mit je 1 bis 18 Kohlenstoffatomen ist ; Alkylsulfonylamino mit 1 bis 12 Kohlenstoffatomen oder Hydroxyl,

$Y_3$ Wasserstoff, Alkyl mit 1 bis 4 Kohlenstoffatomen, Alkoxy mit 1 bis 12 Kohlenstoffatomen, gegebenenfalls mit $—OC_2H_4—OCH_3$ substituiertes Carbalkoxy mit 2 bis 5 Kohlenstoffatomen, N-alkyl- oder N,N-dialkylsubstituiertes Amino, wobei die Alkylteile je 1 bis 6 Kohlenstoffatome enthalten und gegebenenfalls mit Carbalkoxy mit 2 bis 5 Kohlenstoffatomen, Methoxy, Acetyloxy, Hydroxyl, Nitro, Cyano, Phenyl oder Tosyl substituiert sind ; Pyrrolidinyl, Piperidinyl, Morpholinyl, gegebenenfalls mit Alkyl mit 1 bis 4 Kohlenstoffatomen substituiertes Phenylsulfonylamino, $—NE_3COG_3$, worin $E_3$ Wasserstoff oder gegebenenfalls mit Cyano substituiertes Alkyl mit 1 bis 4 Kohlenstoffatomen und $G_3$ Alkyl mit 1 bis 8 Kohlenstoffatomen, Alkoxy mit 1 bis 4 Kohlenstoffatomen oder ein Rest der Formel

$$—O—(CH_2)_k—(OC_2H_4)_n—OCH_3$$

ist, worin k ganze Zahlen von 2 bis 4 bedeutet und n die oben angegebene Bedeutung hat ;

$$-NH\overset{O}{\overset{\|}{P}}(OG^3)_2$$

worin $G^3$ Alkyl mit 1 bis 4 Kohlenstoffatomen ist ; Halogen oder Hydroxyl,

$Z_3$ Wasserstoff, Alkyl mit 1 bis 8 Kohlenstoffatomen, Alkoxy mit 1 bis 6 Kohlenstoffatomen, ein Rest der Formel

$$—O—(CH_2)_{k_1}—O—(CH_2)_m—CH_3$$

worin $k_1$ ganze Zahlen von 2 bis 6 ist und m die oben angegebene Bedeutung hat ; $—NA_3COD_3$, worin $A_3$ Wasserstoff oder Alkyl mit 1 bis 4 Kohlenstoffatomen und $D_3$ Alkyl mit 1 bis 12 Kohlenstoffatomen ist ; Acyl mit 2 bis 5 Kohlenstoffatomen, Carbalkoxy mit 2 bis 5 Kohlenstoffatomen, ein Rest der Formel

$$-\overset{O}{\overset{\|}{C}}-O-(CH_2)_k—(OC_2H_4)_n—OCH_3$$

worin k und n die oben angegebene Bedeutung haben ; Methylsulfonylamino, Halogen oder diejenigen Atome bedeutet, um zusammen mit $Y_3$ einen gegebenenfalls mit Methyl oder Äthyl substituierten, 6-gliedrigen, gesättigten oder ungesättigten, Stickstoff oder Stickstoff und Sauerstoff enthaltenden Ring zu bilden,

$W_3$ Wasserstoff, Alkyl oder Alkoxy mit je 1 oder 2 Kohlenstoffatome oder Halogen ist, und

$R_8$ und $R_{10}$ die oben angegebene Bedeutung haben.

Bevorzugt sind auch Verbindungen der Formel

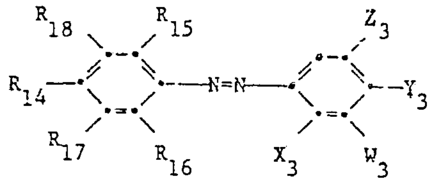

(4)

worin

$R_{14}$ Wasserstoff, gegebenenfalls mit Alkoxy mit 1 bis 4 Kohlenstoffatomen oder mit Carbalkoxy mit 2 bis 7 Kohlenstoffatomen substituiertes Alkyl mit 1 bis 12 Kohlenstoffatomen, Alkoxy mit 1 bis 12 Kohlenstoffatomen, ein Rest der Formel

$$—O(CH_2)_{m_2}—(OC_2H_4)_n—O(CH_2)_m—CH_3$$

wobei $m_2$ ganze Zahlen von 2 bis 12 und n und m die oben angegebene Bedeutung haben ; gegebenenfalls mit Cyano und/oder Carbalkoxy mit 2 bis 7 Kohlenstoffatomen substituiertes Alkenyl mit 2 bis 4 Kohlenstoffatomen, aliphatisches Acyl mit 2 oder 3 Kohlenstoffatomen, gegebenenfalls mit Chlor, $—CO_2B_2$, $—SO_2B_2$ oder $—COB_2$ substituiertes Benzoyl, worin $B_2$ Alkyl mit 1 bis 4 Kohlenstoffatomen ist ; Carbalkoxy mit 2 bis 9 Kohlenstoffatomen, ein Rest der Formel

$$-\overset{O}{\overset{\|}{C}}-O(CH_2)_{m_3}-\!\!(OC_2H_4)_{n}\!\!-OCH_3 \quad \text{oder} \quad -\overset{O}{\overset{\|}{C}}-O-(CH_2)_{m_3}-\!\!(OC_2H_4)_{n}\!\!-OC_2H_5$$

worin $m_3$ ganze Zahlen von 2 bis 8 und n die oben angegebene Bedeutung hat ; $—NHCOU_3$, worin $U_3$ Alkyl mit 1 bis 8 Kohlenstoffatomen oder Alkenyl mit 2 oder 3 Kohlenstoffatomen ist ; Carbonamido, N-alkyl- oder N,N-dialkylsubstituiertes Sulfonamido, wobei die Alkylteile je 1 bis 5 Kohlenstoffatome enthalten und gegebenenfalls mit Methoxy, Hydroxyl oder Amino substituiert sind ; Alkylsulfon mit 1 bis 6 Kohlenstoffatomen, gegebenenfalls mit Alkyl mit 1 bis 5 Kohlenstoffatomen oder Hydroxyl substituiertes Phenylsulfon oder Phenylsulfonsäureester, Hydroxyl, Cyano, Nitro oder Halogen,

$R_{15}$ Wasserstoff, gegebenenfalls mit Fluor substituiertes Alkyl mit 1 bis 4 Kohlenstoffatomen, Alkoxy mit 1 oder 2 Kohlenstoffatomen, Carbalkoxy mit 2 oder 3 Kohlenstoffatomen, ein Rest der Formel

$$-\overset{O}{\overset{\|}{C}}-O-C_2H_4OC_2H_5 \quad \text{oder} \quad -\overset{O}{\overset{\|}{C}}-O-CH_2-CH_2-OCH_3$$

N-alkyl- oder N,N-dialkylsubstituiertes Sulfonamido oder Carbonamido, wobei Alkylteile je 1 bis 4 Kohlenstoffatome enthalten und gegebenenfalls mit Methoxy substituiert sind ; Alkylsulfon mit 1 bis 4 Kohlenstoffatomen, Phenylsulfon, Cyano, Nitro oder Halogen,

$R_{16}$ Wasserstoff, Methyl, Methoxy, N-alkyl- oder N,N-dialkylsubstituiertes Sulfonamido oder Carbonamido, worin die Alkylteile je 1 oder 2 Kohlenstoffatome enthalten und gegebenenfalls mit Methoxy substituiert sind ; Alkylsulfon mit 1 bis 4 Kohlenstoffatomen, Phenylsulfonsäureester, Cyano, Nitro, Halogen, gegebenenfalls mit Methoxy substituiertes Carbalkoxy mit 1 bis 12 Kohlenstoffatomen oder $—P(O)(OT^1)_2$, worin $T^1$ die oben angegebene Bedeutung hat,

$R_{17}$ Wasserstoff, Methyl, Trifluormethyl, gegebenenfalls mit Methoxy substituiertes Alkoxy mit 1 bis 4 Kohlenstoffatomen, Carbalkoxy, mit 2 bis 9 Kohlenstoffatomen, N,N-dialkylsubstituiertes Sulfonamido oder Carbonamido, wobei die Alkylteile je 1 oder 2 Kohlenstoffatome enthalten und gegebenenfalls mit Methoxy substituiert sind ; $—NHCOT_2$, worin $T_2$ die oben angegebene Bedeutung hat ; Methylsulfon, Phenylsulfon, Hydroxyl, Cyano, Nitro oder Halogen,

$R_{18}$ Wasserstoff, Methyl oder Carbalkoxy mit 2 bis 7 Kohlenstoffatomen ist, und $X_3$, $Y_3$, $Z_3$ und $W_3$ die oben angegebene Bedeutung haben.

Von Interesse sind auch Verbindungen der Formel

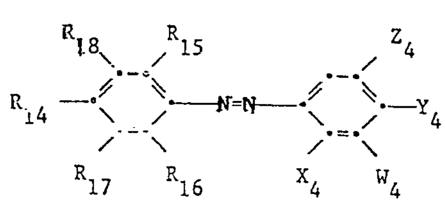

(5)

worin

$X_4$ Wasserstoff, Alkyl mit 1 bis 4 Kohlenstoffatomen, Methoxy, $—NL_3COM_4$, worin $L_3$ die angegebene Bedeutung hat und $M_4$ gegebenenfalls mit Fluor, Chlor, Carbalkoxy mit 2 oder 3 Kohlenstoffatomen, gegebenenfalls mit Phenyl oder Phenoxy oder mit para-$(C_{m_3}H_{2m_3+1})—C_6H_4—$ oder para-$(C_{m_3}H_{2m_3+1})—C_6H_4—O—$ oder Alkoxy mit 1 bis 5 Kohlenstoffatomen substituiertes Alkyl mit 1 bis 13 Kohlenstoffatomen oder Alkoxy mit 1 bis 4 Kohlenstoffatomen ist, wobei $m_3$ die oben angegebene Bedeutung hat ; Alkylsulfonylamino mit 1 bis 6 Kohlenstoffatomen oder Hydroxyl,

$Y_4$ Wasserstoff, Alkyl mit 1 oder 2 Kohlenstoffatomen, Alkoxy mit 1 bis 8 Kohlenstoffatomen, gegebenenfalls mit $—OC_2H_4—OCH_3$ substituiertes Carbalkoxy mit 2 oder 3 Kohlenstoffatomen, N-alkyl- oder N,N-dialkyl-substituiertes Amino, wobei die Alkylteile je 1 bis 6 Kohlenstoffatome enthalten, welche gegebenenfalls mit Carbalkoxy mit 2 bis 5 Kohlenstoffatomen, Methoxy, Acetyloxy, Hydroxyl, Nitro, Cyano oder Phenyl substituiert sind ; Pyrrolidinyl, Piperidinyl, gegebenenfalls mit Alkyl mit 1 bis 4 Kohlenstoffatomen substituiertes Phenylsulfonylamino, $—NE_3CO—G_4$, worin $E_3$ die oben angegebene Bedeutung hat und $G_4$ Alkyl mit 1 bis 8 Kohlenstoffatomen, Alkoxy mit 1 oder 2 Kohlenstoffatomen, ein Rest der Formel

$$—O—CH_2—CH_2—OC_2H_4—OCH_3$$

ist ;

$$-NH\overset{O}{\overset{\|}{P}}(OG^3)_2$$

worin $G^3$ die oben angegebene Bedeutung hat ; Halogen oder Hydroxyl,

$Z_4$ Wasserstoff, Alkyl mit 1 bis 6 Kohlenstoffatomen, Alkoxy mit 1 bis 4 Kohlenstoffatomen, $—O(CH_2)_k—O(CH_2)_m—CH_3$, worin k und m die oben angegebene Bedeutung hat ; $—NA_4COD_4$, worin $A_4$ Wasserstoff oder Methyl und $D_4$ Alkyl mit 1 bis 8 Kohlenstoffatomen ist ; Acetyl, Carbalkoxy mit 2 bis 5 Kohlenstoffatomen, ein Rest der Formel

$$-\overset{O}{\overset{\|}{C}}-O-(CH_2)_k-OC_2H_4-OCH_3$$

worin k die oben angegebene Bedeutung hat ; Methylsulfonylamino, Halogen oder diejenigen Atome bedeutet, um zusammen mit $Y_4$ Ringsysteme wie

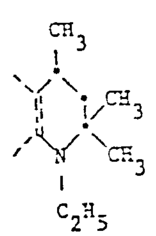
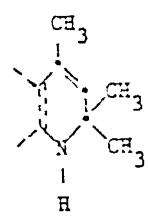
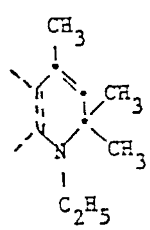
oder
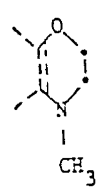

zu bilden,

$W_4$ Wasserstoff, Methyl, Methoxy oder Halogen ist, und

$R_{14}$, $R_{15}$, $R_{16}$, $R_{17}$ und $R_{18}$ die oben angegebene Bedeutung haben.

Wertvolle Verbindungen der Formel (5) sind die Verbindungen der Formel

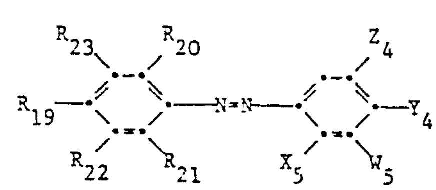
(6)

worin

$R_{19}$ Wasserstoff, gegebenenfalls mit Alkoxy mit 1 bis 4 Kohlenstoffatomen oder mit Carbalkoxy mit 2

bis 7 Kohlenstoffatomen substituiertes Alkyl mit 1 bis 6 Kohlenstoffatomen, Alkoxy mit 1 bis 8 Kohlenstoffatomen, ein Rest der Formel

$$-O-(CH_2)_{m_3}-OC_2H_4-OCH_3 \quad \text{oder} \quad -O-(CH_2)_{m_3}-OC_2H_4-OC_2H_5,$$

worin $m_3$ die oben angegebene Bedeutung hat ; gegebenenfalls mit Cyano und/oder Carbalkoxy mit 2 bis 7 Kohlenstoffatomen substituiertes Vinyl, Acetyl, gegebenenfalls in para-Stellung mit Chlor, $-CO_2B_2$, $-SO_2B_2-$ oder $-COB_2$ substituiertes Benzoyl, worin $B_2$ die oben angegebene Bedeutung hat ; Carbalkoxy mit 2 bis 9 Kohlenstoffatomen, ein Rest der Formel

$$-\overset{O}{\overset{\|}{C}}-O-(CH_2)_{m_3}-OC_2H_4-OCH_3 \quad \text{oder} \quad -\overset{O}{\overset{\|}{C}}-O(CH_2)_{m_3}-OC_2H_4-OC_2H_5$$

worin $m_3$ die oben angegebene Bedeutung hat ; $-NHCOU_4$, worin $U_4$ Alkyl mit 1 bis 4 Kohlenstoffatomen oder Alkenyl mit 2 oder 3 Kohlenstoffatomen ist, Carbonamido, N-alkyl- oder N,N-dialkylsubstituiertes Sulfonamid, wobei die Alkylteile je 1 bis 5 Kohlenstoffatome enthalten und gegebenenfalls mit Methoxy, Hydroxyl oder Amino substituiert sind ; Alkylsulfon mit 1 bis 6 Kohlenstoffatomen, gegebenenfalls mit Alkyl mit 1 bis 5 Kohlenstoffatomen oder Hydroxyl in para-Stellung substituiertes Phenylsulfon oder Phenyl-sulfonsäureester, Hydroxyl, Cyano, Nitro, Chlor oder Brom,

$R_{20}$ Wasserstoff, Methyl, Trifluormethyl, Methoxy, Aethoxy, Carbalkoxy mit 2 oder 3 Kohlenstoffatomen, ein Rest der Formel

$$-\overset{O}{\overset{\|}{C}}OC_2H_4OC_2H_5 \qquad -\overset{O}{\overset{\|}{C}}-O-CH_2-CH_2-OCH_3$$

N-alkyl- oder N,N-dialkylsubstituiertes Sulfonamido oder Carbonamido ; wobei die Alkylteile je 1 bis 4 Kohlenstoffatome enthalten und gegebenenfalls mit Methoxy substituiert sind ; Alkylsulfon mit 1 bis 4 Kohlenstoffatomen, Cyano, Nitro, Chlor oder Brom,

$R_{21}$ Wasserstoff, Methyl, Methoxy, N-alkyl- oder N,N-dialkyl-substituiertes Sulfonamido, worin die Alkylteile je 1 oder 2 Kohlenstoffatome enthalten ; Alkylsulfon mit 1 bis 4 Kohlenstoffatomen, Cyano, Nitro, Brom, Chlor, gegebenenfalls mit Methoxy substituiertes Carbalkoxy mit 2 bis 7 Kohlenstoffatomen ; oder $-P(O)(OC_2H_5)_2$,

$R_{22}$ Wasserstoff, Methyl, Trifluormethyl, gegebenenfalls mit Methoxy substituiertes Alkoxy mit 1 oder 2 Kohlenstoffatomen, Carbalkoxy mit 2 bis 9 Kohlenstoffatomen, N,N-dialkylsubstituiertes Sulfonamido oder Carbonamido, wobei die Alkylteile je 1 oder 2 Kohlenstoffatome enthalten und gegebenenfalls mit Methoxy substituiert sind ; $-NHCOT_2$, worin $T_2$ die oben angegebene Bedeutung hat ; Methylsulfon, Phenylsulfon, Hydroxyl, Cyano, Chlor oder Brom,

$R_{23}$ Wasserstoff, Methyl oder Carbalkoxy mit 2 oder 3 Kohlenstoffatomen,

$X_5$ Wasserstoff, Alkyl mit 1 bis 4 Kohlenstoffatomen, Methoxy, $-NH-COM_5$, worin $M_5$ gegebenenfalls mit Fluor, Chlor, Carbalkoxy mit 2 oder 3 Kohlenstoffatomen, Phenyl, para-$(C_{m_3}H_{2m_3+1})-C_6H_4-$, Phenoxy, para-$(C_{m_3}H_{2m_3+1})-C_6H_4-O-$ oder Alkoxy mit 1 bis 5 Kohlenstoffatomen substituiertes Alkyl mit 1 bis 8 Kohlenstoffatomen oder Alkoxy mit 1 oder 2 Kohlenstoffatomen ist, worin $m_3$ die oben angegebene Bedeutung hat ; Alkylsulfonylamino mit 1 bis 6 Kohlenstoffatomen oder Hydroxyl,

$W_5$ Wasserstoff, Methyl, Methoxy oder Chlor ist, und

$Y_4$ und $Z_4$ die oben angegebene Bedeutung haben.

Von besonderem Interesse sind Verbindungen der Formel

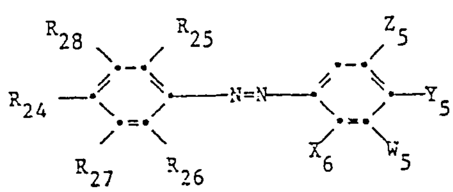

(7)

worin

$R_{24}$ Wasserstoff, gegebenenfalls mit Carbalkoxy mit 2 bis 7 Kohlenstoffatomen substituiertes Alkyl mit 1 bis 4 Kohlenstoffatomen, Alkoxy mit 1 bis 4 Kohlenstoffatomen, ein Rest der Formel

$$-O-(CH_2)_k-OC_2H_4-OCH_3 \quad \text{oder} \quad -O-(CH_2)_k-OC_2H_4-OC_2H_5,$$

worin k die oben angegebene Bedeutung hat ; Carbalkoxy mit 2 bis 9 Kohlenstoffatomen, ein Rest der Formel

$$-\overset{\overset{O}{\|}}{C}-O-(CH_2)_{m_3}-OC_2H_4-OCH_3$$

worin $m_3$ die oben angegebene Bedeutung hat ; $-NHCOU_4$, worin $U_4$ die oben angegebene Bedeutung hat ; Carbonamido, N-alkyl- oder N,N-dialkylsubstituiertes Sulfonamido, wobei die Alkylteile je 1, 2 oder 3 Kohlenstoffatome enthalten und gegebenenfalls mit Methoxy substituiert sind ; Alkylsulfon mit 1 bis 6 Kohlenstoffatomen, gegebenenfalls mit Alkyl mit 1 bis 5 Kohlenstoffatomen oder Hydroxyl in para-Stellung substituiertes Phenylsulfon oder Phenylsulfonsäureester, Hydroxyl, Nitro, Chlor oder Brom,

$R_{25}$ Wasserstoff, Methyl, Methoxy, Aethoxy, Carbalkoxy mit 2 oder 3 Kohlenstoffatomen, ein Rest der Formel

$$-\overset{\overset{O}{\|}}{C}-O-CH_2-CH_2-O-C_2H_5 \quad \text{oder} \quad -\overset{\overset{O}{\|}}{C}-O-CH_2-CH_2-OCH_3$$

N-alkyl- oder N,N-dialkylsubstituiertes Sulfonamid oder Carbonamido, wobei die Alkylteile je 1 oder 2 Kohlenstoffatome enthalten und gegebenenfalls mit Methoxy substituiert sind ; Alkylsulfon mit 1 bis 4 Kohlenstoffatomen, gegebenenfalls mit Alkyl mit 1 bis 5 Kohlenstoffatomen in para-Stellung substituiertes Phenoxy, Cyano, Nitro, Chlor oder Brom,

$R_{26}$ Wasserstoff, Cyano, Chlor oder Brom,

$R_{27}$ Wasserstoff, Alkoxy mit 1 oder 2 Kohlenstoffatomen, Carbalkoxy mit 2 bis 9 Kohlenstoffatomen, $-NHCOT_2$, worin $T_2$ die oben angegebene Bedeutung hat ; Hydroxyl oder Chlor,

$R_{28}$ Wasserstoff oder Carbalkoxy mit 2 oder 3 Kohlenstoffatomen,

$X_6$ Wasserstoff, Alkyl mit 1 bis 4 Kohlenstoffatomen, Methoxy, $-NHCOM_6$, worin $M_6$ gegebenenfalls mit Alkoxy mit 1 bis 5 Kohlenstoffatomen, Phenoxy oder para-$(C_kH_{2k+1})-C_6H_4-O-$ substituiertes Alkyl mit 1 bis 4 Kohlenstoffatomen ist, worin k die oben angegebene Bedeutung hat ; oder Hydroxyl,

$Y_5$ Wasserstoff, Alkoxy mit 1 bis 4 Kohlenstoffatomen, gegebenenfalls mit $-OC_2H_4-OCH_3$ substituiertes Carbalkoxy mit 2 oder 3 Kohlenstoffatomen, N-alkyl- oder N,N-dialkylsubstituiertes Amino, wobei der Alkylteil je 1 bis 4 Kohlenstoffatome enthält und gegebenenfalls mit Carbalkoxy mit 2 oder 3 Kohlenstoffatomen, Methoxy, Acetyloxy, Hydroxyl, Cyano oder Phenyl substituiert ist ; $-NE_3COG_4$, worin $E_3$ und $G_4$ die oben angegebene Bedeutung haben ; oder Hydroxyl,

$Z_5$ Wasserstoff, Alkyl mit 1 bis 6 Kohlenstoffatomen, Alkoxy mit 1 bis 4 Kohlenstoffatomen, Acetyl, Carbalkoxy mit 2 bis 5 Kohlenstoffatomen, ein Rest der Formel

$$-\overset{\overset{O}{\|}}{C}-O-(CH_2)_k-OC_2H_4-OCH_3$$

worin k die oben angegebene Bedeutung hat ; $-NA_4COD_4$, worin $A_4$ und $D_4$ die oben angegebene Bedeutung haben ; oder Chlor ist, und

$W_5$ die oben angegebene Bedeutung hat.

Besonders geeignet sind Verbindungen der Formel

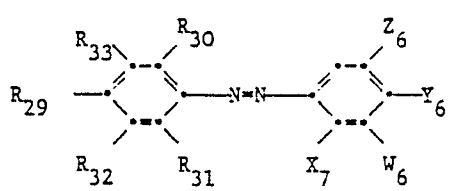

(8)

worin

$R_{29}$ Wasserstoff, Alkyl mit 1 bis 4 Kohlenstoffatomen, Alkoxy mit 1 bis 4 Kohlenstoffatomen, Carbalkoxy mit 2 bis 9 Kohlenstoffatomen oder ein Rest der Formel

$$-\overset{\overset{O}{\|}}{C}-O-(CH_2)_{m_3}-OC_2H_4-OCH_3$$

worin $m_3$ die oben angegebene Bedeutung hat,

$R_{30}$ Wasserstoff, Methyl, Methoxy, Cyano, Chlor oder Brom,

$R_{31}$ Wasserstoff oder Brom,

$R_{32}$ Wasserstoff oder Chlor,

$R_{33}$ Wasserstoff oder Carbmethoxy

$X_7$ $\quad -NH\overset{\overset{O}{\|}}{C}-M_7$

worin $M_7$ Alkyl mit 1 bis 4 Kohlenstoffatome bedeutet ; oder Hydroxyl,

$Y_6$ Wasserstoff, N-alkylsubstituiertes Amino, wobei der Alkylteil 1 oder 2 Kohlenstoffatome enthält und gegebenenfalls mit Cyano substituiert ist ; oder $—NE_3COG_4$, worin $E_3$ und $G_4$ die oben angegebene Bedeutung haben,

$Z_6$ Wasserstoff oder Alkoxy mit 1 bis 4 Kohlenstoffatomen ist, und

$W_6$ Wasserstoff oder Methyl ist.

Besonders wertvoll sind die Verbindungen der Formeln

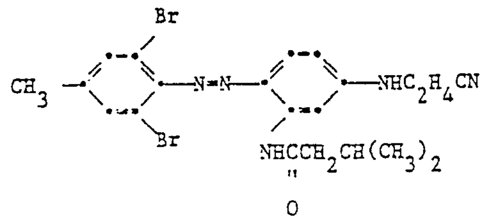 , (9)

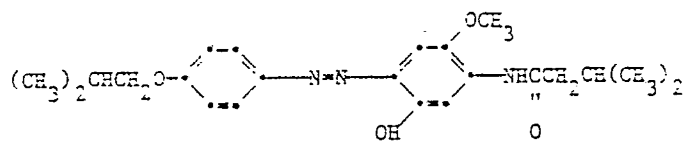 (10)

und

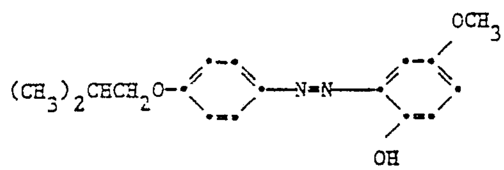 (11)

Die Verbindungen der Formeln (7) bis (11) sind besonders als Gelbfarbstoffe zur Verwendung in photographischen Schichten von Silberfarbbleichmaterialien geeignet.

Bevorzugt sind ferner Verbindungen der Formel

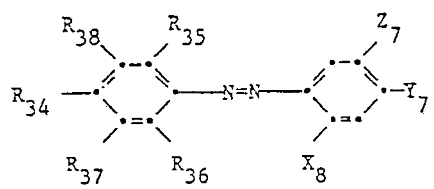 (12)

worin

$R_{34}$ Wasserstoff, gegebenenfalls mit Carbalkoxy mit 2 oder 3 Kohlenstoffatomen substituiertes Alkyl mit 1 oder 2 Kohlenstoffatomen, Carbalkoxy mit 2 oder 3 Kohlenstoffatomen, ein Rest der Formel

$$-\overset{O}{\overset{\|}{C}}-O-(CH_2)_2-OC_2H_4-OC_2H_5$$

gegebenenfalls mit Cyano und/oder Carbalkoxy mit 2 bis 5 Kohlenstoffatomen substituiertes Vinyl, N-alkyl- oder N,N-dialkylsubstituiertes Sulfonamid, wobei die Alkylteile je 1 bis 3 Kohlenstoffatome enthalten und gegebenenfalls mit Methoxy substituiert sind ; Alkylsulfon mit 1 bis 6 Kohlenstoffatomen, Phenylsulfonsäureester, para-$(C_{m_3}H_{2m_3+1})—C_6H_4—O—SO_2—$, worin $m_3$ die oben angegebene Bedeutung hat, Cyano, Nitro, Chlor oder Brom,

$R_{35}$ Wasserstoff, Trifluormethyl, Carbalkoxy mit 2 oder 3 Kohlenstoffatomen, Alkylsulfon mit 1 bis 4 Kohlenstoffatomen, N-alkyl- oder N,N-dialkylsubstituiertes Sulfonamid, wobei die Alkylteile je 1 bis 4 Kohlenstoffatome enthalten und gegebenenfalls mit Methoxy substituiert sind ; Cyano, Nitro, Chlor oder Brom,

$R_{36}$ Wasserstoff, Methylsulfon, N,N-Diäthylsulfonamid, Cyano, Nitro, Chlor oder Brom,

$R_{37}$ Wasserstoff, Methyl, Carbalkoxy mit 2 bis 7 Kohlenstoffatomen, N,N-dialkylsubstituiertes Sulfonamid oder Carbonamido, wobei die Alkylteile jeweils 1 oder 2 Kohlenstoffatome enthalten und gegebenenfalls mit Methoxy substituiert sind ; Cyano oder Chlor,

$R_{38}$ Wasserstoff oder Methyl,

$X_8$ Wasserstoff, Methyl, $-NHCOM_7$, worin $M_7$ gegebenenfalls mit Carbalkoxy mit 2 oder 3 Kohlenstoffatomen, Fluor, Chlor, Phenyl oder Phenoxy, para-$(C_{m_3}H_{2m_3+1})-C_6H_4-$ oder para-$(C_{m_3}H_{2m_3+1})-C_6H_4O-$ substituiertes Alkyl mit 1 bis 8 Kohlenstoffatomen, Alkylsulfonylamino mit 1 bis 6 Kohlenstoffatomen oder Hydroxyl,

$Y_7$ Alkyl mit 1 bis 2 Kohlenstoffatomen, Alkoxy mit 1 bis 8 Kohlenstoffatomen, gegebenenfalls mit $-OC_2H_4-OCH_3$ substituiertes Carbalkoxy mit 2 oder 3 Kohlenstoffatomen, N-alkyl- oder N,N-dialkylsubstituiertes Amino, wobei die Alkylreste je 1 bis 4 Kohlenstoffatome enthalten und gegebenenfalls mit Methoxy, Carbmethoxy, Acetyloxy, Cyano, Hydroxyl oder Phenyl substituiert sind ; oder $-NHCOG_5$, worin $G_5$ Alkyl mit 1 bis 4 Kohlenstoffatomen ist, und

$Z_7$ Wasserstoff, Alkoxy mit 1 oder 2 Kohlenstoffatomen, ein Rest der Formel

$$-OCH_2CH_2-O(CH_2)_m-CH_3$$

worin m die oben angegebene Bedeutung hat, $-NHCOD_4$, worin $D_4$ die oben angegebene Bedeutung hat ; oder Chlor ist.

Von Interesse sind die Verbindungen der Formel

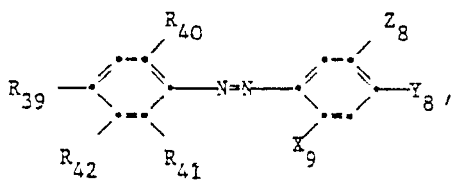 (13)

worin

$R_{39}$ Wasserstoff, gegebenenfalls mit Carbalkoxy mit 2 oder 3 Kohlenstoffatomen substituiertes Alkyl mit 1 oder 2 Kohlenstoffatomen, Carbalkoxy mit 2 oder 3 Kohlenstoffatomen, Alkylsulfon mit 1 bis 6 Kohlenstoffatomen, N-alkyl- oder N,N-dialkylsubstituiertes Sulfonamido, wobei die Alkylteile je 1 bis 3 Kohlenstoffatome enthalten und gegebenenfalls mit Methoxy substituiert sind ; Cyano, Nitro, Chlor oder Brom,

$R_{40}$ Wasserstoff, Alkylsulfon mit 1 bis 4 Kohlenstoffatomen, N,N-Dimethyl- oder N,N-Diäthylsulfonamid, Cyano oder Nitro,

$R_{41}$ Wasserstoff, Methylsulfon, Cyano oder Nitro,

$R_{42}$ Wasserstoff oder Cyano,

$X_9$ Methyl, $-NH\overset{\overset{O}{\|}}{C}-M_8$, worin $M_8$ Alkyl mit 1 bis 4 Kohlenstoffatomen ist ; oder Hydroxyl,

$Y_8$ Alkoxy mit 1 bis 8 Kohlenstoffatomen oder N-alkyl- oder N,N-dialkylsubstituiertes Amino, wobei die Alkylteile je 1 bis 4 Kohlenstoffatome enthalten und gegebenenfalls mit Methoxy, Acetyloxy oder Cyano substituiert sind, und

$Z_8$ Wasserstoff, Alkoxy mit 1 oder 2 Kohlenstoffatomen, ein Rest der Formel

$$-OCH_2CH_2-O(CH_2)_m-CH_3$$

worin m die oben angegebene Bedeutung hat ; oder $-NHCOD_4$, worin $D_4$ die oben angegebene Bedeutung hat, ist.

Besonders wertvolle Verbindungen der Formel (13) sind die Verbindungen der Formeln

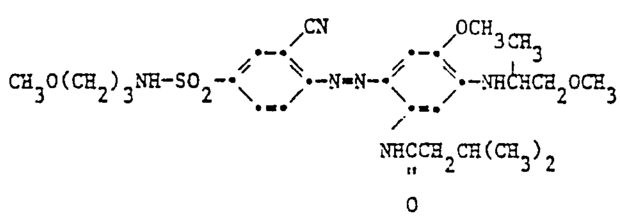 (14)

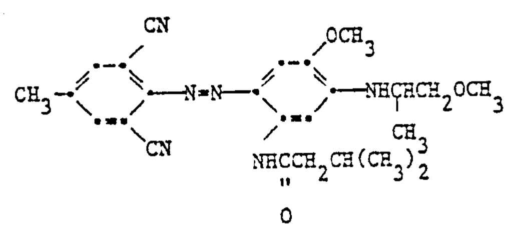 (15)

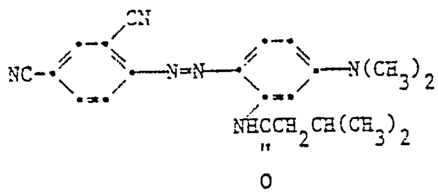

(16)

und

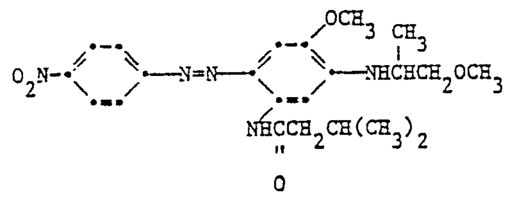

(17)

Die Verbindungen der Formeln (14) bis (17) sind besonders als Magentafarbstoffe zur Verwendung in photographischen Schichten von Silberfarbbleichmaterialien geeignet.

Bevorzugte Verbindungen sind auch Verbindungen der Formel

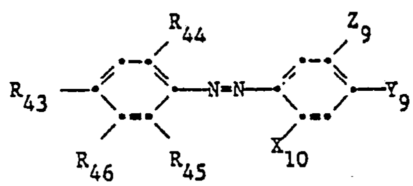

(18)

,

worin

$R_{43}$ gegebenenfalls mit Cyano und/oder Carbalkoxy mit 2 bis 7 Kohlenstoffatomen substituiertes Vinyl, Carbalkoxy mit 2 oder 3 Kohlenstoffatomen, N-alkyl- oder N,N-dialkyl- substituiertes Sulfonamido, wobei die Alkylteile je 1 bis 5 Kohlenstoffatome enthalten und gegebenenfalls mit Methoxy, Amino oder Hydroxyl substituiert sind ; Alkylsulfon mit 1 bis 6 Kohlenstoffatomen, Phenylsulfonsäureester, para-$(C_{m_3}H_{2m_3+1})—C_6H_4—O—SO_2—$, worin $m_3$ die oben angegebene Bedeutung hat ; Cyano oder Nitro,

$R_{44}$ N,N-Dimethyl- oder N,N-Diäthylsulfonamido, Methylsulfon-, Trifluormethyl, Cyano, Nitro, Chlor oder Brom,

$R_{45}$ Wasserstoff, Cyano, Nitro, Chlor oder Brom,

$R_{46}$ Wasserstoff oder Carbalkoxy mit 2 bis 6 Kohlenstoffatomen,

$X_{10}$ Methyl, $—NH\overset{O}{\overset{\|}{C}}—M_5$, worin $M_5$ die oben angegebene Bedeutung hat ; oder Alkylsulfonamido mit 1 bis 6 Kohlenstoffatomen,

$Y_9$ gegebenenfalls mit $—OC_2H_4—OCH_3$ substituiertes Carbalkoxy mit 2 oder 3 Kohlenstoffatomen, N-alkyl- oder N,N-dialkylsubstituiertes Amino, worin die Alkylteile je 1 bis 4 Kohlenstoffatome enthalten und gegebenenfalls mit Methoxy, Acetyloxy, Cyano, Hydroxyl oder Phenyl substituiert sind ; und

$Z_9$ Wasserstoff, Methoxy, $—OCH_2CH_2OC_2H_5$ oder $—OCH_2CH_2—OCH_3$ ist.

Von besonderem Interesse sind dabei Verbindungen der Formel

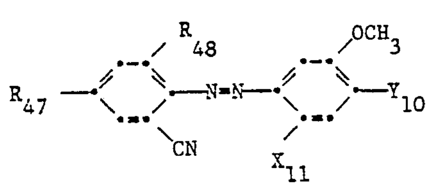

(19)

worin

$R_{47}$ gegebenenfalls mit Cyano und/oder Carbalkoxy mit 2 oder 3 Kohlenstoffatomen substituiertes Vinyl, N-alkyl- oder N,N-dialkylsubstituiertes Sulfonamido, wobei die Alkylteile je 1 oder 2 Kohlenstoffatome enthalten und gegebenenfalls mit Methoxy substituiert sind, Cyano oder Nitro,

$R_{48}$ Cyano, Trifluormethyl oder Nitro,

$X_{11}$ $—NH\overset{O}{\overset{\|}{C}}—M_8$, worin $M_8$ die oben angegebene Bedeutung hat, und

$Y_{10}$ Dimethyl- oder Diäthylamino ist.

Wertvolle Verbindungen entsprechen den Formeln

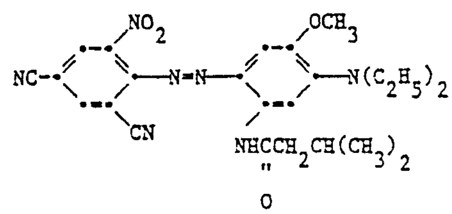

(20)

und

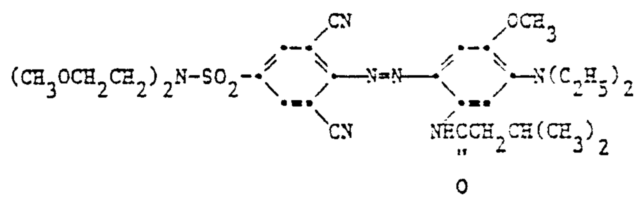

(21)

Die Verbindungen der Formeln (20) und (21) sind besonders als Cyanfarbstoffe zur Verwendung in photographischen Schichten von Silberfarbbleichmaterialien geeignet.

Die in Oel gelösten Verbindungen der Formel (1) bis (21) zeigen mehrere Vorteile.

So zeichnen sie sich durch hohe Stabilität ihrer Emulsionen aus. Die Tendenz zur Micellbildung fehlt vollständig, wodurch die Farbdichte der photographischen Bilder nicht negativ beeinflusst wird.

Das Oel wirkt nicht nur als Lösungsmittel für die Farbstoffe, sondern kann gleichzeitig Weichmacher für die Gelatine sein. Die mögliche Ablösung der photographischen Schichten vom Trägermaterial, die besonders unter feuchten Bedingungen eintreten kann, wird so weitgehend verhindert.

Bedingt durch die gute Löslichkeit der Farbstoffe in Oel, lässt sich eine grosse Aufnahmefähigkeit von Farbstoff in einem Oeltröpfchen erreichen. Dadurch können photographische Materialien mit sehr dünnen Schichten gegossen werden. Dies wirkt sich vorteilhaft auf die Bildschärfe aus.

Die Farbstoffe können auf Grund ihrer Unlöslichkeit in Wasser in sehr reiner Form gewonnen werden. Sie werden nach üblichen Methoden hergestellt, in dem man z. B. ein Amin der Formel

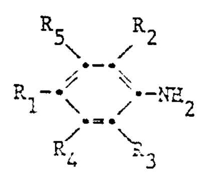

(22)

worin $R_1$, $R_2$, $R_3$, $R_4$ und $R_5$ die oben angegebenen Bedeutungen haben, in üblicher Weise, gegebenenfalls in Gegenwart eines organischen Lösungsmittel, diazotiert und mit einer Kupplungskomponente der Formel

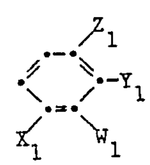

(23)

worin $X_1$, $Y_1$, $Z_1$ und $W_1$ die oben angegebenen Bedeutungen haben, gegebenenfalls in Gegenwart eines organischen Lösungsmittel und gegebenenfalls in Gegenwart einer Base, kuppelt.

Bei der Herstellung von Azofarbstoffen der Formel (1), in denen der Substituent $R_2$ und $R_3$ Cyano bedeutet, ist es zweckmässig, die Cyanogruppe in die entsprechende halogenierte Verbindung durch eine Austauschreaktion einzuführen.

Bedeuten $R_2$ und $R_3$ in Formel (1) Alkylsulfon, so ist es ebenfalls möglich, die entsprechenden Azo-Verbindungen aus der halogenierten Verbindung herzustellen, indem diese mit einem geeigneten Sulfinat, gegebenenfalls in Gegenwart von $Cu^+$, umgesetzt werden.

Als Diazokomponenten der Formel (22) seien beispielsweise genannt :

4-Aethylanilin, 4-Dodecylanilin ; 2-, 3- oder 4-Toluidin, 2-, 3- oder 4-Anisidin, 4-Phenetidin, 4-Butylanilin, 2-, 3- oder 4-Fluoranilin, 2-, 3- oder 4-Chloranilin, 2-, 3- oder 4-Bromanilin, 2-, 3- oder 4-Trifluormethylanilin, Anthranilsäure-methyl- oder äthylester, Anthranilsäure-2'-methoxyäthylester, 4-Aminobenzoesäureäthyl- oder 2'-Aethylhexylester, 4-Aminobenzoesäure-3',6'-dioxaheptylester, 3-Aminobenzoesäuremethylester, 4-Aminobenzoesäurephenylester, Anthranilsäure-N,N-bis(2'-methoxyäthyl)-amid, 4'-Aminobenzanilid, 4-Amino-diphenyläther, 2-, 3- oder 4-Amino-acetophenon, 4-Amino-benzophenon, 4-Amino-4'-hydroxyphenylsulfon, 2-, 3'- oder 4-Aminophenylmethylsulfon, 2-Aminophenylphosphonsäurediäthylester, 2-, 3- oder 4-methylmercaptoanilin, 4-Phenylmercaptoanilin, 4-Aminophenylhexylsulfon, 4-Aminophenyl-isobutylsulfon, p-Aminophenylessigsäure-isobutylester, 4-Aminobenzolsulfonsäure-N-dodecylamid, 4-Aminophenyl-3′,6′-dioxaheptyläther, 4-Amino-4′-nitrobenzophenon, 4-Isobutyloxyanilin, 4-Butoxyanilin, 4-Aminobenzolsulfonsäure-N,N-diisopropylamid, 4-Aminobenzolsulfonsäure-N,N-bis(2′-methoxyäthyl)amid, 4-Aminobenzolsulfonsäure-3′-methoxypropylamid, 4-Aminobenzolsulfonsäurephenylester, 4-Aminobenzolsulfonsäure-4′-t-pentyl-phenylester, 4-Aminobenzolsulfonsäure-N,N-diäthylamid, 3-Benzoylamino-4-nitranilin, 4-Aminobenzoesäureisobutylester, 4-Benzoylamino-3-nitranilin, 4-Aminophthalsäure-dibutylester, 4-Aminozimtsäure-methyl- oder -äthylester, 4-Aminophthalsäure-bis(2′-Aethylhexyl)-ester, 3-Methyl-4-nitranilin, 4-Isobutylanilin, 4-Cyclopropylanilin, 3-Fluor-4-nitranilin, 3-Amino-4-chlor-benzoesäure-methyl- oder äthylester, 2-Methyl-5-methylmercapto-4-nitranilin, 2-Methoxy-5-chloranilin, 3-Methylmercapto-4-nitranilin, 4-Methyl-3-chloranilin, 4-Methylmercapto-3-nitranilin, 4-Amino-3-chlorphenylmethylsulfon, 5-Amino-4-brom-2-carbamoyl-benzoesäureäthylester, 4-Amino-5-brombenzol-1,3-disulfonsäure-bis-N,N′-diäthylamid, 4-Amino-3,5-dibrombenzolsulfonsäure-N,N(bis-2′-methoxyäthyl)amid, 3,4-Bis-(2′-methoxyäthoxy)anilin, 2,4-Bis-isobutylsulfonyl-anilin, 2,5-Dibrom-4-butoxyanilin, 4-Amino-3,5-dibromphenyl-isopentyläther, 4-Isobutyloxy-2-methoxyanilin, 3-Brom-4-butoxy-anilin, 5-Amino-2,4,6-tribromisophthalsäuredimethylester, 3-Amino-2,4,6-tribrombenzoesäureäthylester, 2-Amino-5-nitrobenzoesäure-N-piperidid, 2-Amino-5-nitrobenzoesäure-N-pyrrolidid, 2-Amino-5-nitrobenzoesäure-N-morpholid, 4-Amino-3-brom-5-methyl-benzolsulfonsäure-N-morpholid, 3-Amino-4-chlor-benzotrifluorid, 5-Amino-2-chlor-benzotrifluorid, 4-Amino-3-methylbenzoesäureäthylester, 3-Amino-4-methyl-benzoesäureäthylester, 4-Brom-2,6-dimethylanilin, 4-Brom-2-methylanilin, 4-Brom-3-methylanilin, 2-Brom-4-methylanilin, 5-Chlor-2,4-dimethoxyanilin, 4-Chlor-2-methylanilin, 2-Chlor-6-methylanilin, 2-Methoxy-5-methylanilin, 4-Methoxy-2-methylanilin, 2-Methoxy-5-nitroanilin, 4-Methoxy-2-nitroanilin, 2-Methyl-3-, -4-, -5- oder -6-nitroanilin, 4-Methyl-2- oder 3-nitroanilin, 2,3,4-, 2,4,5-, 2,4,6- oder 3,4,5-Trichloranilin, 3,4,5-Trimethoxyanilin, 2,4,6-Trimethylanilin, 3,5-Bis-trifluormethyl-anilin, 2,6-Difluoranilin, 4-Aminomethacrylanilid, Methansulfonsäure-2′,3′- oder 4′-amino-phenylester, Toluolsulfonsäure-2′-3′- oder 4′-aminophenylester, 4-Amino-3,5-di-brom-acetanilid, 4-Chlor-3-nitranilin, 3-Chlor-6-nitranilin, 2-Acetamido-5-aminobenzo-nitril, 3-Amino-4-methylmercaptobenzolsulfonsäure-N,N-bis(2′-methoxyäthyl)amid, 2-, 3- oder 4-Aminobenzonitril, 2-Amino-4-,5- oder -6-chlorbenzonitril, 2-Amino-3,5-dibrom-benzonitril, 2-Chlor-4-methoxyanilin, 2-Chlor-5-methoxyanilin, 4-[4′-terpentylphenoxy]-anilin, 2,5-dimethoxy-4-nitranilin, 4-Chlor-3-aminobenzoesäure-N-hexylamid, 4-(2′-methoxyäthoxy-)anilid, 2-Methoxy-5-(t-butyl-)anilin, 3-Nitro-4-methoxy-anilin, 4-Methoxy-2-nitro-anilin, 5-Amino-2-methoxy-buryranilid, 3-Methoxy-4-nitro-anilin, 3-Amino-4-methoxy-pripionanilid, 3-Amino-4-methylsulfonyl-benzoesäure-2′-äthyl-hexylester, 4-Amino-3,5-dibrombenzoesäure-äthylester, 4-Amino-3,5-dibrom-toluidin, 4-Amino-3,5-dibrom-chlorbenzol, 4-Amino-3,5-dibrom-äthylbenzol, 4-Amino-3,5-dibrom-fluorbenzol, 2,4,6-Tribromanilin 4-Amino-3,5-dibrom-phenetidin, 3-[4′-Amino-3′,5′-dibromphenyl]-propionsäuremethylester, 3-[4′-Amino-3′,5′-dibromphenyl-] propionsäureäthylester, 3-[4′-Amino-3′,5′-dibromphenyl-] propionsäure 2′-methylpentylester, 2-Amino-3-brom-5-nitro-benzotrifluorid, 2-Amino-3-brom-5-nitrophenyl-methylsulfon, 2-Amino-3-brom-5-nitro-benzonitril, 3-[4′-Amino-3′,5′-dibromphenyl-]-propionsäurenitril, 3-Amino-4-methylsulfonyl-benzoesäure-2′-äthylhexylester, 3,4-Bis-(2′-methoxyäthoxy-)-anilin, 5-Acetamido-2-methoxyanilin, 4-Amino-3,5-dibromphenyl-methyl-sulfon, 4-Amino-3,5-dibrom-benzonitril, 2-Amino-4-chlorbenzolsulfonsäure-N-S-butylamid, 4-Amino-2-hydroxybenzoesäureäthylester, 2-Aminoterephthalsäuredimethylester, 5-Amino-isophthalsäurediäthylester, 4-Amino-3,5-dibrombenzolsulfonamid, 4-Amino-isophthalsäure-dimethylester, 4-Amino-3-methoxy-benzoesäureäthylester, 3-Amino-4-methoxybenzoesäureäthylester, 4-Amino-3-nitro-benzoesäureäthylester, 5-Amino-2-hydroxy-benzoesäureäthylester, 4-Amino-3-bromphenyl-hexylsulfon, 4-Hexylmercaptoanilin, 4-Dodecyloxyanilin, 4-Amino-3-methylphenyl-octyläther, 4-Amino-Zimtsäureäthylester, 4-Aminozimtsäurenitril, 2-Nitro-3,5-dimethylanilin, 4-Amino-hydrozimtsäure-2′-methylpentylester, 3-Amino-4-cyanobenzoesäureäthylester oder -3′,6′-dioxaheptylester, 4-Aminophenylessigsäure-dodecylester, 4-Aminophenylessigsäureisobutylester, 4-Aminobenzolsulfonsäure-N-dodecylamid, N,N-bis(2′-hydroxypropylamid, 4-Amino-3,5-dibrombenzotrifluorid, 4-Amino-3,5-dibrombenzolsulfonsäure-N-(3′-di-äthylamino-2′-methyl-butyl)-amid- oder N,N′-diäthylamid, 4-Amino-3,5-dibrombenzoesäure-3′,6′-dioxaoctylester, 4-Aminobenzoesäure-N-(3′-methoxypropyl-)amid, 5-Amino-4-brom-2-cyanobenzoesäure-3′,6′-dioxaheptylester, 3-[4′-Aminophenyl]-2-chlorpropionitril, Sulfanilsäure-2′,4′-di-ter-pentylphenylester, 4-Amino-hydrozimtsäuremethyl oder äthylester, 3,4-Dimethoxyanilin, 3,4-Diäthoxyanilin, 4-Amino-3,5-dibromphenylessigsäureäthylester, 4-Amino-3,5-dibromhydrozimtsäurenitril, 4-Amino-3,5-dibromacetophenon, 2,3-, 2,4-, 2,5-, 2,6-, 3,4- oder 3,5-dimethylanilin, 2-, 3- oder 4-Nitranilin, 4-Aminobenzol-1,3-disulfonsäure-bis-N,N′-diäthylamid, 2,6-Diäthylanilin, 4-t.-Butylanilin, 2,4-, 2,5-, 3,5- oder 3,4-Dimethoxyanilin, 2,4-Bis(4′-ter-pentylphenoxy-)anilin, 4-(2′-Aethyl-hexyloxy-)anilin, 2,4-, 2,5- oder 2,6-Dibromanilin, 2,3-, 2,4-, 2,5-, 2,6-, 3,4- oder 3,5-Dichloranilin, 3-Aminobenzoesäure-methyl, äthyl, butyl, benzyl-phenyl-2′-Methoxyäthyl oder 2′-Aethoxyäthylester, 3-Aminobenzoesäurebutylamid, 3-Methoxypropylamid, -diäthylamid, -pyrrolidid, 4-Aminophthalsäure-N-3′-methoxypropyl-imid, 3- oder 4-Aminoacetanilid, 3-Amino-benzoesäure-äthyl oder -isobutylester, 2-Amino-5-nitrobenzoesäure-äthyl- oder 3′,6′-dioxaoctylester, 4-Butyl-2,6-dibromanilin, 3-Amino-2,4-dibrom-6-nitro-benzoesäure-methylester, 2-Chlor-4,6-dinitroanilin, 2-Brom-4,6-dinitroanilin, 4-Amino-3,5-dibrombenzophenon-4′-carbonsäure-isopentylester, 2,6-Dibrom-4-nitroanilin, 4-Amino-2-äthoxy-3,5-dibrom-toluol, 4-Amino-3-brom-5-nitrobenzoesäureäthylester, 2-Brom-6-methyl-4-nitroanilin, 4-Amino-3,5-dibrophenyl-hexylsulfon, 4-Amino-3,5-dibrombenzolsulfonsäure N-(3′-methoxypropyl)amid,

4-Amino-3,5-dibrombenzolsulfonsäure N-(3'-butoxypropyl)amid, 2-Brom-4,6-diisobutylsulfonyl-anilin, 4-Amino-5-brom-benzol-1,3-disulfonsäure-bis N,N'-diäthylamid, 2-Amino-3-brom-5-nitrobenzolsulfonsäure-3'-methoxypropylamid, 4-Amino-3,5-dibrom-benzotrifluorid, 3-Amino-2,4-dibrom-6-nitrobenzotrifluorid, 4-Amino-3-brom-4'-chlor-5-nitrobenzophenon, 4-Amino-3,5-dibrom-zimtsäure-methyl- oder -äthylester, 3-(4'-Amino-3',5'-dibromphenyl-)2,3-dicyano-acrylnitril, 3-(4'-Amino-3',5'-dibromphenyl-)2-cyanoacrylsäure-äthyl- oder butylester, 3-(4'-Amino-3',5'-dibromphenyl-)2-cyanoacrylnitril, 4-Amino-3-brom-5-nitrobenzoesäure-äthylester, 2-Amino-3-brom-5-nitro-benzoesäure-äthylester, 2,4- oder 2,6-dinitroanilin, 2,4- oder 2,5-dicyanoanilin, 5-Amino-4-brom-2-nitrophenyl-methylsulfon, 2-Amino-3-brom-5-nitrobenzolsulfonsäure-N,N-dimethylamid, 2,6-Dicyano-4-nitranilin, 2,6-Dicyano-3,5-dimethylanilin, 2,6-Dibrom-3-methyl-4-nitranilin ; 3-Amino- 2,4-dibrom-6-nitro-benzoesäure -isobutylester oder -methylester, 3-Amino-2,4-dibrom-6-nitrophenyl-isobutylsulfon, 4-Amino-3,5-dibrom-2-nitrophenyl-isobutylsulfon.

Als Kupplungskomponenten der Formel (23) kommen folgende Produkte in Frage.

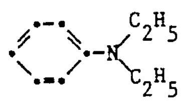 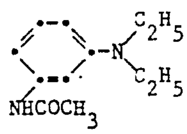 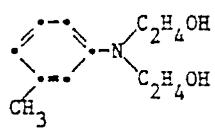 , 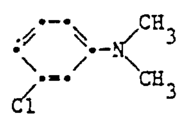 ,

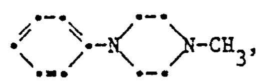 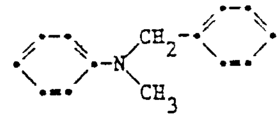 , 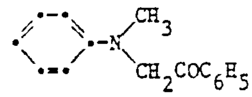

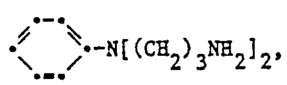 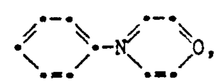 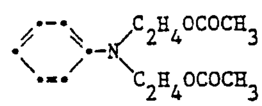 ,

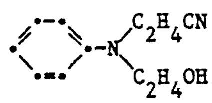 , 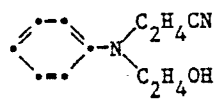 , 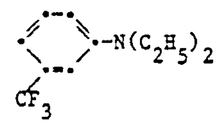 ,

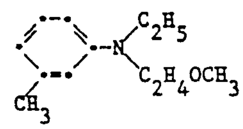 , 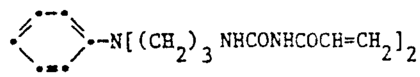

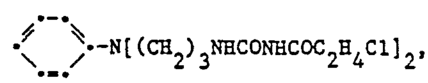 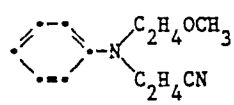 ,

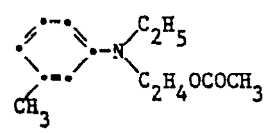 , 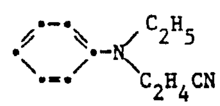 , 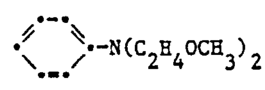

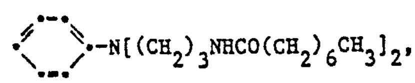 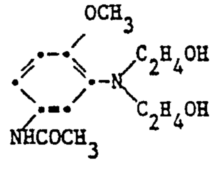 ,

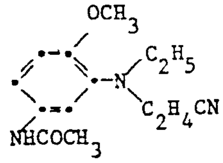 , 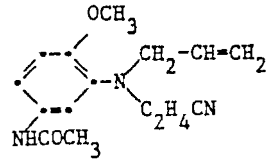 , 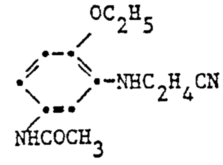

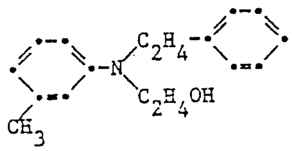 , 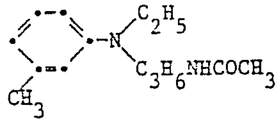 ,

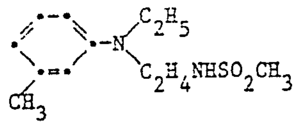 , 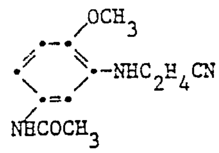 , 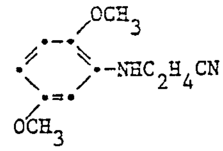 ,

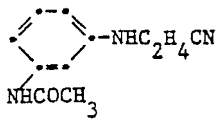 , 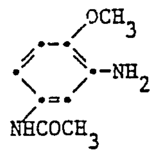 , 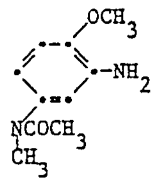 , 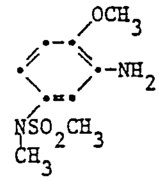 ,

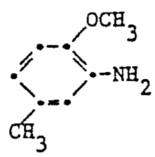 , 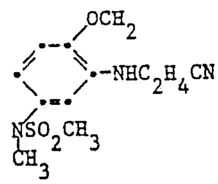 , 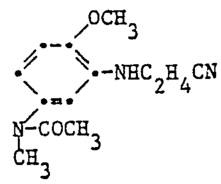 ,

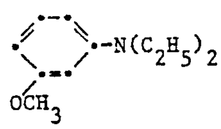 , 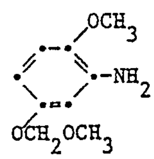 , 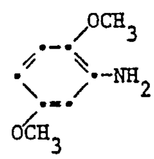 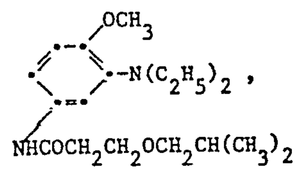

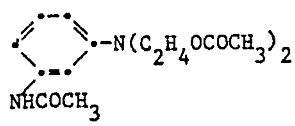 , 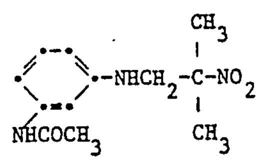 ,

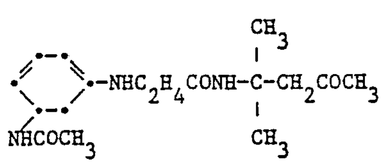 , 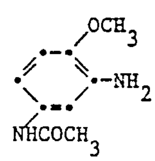 , 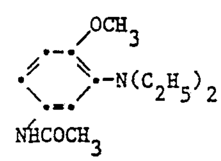

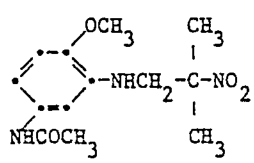 , 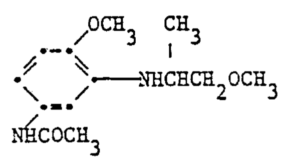 , 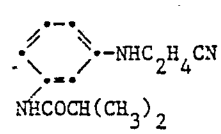

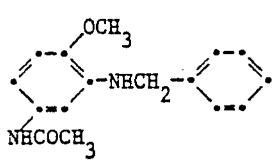 , 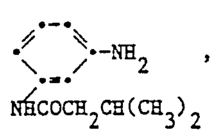 , 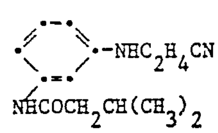 ,

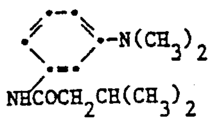 , 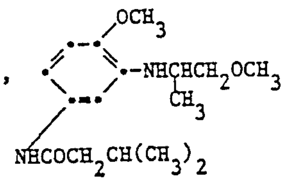 , 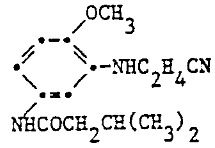 ,

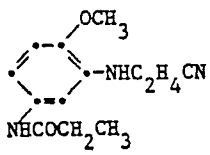 , 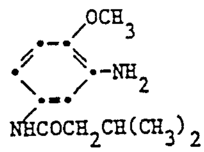 , 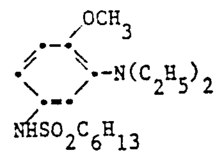

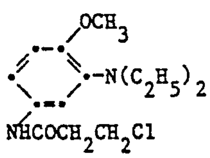 , 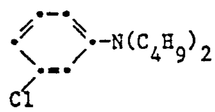 , 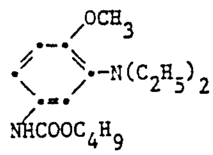 ,

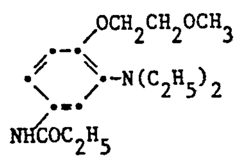 , 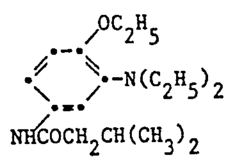 , 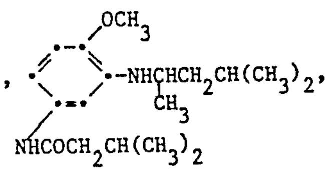

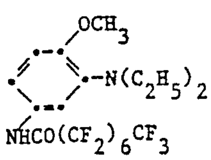 , 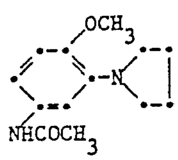 , 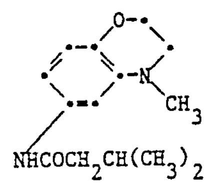 ,

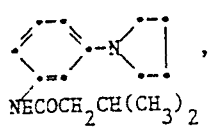 , 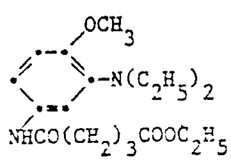 , 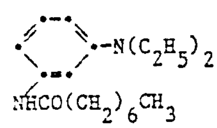 ,

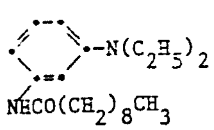 , 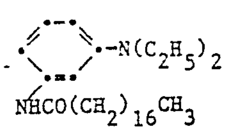 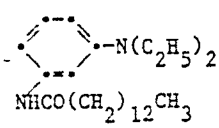 ,

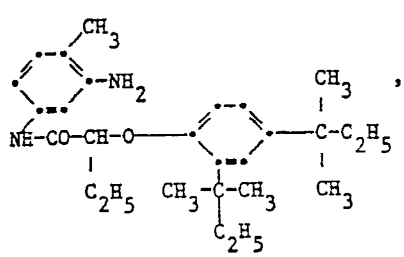 , 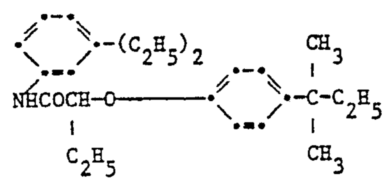 ,

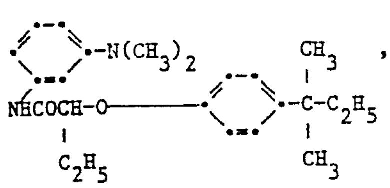 , 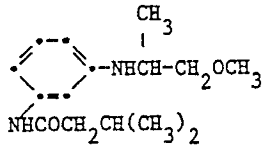 , 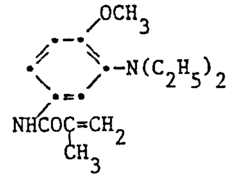

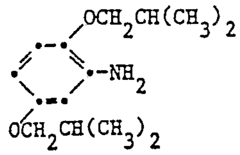 , 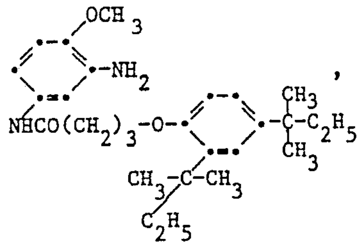 , 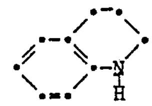 ,

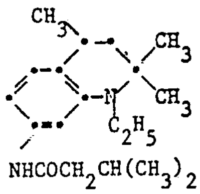 , 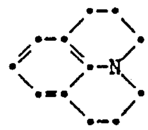 , 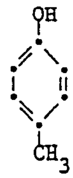 , 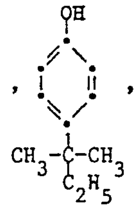 ,

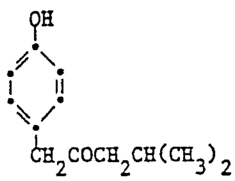 , 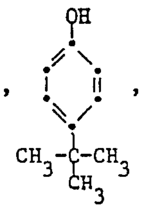 , 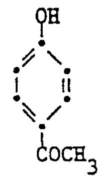 , 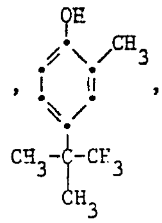 ,

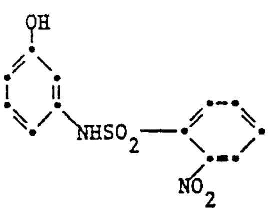 , 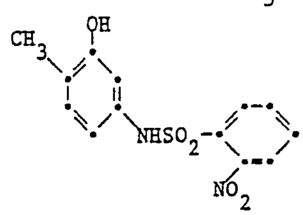 , 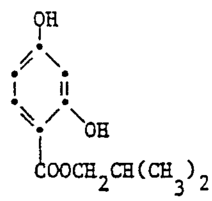 ,

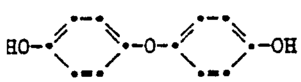 , 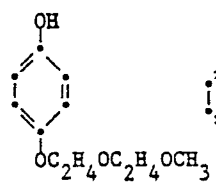 , 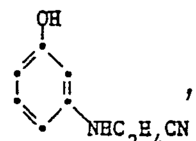 , 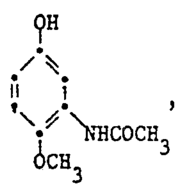 ,

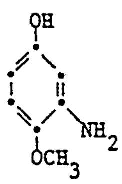 , 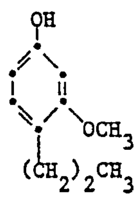 , 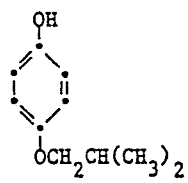 , 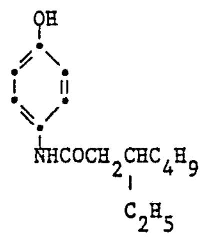 ,

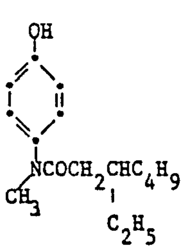 , 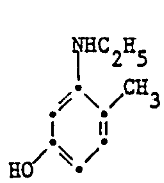 , 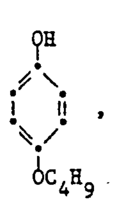 , 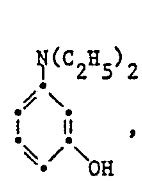 , 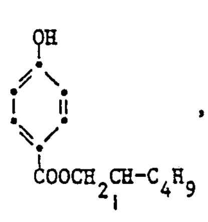 ,

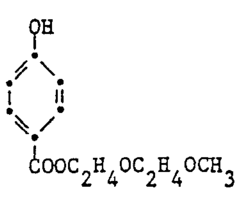 , 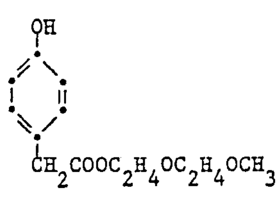 , 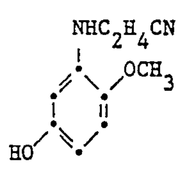 ,

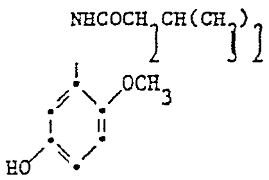 , 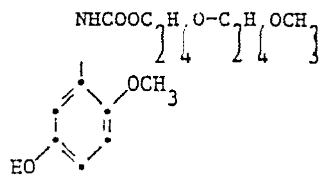 , 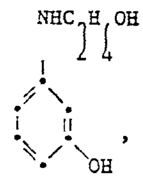 ,

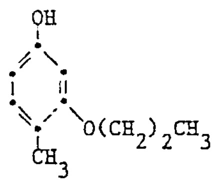 , 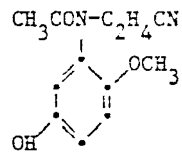 , 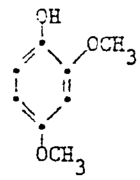 , 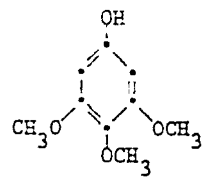 ,

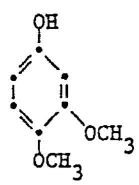 , 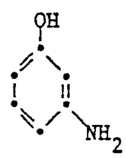 , 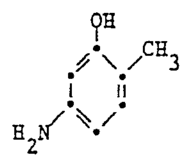 , 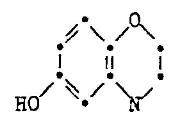 ,

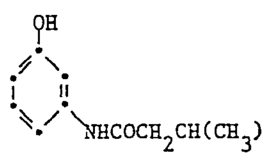 , 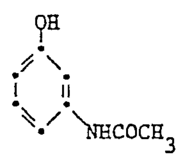 , 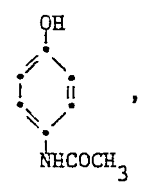 , 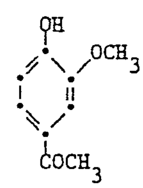 ,

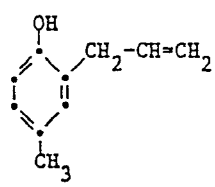 , 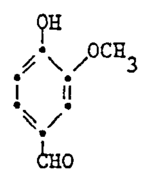 , 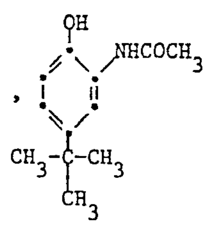 , 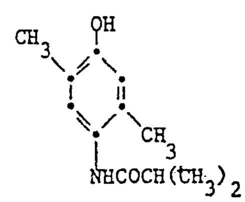

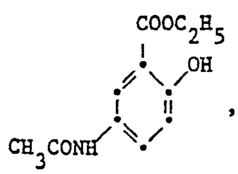 , 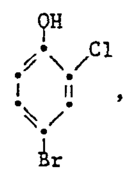 , 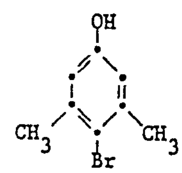 ,

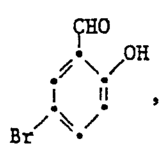 , 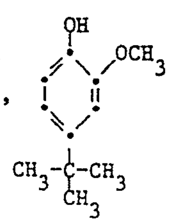 , 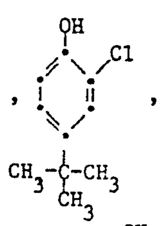 , 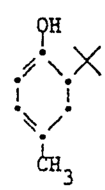 , 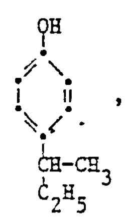 ,

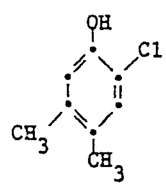 , 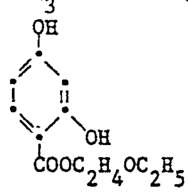 , 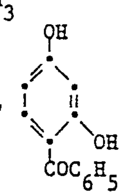 , 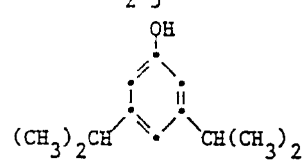 ,

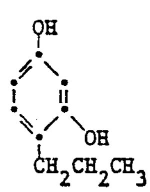 , 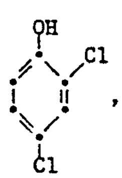 , 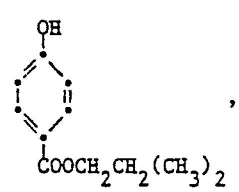 , 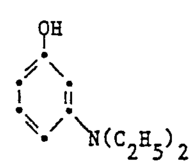 ,

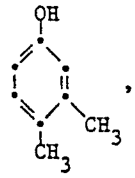, 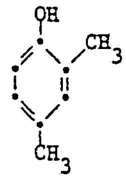, 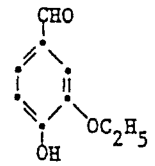, 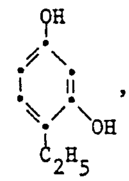, 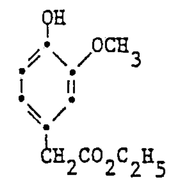,

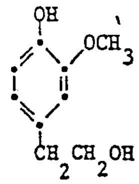, 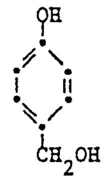, 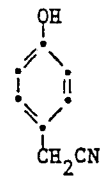, 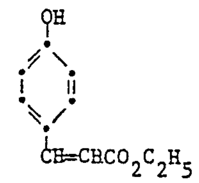,

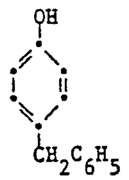, 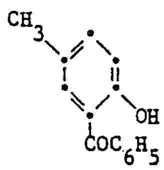, 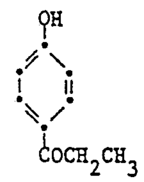, 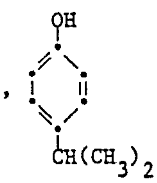,

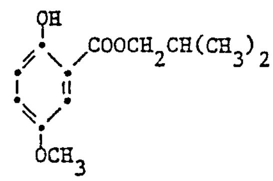, 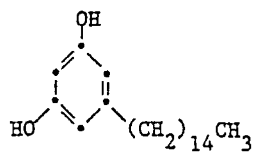, 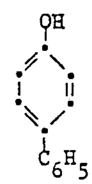, 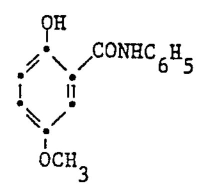,

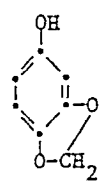, 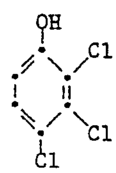, 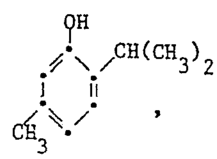, 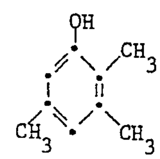,

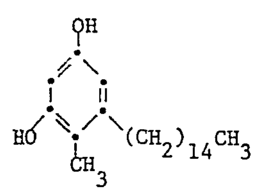, 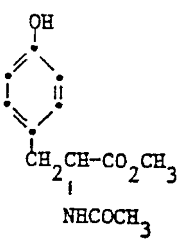

Die Farbstoffe der Formel (1) können für verschiedene Zwecke, insbesondere aber in photographischen Materialien und hierbei besonders vorteilhaft als Bildfarbstoffe für das Silberfarbbleichverfahren verwendet werden. Demgemäss lassen sich in üblicher, an sich bekannter Weise wertvolle photographische Materialien, insbesondere Silberfarbbleichmaterialien, herstellen, die auf èinem Schichtträger mindestens eine Schicht mit einem Farbstoff der Formel (1) enthalten.

Als Träger für die Silberhalogenidemulsionsschichten kann ein transparentes, metallisch-reflektierendes oder vorzugsweise weiss-opakes Material verwendet werden, das vorzugsweise keine Flüssigkeit aus den Bädern aufzusaugen vermag.

Der Träger kann beispielsweise aus gegebenenfalls pigmentiertem Cellulosetriacetat oder Polyester bestehen. Wenn er aus Papierfilz besteht, muss dieser beidseitig lackiert oder mit Polyäthylen beschichtet sein. Aus mindestens einer Seite dieses Trägers befinden sich die lichtempfindlichen Schichten, vorzugweise in der bekannten Anordnung, d. h. zu unterst eine rot sensibilisierte Silberhalogenidemulsionsschicht, die einen blaugrünen Azofarbstoff enthält, darüber eine grün sensibilisierte Silberhalogenidemulsionsschicht, die einen purpurfarbenen Azofarbstoff enthält und zu oberst eine blauempfindliche Silberhalogenidemulsionsschicht, die einen gelben Azofarbstoff enthält. Das Material kann auch Untersichten, Zwischenschichten, Filterschichten und Schutzschichten enthalten, doch soll die gesamte Dicke der Schichten in der Regel 20 µ nicht übersteigen.

Die erfindungsgemässen Farbstoffe sind lipophil und werden im allgemeinen als Lösungen in hochsiedenden Lösungsmitteln in die Gelatine eingearbeitet. In den meisten Fällen genügt es die zu verwendenden Farbstoffe als Lösung in einem solchen Lösungsmittel, eventuell unter Zuhilfenahme eines leicht flüchtigen Hilfslösungsmittels bei normaler oder leicht erhöhter Temperatur zu einer wässerigen Gelatine-Lösung unter gutem Rühren zuzusetzen. Anschliessend wird die Mischung mit einer Silberhalogenid und/oder andere Materialien zur Erzeugung photographischer Bilder enthaltenden Gelatine zusammengebracht, auf einer Unterlage in üblicher Weise zu einer Schicht gegossen und gegebenenfalls getrocknet.

Farbstoffe der Formel (1), in organichen Lösungsmitteln gelöst, können direkt zu einer Silberhalogenid und/oder andere Materialien zur Erzeugung photographischer Bilder enthaltenden gelatine zugegeben werden. So ist es z. B. möglich, die Farbstofflösung erst unmittelbar vor dem Giessen zuzudosieren.

Anstelle des einfachen Rührens können auch die üblichen Verteilungsmethoden mittels Knet- und/oder Scherkräften oder Ultraschall zur Anwendung gelangen. Zur Einarbeitung der Farbstoffe in die Giesslösung kann auch das Verfahren gemäss der CH-Patentanmeldung 4503/79-2 verwendet werden, wobei sich, ohne Anwendung mechanischer Scherkräfte, eine Spontanemulsion bildet.

Es ist auch möglich, den Farbstoff nicht als Lösung sondern in fester Form als feine Suspension zuzugeben. Es ist desweiteren möglich, die Farbstoffe in Gegenwart von hochmolekularen Polymeren in die Gelatine einzuarbeiten. Von besonderem Interesse sind für diese Anwendung Latices.

Die Giesslösung kann noch weitere Zusätze wie Härtungsmittel, Komplexierungsmittel und Netzmittel sowie Sensibilisatoren und Stabilisatoren für das Silberhalogenid enthalten.

Die Farbstoffe gehen keine chemischen Reaktionen mit den lichtempfindlichen Materialien ein. Die Farbstoffe der Formel (1) sind sehr diffusionsfest, weil sie stabile, organische Lösungen bilden. Sie sind gegen Calciumionen unempfindlich und auf Weiss gut bleichbar.

Die Farbstoffe erzeugen bei der Zugabe zu den Giesslösungen weder einen Viskositätsanstieg noch eine wesentliche Viskositätsänderung beim Stehenlassen des Giessgemisches.

Die spektralen Absorptionen in Gelatine liegen so, dass die Farbstoffe der Formel (1) je nach Struktur zu einem Farbstofftripel, zusammengestellt aus je einem Gelb-, Purpur- oder Blaugrünfarbstoff, kombiniert werden können, das über dem ganzen Dichtebereich für das Auge neutral erscheinende Grautöne aufweist.

Das mit Farbstoffen der Formel (1) hergestellte photographische Silberfarbbleichmaterial zeichnet sich insbesondere durch brillante Farben, gute Farbwiedergabe und ausgezeichnete Lichtechtheit aus. Ein wichtiges Merkmal eines guten Farbkopiermaterials ist eine optimale Tonreproduktion und in allen Dichtebereichen ausgeglichene Farbgradationen. Besonders die Kontrolle des Farbgleichgewichtes bereitet immer wieder Schwierigkeiten, da unterschiedliches Bleichverhalten der Azofarbstoffe nicht immer mit den herkömmlichen Methoden des Materialaufbaues, wie Abstimmung von Empfindlichkeit und Kontrast der eingesetzten Silberemulsionen ausgelichen werden kann. Dadurch wird vielfach die Auswahl der Bildfarbstoffe, sowie insbesondere auch diejenige der Verarbeitungskomponenten im Bleichbad eingeschränkt.

Die Verarbeitung der belichteten Silberfarbbleichmaterialien erfolgt im allgemeinen in vier aufeinanderfolgenden Schritten.

1. Silberentwicklung
2. Farbbleichung
3. Silberbleichung
4. Fixierung.

Im ersten Schritt wird das bei der Belichtung entstehende latente Silberbild entwickelt. Im zweiten Schritt wird, entsprechend der vorliegenden bildmässigen Verteilung des Silbers, der dem Silber zugeordnete Bildfarbstoff ausgebleicht. Der dritte Schritt ist notwendig, um das nach der Farbbleichung noch vorhandene überschüssige Bildsilber zu reoxidieren. Im vierten Schritt wird das nunmehr gänzlich in Form von Halogeniden vorliegende Silber durch Herauslösen mit einem Komplexbildner, insbesondere einem Salz der Thioschwefelsäure, entfernt, um das fertige Bild gegenüber weiterer Belichtung unempfindlich zu machen, und das reine Farbbild von Trübung zu befreien.

Der zweite Verfahrennschritt, die Farbbleichung, erfolgt bei den üblichen bekannten Verfahren in stark saurem Medium, wobei zur Beschleunigung der Farbbleichung ein Katalysator zugesetzt wird. Die Bleichbäder enthalten zudem einen Silberkomplexbildner oder Liganden. Beide Bestandteile, Katalysator und Ligand, sind notwendig, um die reduzierende Wirkung des metallischen, nichtdiffundierbaren Bildsilbers auf den ebenfalls nicht diffundierbaren Farbstoff zu übertragen. Die durch Reduktion am Bildsilber entstehende reduzierte Form des Katalysators dient dabei als Zwischenträger, welcher, nach Zurücklegung einer gewissen Diffusionsstrecke, den Farbstoff irreversibel reduziert und damit bleicht, und dabei selbst zur ursprünglichen Form reoxidiert wird.

Die Eigenschaft der reduzierten Stufe des Bleichkatalysators, zwischen Bildsilber und zu bleichendem Farbstoff frei zu diffundieren, ermöglicht es, Silber und Bildfarbstoff in einem gewissen Mass räumlich zu trenne, d. h. also den bleichbaren Farbstoff und die ihm zugeordnete Silberhalogenidemulsion nicht oder nur teilweise in der gleichen Schicht sondern in benachbarten Schichten

anzuordnen. Solche Silberfarbbleichmaterialien sind z. B. in DE-A-2 036 918, DE-A-2 132 835, und DE-A-2 132 836 beschrieben.

Eine Vereinfachung des Verarbeitungsprozesses, bei der die Farbstoffbleichung und die Silberbleichung zu einem einzigen Verfahrensschritt zusammengefasst werden, ist in der DE-A-2 488 433 beschrieben worden.

Die kombinierten Farb- und Silberbleichbäder (Zubereitungen) für die Verarbeitung des belichteten Silberfarbbleichmaterials enthalten die Komponenten (a) bis (e) und gegebenenfalls (f) :

(a) starke Säure
(b) wasserlösliches Jodid
(c) wasserlösliches Oxidationsmittel
(d) Oxidationsschutzmittel
(e) Bleichkatalysator
(f) Bleichbeschleuniger

Die Menge der Bleichkatalysatoren, die in den vorzugsweise wässrigen Behandlungsbädern eingesetzt wird, kann in weiten Grenzen schwanken und beträgt etwa 0,05 bis 10 g/l Bleichbad.

Die Temperatur des Bleichbades liegt im allgemeinen zwischen 20 und 90 °C, vorzugsweise zwischen 20 und 60 °C, wobei natürlich bei höherer Temperatur die erforderliche Bearbeitungsdauer kürzer ist als bei tieferer Temperatur. Die Bleichbäder sind innergalb des angegebenen Temperaturbereich stabil. Im allgemeinen werden die für die Verarbeitung benötigten wässrigen Bleichzubereitungen in der Form verdünnter wässriger Lösungen, die die genannten Komponenten enthalten, verwendet. Es sind aber auch andere Methoden denkbar, z. B. die Anwendung in Pastenform.

Dieser Temperaturbereich gilt auch für die anderen Verarbeitungsschritte. Die wässrige Bleichzubereitung gemäss der vorliegenden Erfindung kann z. B. aus flüssigen, insbesondere wässrigen Konzentraten einzelner oder aller Komponenten ((a) bis (f)) hergestellt werden. Vorteilhaft verwendet man z. B. zwei flüssige Konzentrate, deren eines die starke Säure (a) und das Oxydationsmittel (c) und deren anderes die übrigen Komponenten (b), (d), (e) und gegebenenfalls (f) enthält, wobei in letzterem Konzentrat zur Verbesserung der Löslichkeit, insbesondere der Komponente (e) ein zusätzliches Lösungsmittel wie Aethyl- oder Propylalkohol, Benzylalkohol, Aethylenglykolmethyl- oder -äthyläther zugesetzt werden kann. Die zur Anwendung gelangenden wässrigen Bleichzubereitungen enthalten in der Regel die Komponenten (a) bis (f) in den folgenden Mengen :

(a) starke Säure : 10 bis 200 g/l ;
(b) wasserlösliches Jodid : 2 bis 50 g/l, vorzugsweise 5 bis 25 g/l ;
(c) wasserlösliches Oxydationsmittel : 1 bis 30 g/l ;
(d) Oxydationsschutzmittel : 0,5 bis 10 g/l ;
(e) Bleichkatalysatoren : 0,05 bis 10 g/l, und gegebenenfalls
(f) Bleichbeschleuniger : 1 bis 20 g/l.

Als starke Säuren (Komponente (a)), können die kombinierten Farb- und Silberbleichbäder Alkyl- oder Arylsulfonsäuren und insbesondere p-Toluolsulfonsäure, Schwefelsäure, Sulfaminsäure oder Trichloressigsäure enthalten. Gegebenenfalls können auch Gemische dieser Säuren eingesetzt werden. Der pH-Wert des Bleichbades ist insbesondere nicht grösser als 2 und vorzugsweise nicht grösser als 1.

Die wasserlöslichen Jodide (Komponente (bb) sind in der Regel Alkalimetalliodide, insbesondere Natrium- und Kaliumjodid.

Als Oxydationsmittel (c) verwendet man zweckmässig wasserlösliche aromatische Mononitro- und Dinitroverbindungen, sowie Anthrachinonsulfonsäurederivate. Die Verwendung solcher Oxydationsmittel dient zur Beeinflussung des Farbgleichgewichts und des Kontrasts der im Farbbleichverfahren hergestellten Bilder und ist aus der deutschen Patentschrift 735,672, den britischen Patentschriften 539 190 und 539 509 und der japanischen Patentpublikationen 22673/69 bekannt.

Die Mononitro- und Dinitroverbindungen sind vorzugsweise Mono- oder Dinitrobenzolsulfonsäuren, z. B. solche der Formel

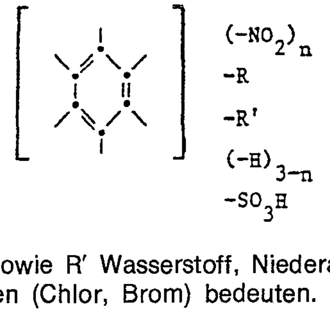

(24)

worin n gleich 1 oder 2 ist und R sowie R' Wasserstoff, Niederalkyl mit 1 bis 4 Kohlenstoffatomen, Hydroxyl, Alkoxy, Amino oder Halogen (Chlor, Brom) bedeuten. Die Sulfonsäuren können als leichtlösliche Salze zugefügt werden. Geeignet sind z. B. die Natrium- oder Kaliumsalze der folgenden Säuren :

o-Nitrobenzolsulfonsäure,
m-Nitrobenzolsulfonsäure,
2,4-Dinitrobenzolsulfonsäure,
3,5-Dinitrobenzolsulfonsäure,
3-Nitro-4-chlorbenzolsulfonsäure,
2-Chlor-5-nitrobenzolsulfonsäure,
4-Methyl-3,5-dinitrobenzolsulfonsäure,
3-Chlor-2,5-dinitrobenzolsulfonsäure,
2-Amino-4-nitrobenzolsulfonsäure,
2-Amino-4-nitro-5-methoxybenzolsulfonsäure,
4-Nitrophenol-2-sulfonsäure.

Die Verbindungen der Komponente (c) dienen neben ihrer Funktion als Silberbleichmittel zur Gradationsverflachung.

Als Oxydationsschutzmittel (Korrosionsschutzmittel (d) werden mit Vorteil Reduktone oder wasserlösliche Mercaptoverbindungen verwendet. Geeignete Reduktone sind insbesondere aci-Reduktone mit einer 3-Carbonyldiol-(1,2)-Gruppierung, wie Redukton, Triose-Redukton oder vorzugsweise Ascorbinsäure. Als Mercaptoverbindungen kommen z. B. Thioglyzerin, insbesondere jedoch die Verbindungen der Formel

$$HS—C_qH_{2q}—B \qquad (25)$$

oder vorzugsweise

$$HS—(CH_2)_m—COOH \qquad (26)$$

in Betracht, worin q eine ganze Zahl im Wert von 2 bis 12, B eine Sulfonsäure- oder Carbonsäuregruppe und m eine der Zahlen 3 und 4 bedeuten. Als Oxydationsschutzmittel verwendbare Mercaptoverbindungen sind in der DE-A-2 258 076 und der DE-A-2 423 814 beschrieben. Als weitere Oxydationsschutzmittel geeignet sind Alkalimetall-, Erdalkalimetall- oder Ammoniumbisulfitaddukte von organischen Carbonylverbindungen, vorzugweise Alkalimetall- oder Ammoniumbisulfitaddukte von Monoaldehyden mit 1 bis 4 oder Dialdehyden mit 2 bis 5 Kohlenstoffatomen (DE-A-2 737 142).

Beispielsweise genannt seien das besonders bevorzugte Formaldehydbisulfitaddukt, ferner die entsprechenden Addukte von Acetaldehyd, Propionaldehyd, Butyraldehyd oder Isobutyraldehyd, von Glyoxal. Malondialdehyd oder Glutardialdehyd. Gegebenenfalls sind auch die nachfolgend als Bleichbeschleuniger bezeichneten tertiären wasserlöslichen Phosphine gleichzeitig als Oxydationsschutzmittel einsetzbar.

Geeignete Bleichbeschleuniger (f) sind z. B. quaternäre Ammoniumsalze wie sie aus den deutschen Offenlegungsschriften 2 139 401 und 2 716 136 bekannt sind. Bevorzugt handelt es sich dabei um quaternäre, gegebenenfalls substituierte Piperidin-, Piperazin-, Pyrazin, Chinolin- oder Pyridinverbindungen, wobei letztere bevorzugt sind. Ferner können auch Tetraalkylammoniumverbindungen (Alkyl mit 1 bis 4 Kohlenstoffatomen) und Alkylendiammoniumverbindungen (Alkylen mit 2 bis 6 Kohlenstoffatomen) in Frage kommen. Im einzelnen seien genannt :

Tetraäthylammoniumjodid ; $(CH_3)_3N^{\oplus}(CH_2)_2N^{\oplus}(CH_3)_3 \cdot 2J^{\ominus}$ ; $(CH_3)_3N^{\oplus}(CH_2)_6N^{\oplus}(CH_3)_3 \cdot 2J^{\ominus}$. N-Methylpyridiniumjodid ; N-Methylchinoliniumjodid ; N-Hydroxyäthylpyridiniumchlorid ; N-Hydroxypropylpyridiniumbromid ; N-Methyl-2-Hydroxymethylpyridiniumjodid ; N,N-Dimethylpiperidiniumjodid ; N,N'-Dimethylpyraziniumfluorsulfat und $\gamma$-Picoliniumhydrogensulfat.

Weitere Bleichbeschleuniger sind die aus der DE-A-2 651 969 bekannten wasserlöslichen tertiären Phosphine, die vorzugsweise mindestens eine Cyanoäthylgruppierung enthalten.

Sie entsprechen z. B. der Formel

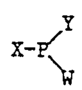

(27)

worin W—$C_rH_{2r}CN$, —$C_rH_{2r}NO_2$ oder ein gegebenenfalls substituierter Arylrest oder ein heterocyclischer Rest, r 1 bis 25, X gegebenenfalls substituiertes Alkyl und Y Hydroxylalkyl, Alkoxyalkyl, Sulfoalkyl, Aminoalkyl (Alkyl je 1 bis 25, vorzugweise 2 bis 4 Kohlenstoffatome), Phenyl, Sulfophenyl oder Pyridyl ist.

Bevorzugte tertiäre Phosphine entsprechen der Formel

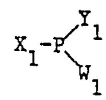

(28)

worin $X_1$ $-CH_2CH_2CN$ oder $-(CH_2)_2OCH_3$, $-Y_1$ $-(CH_2)_2SO_3^{\ominus}M^{\oplus}$, $-(CH_2)_3-SO_3^{\ominus}M^{\oplus}$, $-(CH_2)_4-SO_3^{\ominus}M^{\oplus}$, $-(CH_2)_2OCH_3$ oder $-CH_2N(C_2H_5)_2$, $W_1$ $-CH_2CH_2CN$ oder Phenyl und $M^+$ ein Kation, insbesondere ein Alkalimetallkation, z. B. das Natrium- oder Kalium- kation ist.

Im einzelnen seien die folgenden Verbindungen genannt :

Bis-(β-cyanoäthyl)-2-sulfoäthylphosphine (Natriumsalz),
Bis-(β-cyanoäthyl)-3-sulfopropylphosphin (Natriumsalz),
Bis-(β-cyanoäthyl)-4-sulfobutylphosphin (Natriumsalz),
Bis-(β-cyanoäthyl)-2-methoxyäthylphosphin,
Bis-(2-methoxyäthyl)-(β-cyanoäthyl)-phosphin,
(β-cyanoäthyl)-phenyl-3-sulfopropylphosphin (Natriumsalz),
(β-Cyanoäthyl)-phenyl-2-methoxyäthylphosphin und
Bis-(2-methoxyäthyl)-phenylphosphin.

Alle Bäder können weitere übliche Zusätze wie z. B. Härtungsmittel, Netzmittel, optische Aufheller oder UV-Schutzmittel enthalten.

Zur Silberentwicklung können Bäder üblicher Zusammensetzung angewendet werden, z. B. solche, die als Entwicklersubstanz Hydrochinon und gegebenenfalls zusätzlich 1-Phenyl-3-pyrazolidinon enthalten. Gegebenenfalls enthält bereits das Silberentwicklungsbad einen Bleichkatalysator.

Das Silberfixierbad kann in bekannter und üblicher Weise zusammengesetzt sein. Als Fixiermittel dient z. B. Natriumthiosulfat oder mit Vorteil Ammoniumthiosulfat, gewünschtenfalls mit Zusätzen wie Natriumbisulfit und/oder Natriummetabisulfit.

## Herstellungsbeispiele

### Beispiel 1

4-Formylamido-benzolsulfochlorid.

121,5 g Formanilid werden portionenweise zu 340 ml Chlorsulfonsäure bei 10 °C zugegeben. Das Reaktionsgemisch wird dann auf 95 °C erwärmt und während 2,5 Stunden bei dieser Temperatur gerührt. Nach dem Erkalten wird das Reaktionsgemisch in 2,5 kg Eis eingerührt, der Niederschlag wird abgesaugt, gründlich mit Eiswasser gewaschen und getrocknet. Man erhält 172 g 4-Formylamidobenzolsulfochlorid vom Schmelzpunkt 158-160 °C.

4-Aminobenzolsulfonsäure-N,N-diäthylamid.

Zu einer Lösung von 20,2 g Diäthylamin in 240 ml Acetonitril werden 120 g Eis und 32 g Natriumcarbonat gegeben, dann gibt man portionenweise 66 g 4-Formylamidobenzolsulfochlorid bei einer Temperatur von 5 bis 10 °C zu und rührt noch 3 Stunden bei 20 °C und schliesslich 3 Stunden bei 70 °C, verdampft das Acetonitril unter Vakuum und extrahiert das Produkt mit Methylenchlorid. Die organische Phase wird mit Wasser gewaschen und eingeengt. Ausbeute 69 g 4-Formylamido-benzolsulfonsäure-N,N-diäthylamid. Dieses Rohprodukt wird in 500 ml Methanol gelöst, mit 50 ml Wasser und 90 ml konzentrierter Salzsäure versetzt und 5 Stunden bei Raumtemperatur gerührt. Das Reaktionsgemisch wird mit Natronlauge neutralisiert und zur Hälfte eingeengt. Nach Zugabe von 210 ml Wasser kristallisiert das Produkt aus. Es wird abgesaugt, mit Wasser gewaschen und aus Aethanol umkristallisiert. Ausbeute 44 g 4-Aminobenzolsulfonsäure-N,N-diäthylamid vom Schmelzpunkt 100-102 °C.

4-Amino-3,5-dibrombenzolsulfonsäure-N,N-diäthylamid.

11,5 g 4-Aminobenzolsulfonsäure N,N-diäthylamid werden in 150 ml Methanol gelöst. Die auf 0 °C abgekühlte Lösung wird mit 10 ml konzentrierter Salzsäure versetzt. Dann werden 5,1 ml Brom in 50 ml Methanol, das mit Natriumbromid gesättigt worden ist, zugetropft. Die gelbe Suspension wird noch zwei Stunden bei 20 °C gerührt, dann in 1,5 l Eiswasser eingetragen. Nach der Neutralisation mit Ammoniaklösung wird das Rohprodukt abgesaugt, gewaschen und aus Aethanol umkristallisiert. Ausbeute 13,1 g weisse Kristalle von Schmelzpunkt 186-187 °C. Das NMR-Spektrum und die CHN-Analyse entsprechen der erwarteten Konstitution.

### Beispiel 2

Analog zu Beispiel 1 werden folgende Sulfonamide erhalten :

| 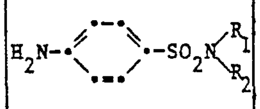 | | | 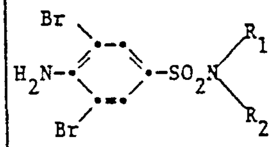 |
|---|---|---|---|
| Schmelzpunkt (°C) | $R_1$ | $R_2$ | Schmelzpunkt (°C) |
| 84-85 | $(C_2H_5)_2N(CH_2)_3CH-$ <br> $CH_3$ | H | 97-99°C |
| Oel | $C_2H_4OCH_3$ | $C_2H_4OCH_3$ | 79-81°C |
| Oel | $(CH_2)_3OCH_3$ | H | 78-79°C |
| 160-169 | $CH_2CH-CH_3$ <br> OH | $CH_2CHCH_3$ <br> OH | 178-180°C |
| — | $(CH_2)_3-OCH_3$ | $C_2H_5$ | 101-103°C |

Beispiel 3

4-Methylmercapto-nitrobenzol.

28,3 g Methylmercaptan werden bei 0 °C unter Stickstoff in 500 ml Dimethylformamid gelöst. Bei − 10 °C werden dann 37,4 g Kaliumhydroxid, gelöst in 150 ml Aethanol, zugetropft und dann 94,5 g 4-Chlornitrobenzol zugegeben. Das Reaktionsgemisch wird auf 100 °C erwärmt und 8 Stunden bei dieser Temperatur gerührt. Danach wird in 5 kg Eiswasser eingerührt. Der Niederschlag wird abgesaugt, gewaschen, getrocknet und aus Methanol umkristallisiert. Ausbeute 86,2 g gelbe Kristalle vom Schmelzpunkt 71-73,5 °C. Auf ähnlicher Weise erhält man aus Chlornitrobenzol und Hexylmercaptan 4-Hexylmercaptonitrobenzol. Aus 2-Chlornitrobenzol und Methylmercaptan erhält man analogerweise das 2-Methylmercapto-nitrobenzol und aus 2,4-Dichlor-nitrobenzol und Isobutylmercaptan das 2,4-Diisobutylmercapto-nitrobenzol.

4-Methylsulfonyl-nitrobenzol.

33,8 g 4-Methylmercapto-nitrobenzol werden in 180 ml Essigsäure auf 90 °C erhitzt und mit einer Lösung von 68 g 49 %-iger Peressigsäurelösung in 50 ml Essigsäure langsam versetzt. Man rührt 30 Minuten und trägt in 1,2 l Eiswasser ein. Das ausgefallene Produkt wird abgesaugt, gewaschen und getrocknet. Ausbeute 38,2 g weise Kristalle vom Schmelzpunkt 141-144 °C. Auf analogem Weg erhält man 4-Hexylsulfonyl-nitrobenzol, Smp. 44-46 °C 2-Methylsulfonyl-nitrobenzol, Smp. 104-106 °C, Sdp. 215-218 °C (0,33 mbar) 2,4-Bis-isobutylsulfonyl-nitrobenzol, Smp. 165-167 °C.

4-Methylsulfonyl-anilin.

Durch Béchamp-Reduktion von 16,1 g 4-Methylsulfonyl-nitrobenzol in 180 ml 50 %igem wässerigem Methanol erhält man 8,8 g 4-Methylsulfonylanilin vom Schmelzpunkt Smp. 132-134 °C.

Aus 4-Hexylsulfonyl-nitrobenzol ist wie oben beschrieben 4-Hexylsulfonylanilin, Smp. 95-97 °C, zugänglich, aus 2-Methylsulfonyl-nitrobenzol das 2-Methylsulfonylanilin, (Schmelzpunkt : 82-83 °C) und aus 2,4-Bis-isobutylsulfonylnitrobenzol das 2,4-Bis-isobutylsulfonylanilin, (dargestellt durch katalytische Hydrierung) (Schmelzpunkt : 118-120 °C).

4-Amino-3,5-dibromphenyl-methylsulfon.

5,15 g 4-Methylsulfonyl-anilin werden in 40 ml Methanol und 2 ml konzentrierter Salzsäure

suspendiert. bei 0 bis 5 °C werden 9,8 g Brom in 20 ml mit Natriumbromid gesättigtem Methanol zugetropft. Das Reaktionsgemisch wird 3 Stunden bei Raumtemperatur und anschliessend 30 Minuten bei 40 °C gerührt und dann in 600 ml Eiswasser eingetragen. Nach Neutralisieren mit Ammoniaklösung wird der Niederschlag abgesaugt, gewaschen und getrocknet. Ausbeute 9,3 g weisse Kristalle vom Schmelzpunkt 190-192 °C. Kristallisiert man aus Toluol um, so erhöht sich der Schmelzpunkt auf 192-194 °C.

Auf analoger Weise erhält man aus 4-Hexylsulfonylanilin das 3,5-Dibrom-4-hexylsulfonylanilin vom Schmelzpunkt 192-194 °C.

## Beispiel 4

a) Diazokomponente.

40,8 ml Chlorbenzol werden zu 300 ml Chlorsulfonsäure getropft. Die gelbe Lösung wird langsam auf 150 °C erwärmt und 17 Stunden bei dieser Temperatur gehalten. Nach dem Erkalten wird in 2 kg Eis eingetragen. Der Niederschlag wird abgesaugt, gewaschen und getrocknet. Ausbeute 31 g weisse Kristalle von 4-Chlorbenzol-1,3-disulfochlorid vom Schmelzpunkt 83-86 °C.

46,5 g dieses Sulfochlorids werden in Portionen zu einer Mischung von 120 ml Acetonitril, 40,3 g Diäthylamin, 60 g Eis und 16,2 g Natriumcarbonat bei einer Temperatur von höchstens 20 °C gegeben. Nach 2 Stunden erhöht man die Temperatur auf 70 °C und rührt über Nacht weiter. Die Suspension wird filtriert, die flüssige organische Phase abdekantiert und zur Trockne eingedampft. Der Rückstand wird aus 300 ml Methanol mit Hilfe von Tierkohle umkristallisiert. Ausbeute 32,1 g weisse Kristalle von 4-Chlorbenzol-1,3-disulfonsäure-bis-N,N-diäthylamid vom Schmelzpunkt 90-91 °C.

19,1 g dieses Produktes werden in 50 ml Dioxan und 100 ml konzentrierten Ammoniak nach Zugabe einer Spur Eisentrichlorid 20 Stunden bei 125 °C in einem Stahlautoklaven erhitzt. Das gebildete 4-Amino-benzol-1,3-disulfonsäure-bis-N,N-diäthylamid wird mit Chloroform extrahiert, die organische Phase gewaschen und auf Magnesiumsulfat getrocknet. Ausbeute : 13,7 g. Nach Umkristallisieren aus Aethanol fallen weisse Kristalle vom Schmelzpunkt 137-139 °C an.

Analyse :

| | | | |
|---|---|---|---|
| Ber. % | C 46,26 | Gef. % | C 46,21 |
| | H 6,94 | | H 7,01 |
| | N 11,57 | | N 11,49 |

b) Kupplungskomponente.

6,5 g N,N-Dimethyl-m-phenylendiamin werden in 50 ml Toluol gelöst und mit 6 g Isovaleriansäurechlorid umgesetzt. Die Suspension wird 2 Stunden bei 40 °C gerührt, abgekühlt und mit 26 ml 2N Natronlauge behandelt. Die organische Phase wird abdekantiert, gewaschen und getrocknet. Nach Eindampfen werden 6,5 g Isovalerianoylamino-N,N-dimethylanilin vom Smp 99-101 °C erhalten.

Analyse : ($C_{13}H_{20}N_2O$)

| | | | |
|---|---|---|---|
| Ber. % | C 70,88 | Gef. % | C 71,03 |
| | H 9,16 | | H 8,99 |
| | N 12,72 | | N 12,59 |

c) Azofarbstoff

7,3 g 4-Aminobenzol-1,3-disulfonsäure-bis(N,N-diäthylamid)- und in 160 ml Acetonitril werden mit 2 ml Methansulfonsäure, dann mit 3 g Nitrosylschwefelsäure versetzt. Nach 20 Minuten Rühren bei Raumtemperatur wird die Reaktionslösung in 200 g Eiswasser eingetragen. Man tropft eine Lösung von 4,4 g der unter b) beschriebenen Kupplungskomponente in 40 ml Acetonitril ein und puffert mit Natriumacetat, wobei allmählich sich ein rotstichiges Oel abscheidet. Nach einer Stunde nimmt man das Oel mit Chloroform auf, wäscht die organische Phase und dampft ein.

Nach Umkristallisieren aus wässerigem Acetonitril erhält man 9 g Farbstoff vom Smp. 125-127 °C.

Analyse : ($C_{27}H_{42}N_6O_5S_2$)

| | | | |
|---|---|---|---|
| Ber. % | C 54,53 | Gef. % | C 54,43 |
| | H 7,12 | | H 7,31 |
| | N 14,13 | | N 13,99 |

## Beispiel 5

Analog zu Beispiel 4a werden folgende Produkte hergestellt :

| | | 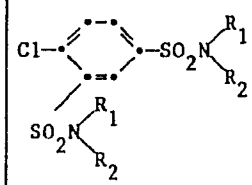 | 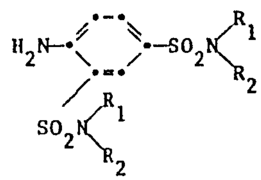 | | | | | | |
|---|---|---|---|---|---|---|---|---|---|
| $R_1$ | $R_2$ | Schmelzpunkt (°C) | Schmelzpunkt (°C) | % C Ber. | Gef. | % H Ber. | Gef. | % N Ber. | Gef. |
| $CH_3OC_2H_4-$ | $CH_3OC_2H_4-$ | Oel | Oel | 44,70 | 43,17 | 6,87 | 6,74 | 8,69 | 8,39 |
| $(CH_3)_2CH-$ | $(CH_3)_2CH-$ | 167-169 | 182-185 | 42.97 | 42.95 | 6,32 | 6,47 | 12,53 | 12,32 |

Beispiel 6

a) Diazokomponente

6,5 g 4-Aminobenzol-1,3-disulfonsäure-bis-(N,N-diäthyl)amid in 400 ml Methanol werden mit 18 g Brom tropfenweise bei 20 °C versetzt. Nach einer Stunde erwärmt man auf 40 °C und rührt noch 4 Stunden. Das Reaktionsgemisch wird kalt in 4 kg Eiswasser eingetragen. 60 ml konzentrierte Ammoniaklösung werden zugegeben. Der Niederschlag wird abgesaugt, gewaschen und getrocknet. Ausbeute 29 g 4-Amino-5-brombenzol-1,3-disulfonsäure-bis-(N,N-diäthyl)amid, vom Schmelzpunkt 87-89 °C.

Analyse : ($C_{14}H_{24}N_3S_2O_4Br$)

| | | | |
|---|---|---|---|
| Ber. % | C 38,01 | Gef. % | C 37,97 |
| | H 5,47 | | H 5,43 |
| | N 9,50 | | N 9,47 |

b) Azofarbstoff

13,2 g Diazokomponente aus Beispiel 6a) werden in 250 ml Acetonitril nach Beispiel 4 diazotiert. Nach 80 Minuten trägt man die Diazomiumlösung in 300 g Eis ein und tropft eine Lösung von 7,5 g 2-[5-acetamino-2-methoxyphenylamino-]-1 methoxypropan in 45 ml Acetonitril ein und puffert durch Zugabe von Natriumacetat. Nach 45 Minuten wird der Farbstoff mit Chlorform extrahiert. Die organische Phase wird gewaschen, getrocknet, mit Silikagel behandelt und eingedampft. Nach Umkristallisieren aus wässerigem Acetonitril erhält man 6 g Farbstoff vom Schmelzpunkt 160-162 °C.

Analyse ($C_{27}H_{41}BrN_6O_7S_2$)

| | | | |
|---|---|---|---|
| Ber. % | C 45,96 | Gef. % | C 45,97 |
| | H 5,86 | | H 5,84 |
| | N 11,91 | | N 11,91 |

Beispiel 7

3,9 g Farbstoff vom Beispiel 6 werden in 80 ml N-Methylpyrrolidon mit 0,8 g Kupfercyanid versetzt. Man rührt 45 Minuten bei 50 °C und trägt in 700 ml Wasser ein. Der Niederschlag wird abgesaugt, gewaschen, in Chloroform aufgelöst und mit 40 %iger Ammoniumrhodanidlösung, dann mit Wasser gewaschen. Das Lösungsmittel wird abgedampft. Anschliessend wird der Rückstand in Acetonitril aufgelöst und mit Wasser umgefällt. Der Farbstoff wird abgesaugt aund getrocknet. Ausbeute 2,5 g (Schmelzpunkt 159-172 °C).

Analyse : ($C_{28}H_{41}N_7O_7S_2$)

| | | | |
|---|---|---|---|
| Ber. % | C 51,60 | Gef. % | C 51,54 |
| | H 6,35 | | H 6,37 |
| | N 15,05 | | N 14,74 |

Auf ähnliche Weise werden die in Tabelle 1 angeführten Farbstoffe der allgemeinen Formel

(100) 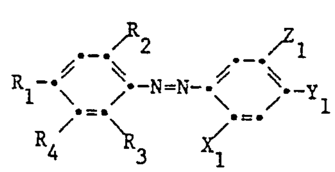

herstellt.

(Siehe Tabelle I Seite 32 ff.)

Tabelle I

| Farbstoff Nr. | $X_1$ | $Y_1$ | $Z_1$ | $R_3$ | $R_4$ | $R_1$ | $R_2$ | $\lambda_{max}^{CHCl_3}$ | $\varepsilon_{mol}$ | $\lambda_{max}^{Gel}$ |
|---|---|---|---|---|---|---|---|---|---|---|
| 101 | 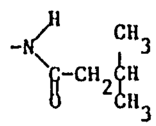 | $NHC_2H_4CN$ | H | H | H | Br | H | 414 | 28530 | 444 |
| 102 | " | " | H | $CON(CH_2CH_2OCH_3)_2$ | H | H | H | 410 | 24270 | 420 |
| 103 | " | " | H | $CO_2CH_3$ | H | H | H | 411 | 25230 | 433 |
| 104 | " | " | H | $CO_2C_2H_4OCH_3$ | H | H | H | 411 | 24150 | 433 |
| 105 | " | " | H | Br | H | H | Br | 401 | 23070 | 421 |
| 106 | " | " | H | Br | H | $C_2H_5$ | Br | 403 | 20160 | 423 |
| 107 | " | " | H | Br | H | $CH_3$ | Br | 400 | 21740 | 420 |
| 108 | " | " | H | $CH_3$ | H | Br | $CH_3$ | 384 | 21310 | 410 |
| 109 | " | $NHCH(CH_3)CH_2OCH_3$ | H | Br | H | H | Br | 418 | 23090 | 433 |
| 110 | " | " | H | Br | H | Br | Br | 424 | 23390 | 444 |
| 111 | " | " | H | Br | H | Cl | Br | 423 | 25280 | 443 |
| 112 | " | " | H | Br | H | $C_2H_5$ | Br | 418 | 22270 | 432 |
| 113 | " | " | H | Br | H | $CH_3$ | Br | 417 | 22270 | 432 |
| 114 | " | " | $OCH_3$ | H | H | $NO_2$ | H | 535 | 35480 | 538 |

Tabelle I (Fortsetzung)

| Farbstoff Nr. | $X_1$ | $Y_1$ | $Z_1$ | $R_3$ | $R_4$ | $R_1$ | $R_2$ | $\lambda_{max}^{CHCl_3}$ | $\varepsilon_{mol}$ | $\lambda_{max}^{Gel}$ |
|---|---|---|---|---|---|---|---|---|---|---|
| 115 | 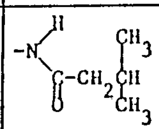 | $NHCH(CH_3)CH_2OCH_3$. | $OCH_3$ | CN | H | H | CN | 568 | 44790 | 537 |
| 116 | " | " | $OCH_3$ | CN | H | $CO_2(C_2H_4O)_2Et$ | CN | 565 | 48880 | 555 |
| 117 | " | " | $OCH_3$ | CN | H | $SO_2NH(CH_2)_3OCH_3$ | H | 547 | 38520 | 545 |
| 118 | " | " | $OCH_3$ | $SO_2CH_3$ | H | $SO_2N(CH_2CH_2OCH_3)_2$ | $SO_2CH_3$ | 566 | 40610 | 565 |
| 119 | " | $N(C_2H_5)_2$ | $OCH_3$ | CN | H | $p-ClC_6H_4CO-$ | $NO_2$ | 633 | 72510 | 634 |
| 120 | " | " | $OCH_3$ | CN | H | $CO_2C_2H_5$ | $NO_2$ | 622 | 64390 | 626 |
| 121 | " | " | $OCH_3$ | CN | H | $SO_2NH(CH_2)_3OCH_3$ | CN | 627 | 84260 | 626 |
| 122 | " | " | $OCH_3$ | CN | H | " | $NO_2$ | 622 | 66880 | 622 |
| 123 | " | " | $OCH_3$ | CN | H | $SO_2N(C_2H_5)_2$ | $SO_2N(C_2H_5)_2$ | 623 | 55490 | 627 |
| 124 | " | " | $OCH_3$ | CN | H | $SO_2N(CH_2CH_2OCH_3)_2$ | CN | 625 | 79230 | 627 |
| 125 | " | " | $OCH_3$ | CN | H | $SO_2N(C_2H_5)-(CH_2)_3OCH_3$ | CN | 630 | 83330 | 630 |
| 126 | " | " | $OCH_3$ | CN | H | CN | $NO_2$ | 630 | 78220 | 631 |
| 127 | " | $N(CH_3)_2$ | H | Br | H | H | Br | 433 | 24290 | 440 |

Tabelle I (Fortsetzung)

| Farbstoff Nr. | $X_1$ | $Y_1$ | $Z_1$ | $R_3$ | $R_4$ | $R_1$ | $R_2$ | $\lambda_{max}^{CHCl_3}$ | $\varepsilon_{mol}$ | $\lambda_{max}^{Gel}$ |
|---|---|---|---|---|---|---|---|---|---|---|
| 128 | 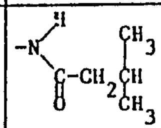 | $N(CH_3)_2$ | H | Br | H | $CH_2CH_2CO_2C_2H_5$ | Br | 431 | 24510 | 443 |
| 129 | " | " | H | Br | H | $C_4H_9$ | Br | 430 | 24380 | 441 |
| 130 | " | " | H | Br | H | $C_2H_5$ | Br | 426 | 22610 | 439 |
| 131 | " | " | H | CN | H | H | CN | 533 | 38050 | 534 |
| 132 | " | " | H | CN | H | CN | H | 527 | 49600 | 525 |
| 133 | " | " | H | H | $CO_2C_2H_5$ | CN | CN | 539 | 54000 | 538 |
| 134 | " | " | H | CN | H | $NO_2$ | CN | 620 | 72170 | 622 |
| 135 | " | " | H | CN | $CO_2C_2H_5$ | CN | CN | 607 | 58000 | 570 |
| 136 | 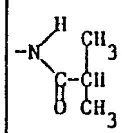 | $NHC_2H_4CN$ | H | Br | H | H | Br | 402 | 23010 | 420 |
| 137 | " | " | H | Br | H | $C_2H_5$ | Br | 402 | 24640 | 419 |
| 138 | " | " | H | Br | H | $CH_3$ | Br | 402 | 24730 | 419 |

Tabelle I (Fortsetzung)

| Farbstoff Nr. | $X_1$ | $Y_1$ | $Z_1$ | $R_3$ | $R_4$ | $R_1$ | $R_2$ | $\lambda_{max}^{CHCl_3}$ | $\varepsilon_{mol}$ | $\lambda_{max}^{Gel}$ |
|---|---|---|---|---|---|---|---|---|---|---|
| 139 | $NHCO(CH_2)_3CO_2C_2H_5$ | $N(C_2H_5)_2$ | $OCH_3$ | CN | H | H | CN | 592 | 52320 | 595 |
| 140 | " | " | | CN | H | CN | $NO_2$ | 632 | 83510 | 631 |
| 141 | $N(CH_3)COCH_3$ | $NHC_2H_4CN$ | $OCH_3$ | H | H | $CO_2CH_2CH(C_2H_5)C_4H_9$ | H | 423 | 27080 | 444 |
| 142 | $NHCO_2C_2H_5$ | $N(C_2H_5)_2$ | " | CN | H | $SO_2NH(CH_2)_3OCH_3$ | CN | 623 | 75340 | 624 |
| 143 | $NHCO_2C_4H_9$ | " | $OCH_3$ | CN | H | " | CN | 623 | 73610 | 620 |
| 144 | $N(CH_3)SO_2CH_3$ | $NHC_2H_4CN$ | $OCH_3$ | H | H | $CO_2CH_2CH(C_2H_5)C_4H_9$ | H | 434 | 26840 | 451 |
| 145 | $NHCOCH_3$ | $NHCH(CH_3)CH_2OCH_3$ | $OCH_3$ | $SO_2CH_3$ | H | $SO_2N(C_2H_5)_2$ | $SO_2CH_3$ | 567 | 39550 | 569 |
| 146 | " | $NHCH_2C(CH_3)_2NO_2$ | H | $CO_2C_2H_4OCH_3$ | H | H | H | 415 | 24560 | 432 |
| 147 | " | $NHCH(CH_3)CH_2CH(CH_3)_2$ | $OCH_3$ | $NO_2$ | H | CN | H | 556 | 44120 | 557 |
| 148 | " | $N(C_2H_5)_2$ | $OCH_3$ | H | H | $NO_2$ | H | 547 | 24410 | 552 |
| 149 | " | " | $OCH_3$ | $SO_2NHCH(CH_3)_2$ | H | $SO_2NHCH(CH_3)_2$ | H | 553 | 39390 | 547 |
| 150 | " | " | $OCH_3$ | CN | H | $SO_2N(C_2H_5)_2$ | $SO_2N(C_2H_5)_2$ | 623 | 44130 | 626 |
| 151 | " | " | $OCH_3$ | CN | H | " | CN | 626 | 113100 | 627 |
| 152 | " | " | $OCH_3$ | CN | H | $SO_2N(CH_2CH_2OCH_3)_2$ | CN | 624 | 71650 | 626 |
| 153 | $NHCOCH(CH_3)_2$ | $NHC_2H_4CN$ | H | $PO(OC_2H_5)_2$ | H | H | H | 419 | 17840 | 439 |

Tabelle I (Fortsetzung)

| Farb-Stoff Nr. | $X_1$ | $Y_1$ | $Z_1$ | $R_3$ | $R_4$ | $R_1$ | $R_2$ | $\lambda_{max}^{CHCl_3}$ | $\varepsilon_{mol}$ | $\lambda_{max}^{Gel}$ |
|---|---|---|---|---|---|---|---|---|---|---|
| 154 | 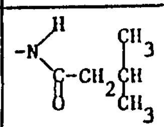 | $N(C_2H_5)_2$ | $OCH_3$ | H | Br | $OC_4H_9$ | CN | 531 | 34900 | 531 |
| 155 | " | $N(CH_3)_2$ | H | Br | H | $OCH_2CH_2CH(CH_3)_2$ | Br | 429 | 26400 | 418 |
| 156 | " | $NHCH(CH_3)CH_2OCH_3$ | H | CN | H | $NO_2$ | $CH_3$ | 551 | 38160 | 563 |
| 157 | 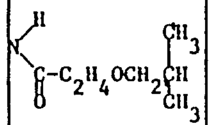 | " | $OCH_3$ | CN | H | H | CN | 567 | 44680 | 570 |
| 158 | 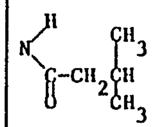 | $NHC_2H_4CN$ | H | Br | H | $CH_3$ | $CH_3$ | 390 | 20370 | 413 |
| 159 | $CH_3$ | $N(C_2H_5)C_2H_4O\overset{O}{\overset{\|}{C}}CH_3$ | H | H | H | $CO_2C_2H_5$ | H | 438 | 27770 | 451 |
| 160 | $CH_3$ | " | H | H | H | $SO_2N(C_2H_4OCH_3)_2$ | H | 440 | 27850 | 451 |
| 161 | $CH_3$ | " | H | Br | H | H | Br | 406 | 21180 | 413 |
| 162 | $OCH_3$ | $NHSO_2C_6H_4CH_3$ | $OCH_3$ | H | H | $CO_2C_2H_5$ | H | 417 | 16330 | 425 |
| 163 | OH | H | 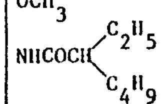 | H | H | $OC_2H_4OC_2H_4OCH_3$ | H | 403 | 10820 | 421 |

Tabelle I (Fortsetzung)

| Farb-Stoff Nr. | $X_1$ | $Y_1$ | $Z_1$ | $R_3$ | $R_4$ | $R_1$ | $R_2$ | $\lambda^{CHCl_3}_{max}$ | $\varepsilon_{mol}$ | $\lambda^{Gel}_{max}$ |
|---|---|---|---|---|---|---|---|---|---|---|
| 164 | OH | H | $NHCOCH(C_2H_5)C_4H_9$ | H | H | $C_4H_9$ | H | 408 | 6960 | 427 |
| 165 | OH | H | " | H | H | $OC_4H_9$ | H | 400 | 11280 | 422 |
| 166 | OH | H | $OCH_2CH(CH_3)_2$ | H | H | $OC_4H_9$ | H | 428 | 9720 | 431 |
| 167 | OH | H | " | H | $OC_2H_4OCH_3$ | $OC_2H_4OCH_3$ | H | 434 | 10860 | 438 |
| 168 | OH | H | $CH_2CO(C_2H_4O)_2OCH_3$ | H | H | $SO_2C_6H_4OH$ | H | 412 | 11620 | 407 |
| 169 | OH | H | $(OC_2H_4)_2OCH_3$ | H | H | $OC_4H_9$ | H | 420 | 9410 | 430 |
| 170 | OH | H | $CH_3$ | H | H | $NHCOCH_3$ | H | 400 | 13240 | 403 |
| 171 | OH | H | $C(CH_3)_2C_2H_5$ | H | H | $NHCOC(CH_3)=CH_2$ | H | 401 | 16110 | 405 |
| 172 | OH | H | " | H | H | $CO_2C_2H_5$ | H | 411 | 8700 | 410 |
| 173 | OH | H | " | H | H | $SO_2C_6H_{13}$ | H | 417 | 7400 | 412 |
| 174 | OH | H | " | H | $CO_2C_2H_5$ | H | $OCH_3$ | 405 | 10350 | 410 |
| 175 | | $NHCOCH_2CH(CH_3)_2$ | H | H | H | $OC_4H_9$ | H | 406 | 23080 | 400 |
| 176 | OH | " | $OCH_3$ | H | H | $NHCOCH_2CH(CH_3)_2$ | H | 452 | 21770 | 460 |

Tabelle I (Fortsetzung)

| Farbstoff Nr. | $X_1$ | $Y_1$ | $Z_1$ | $R_3$ | $R_4$ | $R_1$ | $R_2$ | $\lambda^{CHCl_3}_{max}$ | $\varepsilon_{mol}$ | $\lambda^{Gel}_{max}$ |
|---|---|---|---|---|---|---|---|---|---|---|
| 177 | OH | $NHCOCH_2CH(CH_2)_2$ | $OCH_3$ | H | H | $OCH_2CH(CH_3)_2$ | H | 434 | 21300 | 451 |
| 178 | OH | " | $OCH_3$ | H | H | $OCH_2CH(C_2H_5)C_4H_9$ | H | 444 | 21400 | 452 |
| 179 | OH | " | $OCH_3$ | H | H | $(OC_2H_4)_2OCH_3$ | H | 445 | 20900 | 449 |
| 180 | OH | $NHCOCH(C_2H_5)C_4H_9$ | $OCH_3$ | H | H | $OCH_2CH(CH_3)_2$ | H | 445 | 20300 | 451 |
| 181 | OH | " | $OCH_3$ | H | H | $OCH_2CH(C_2H_5)C_4H_9$ | H | 447 | 19800 | 451 |
| 182 | OH | $N(C_4H_9)COCH_3$ | $OCH_3$ | H | H | $OCH_2CH(CH_3)_2$ | H | 418 | 12400 | 423 |
| 183 | OH | " | $OCH_3$ | H | $OC_2H_5$ | $OC_2H_5$ | H | 436 | 14800 | 442 |
| 184 | OH | $NHCO(OC_2H_4)_2OCH_3$ | $OCH_3$ | H | H | $OCH_2CH(CH_3)_2$ | H | 444 | 21400 | 447 |
| 185 | OH | $NHPO(OC_4H_9)_2$ | $OCH_3$ | H | H | " | H | 444 | 20800 | 449 |
| 186 | OH | OH | $C_3H_7$ | H | H | $OC_4H_9$ | H | 396 | 21870 | 401 |
| 187 | OH | $OCH_3$ | $NHCOCH_2CH(CH_2)_2$ | H | H | $OCH_2CH(C_2H_5)C_4H_9$ | H | 429 | 15800 | 439 |
| 188 | OH | $OCH_3$ | $OCH_3$ | H | H | $OCH_2CH(CH_3)_2$ | H | 443 | 17400 | 447 |
| 189 | OH | $OCH_3$ | $C_3H_7$ | H | H | $OC_4H_9$ | H | 397 | 19800 | 400 |
| 190 | OH | $OC_3H_7$ | $CH_3$ | H | H | $SO_2C_6H_{13}$ | H | 405 | 17100 | 416 |

Tabelle I (Fortsetzung)

| Farbstoff Nr. | $X_1$ | $Y_1$ | $Z_1$ | $R_3$ | $R_4$ | $R_1$ | $R_2$ | $\lambda^{CHCl_3}_{max}$ | $\varepsilon_{mol}$ | $\lambda^{Gel}_{max}$ |
|---|---|---|---|---|---|---|---|---|---|---|
| 191 | OH | $OC_3H_7$ | $CH_3$ | H | H | $OCH_2CH(CH_3)_2$ | H | 400 | 19700 | 403 |
| 192 | OH | " | $CH_3$ | H | H | $C_4H_9$ | H | 396 | 16400 | 400 |
| 193 | OH | " | $CH_3$ | $SO_2CH_2CH(CH_3)_2$ | H | $SO_2CH_2CH(CH_3)_2$ | H | 462 | 10400 | 452 |
| 194 | OH | " | $CH_3$ | Br | H | $SO_2C_6H_{13}$ | Br | 410 | 12900 | 410 |
| 195 | OH | " | $CH_3$ | $OCH_3$ | H | $OCH_2CH(CH_3)_2$ | H | 436 | 19600 | 439 |

Tabelle I (Fortsetzung)

| Farbstoff Nr. | $X_1$ | $Y_1$ | $Z_1$ | $R_3$ | $R_4$ | $R_1$ | $R_2$ | $\lambda_{max}^{CHCl_3}$ | $\varepsilon_{mol}$ | $\lambda_{max}^{Gel}$ |
|---|---|---|---|---|---|---|---|---|---|---|
| 196 | 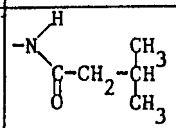 | $NHC_2H_4CN$ | H | H | $CO_2C_2H_5$ | H | H | 411 | 28270 | 441 |
| 197 | " | " | H | Br | $OC_2H_5$ | $CH_3$ | Br | 403 | 21140 | 411 |
| 198 | 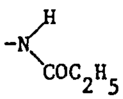 | 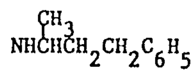 | $OCH_3$ | $CH_3SO_2$ | H | $NO_2$ | $NO_2$ | 622 | 46750 | 632 |
| 199 | " | $N(C_2H_5)_2$ | $OC_2H_4OCH_3$ | $CF_3$ | H | $NO_2$ | CN | 651 | 82350 | 655 |
| 200 | " | " | " | CN | $CO_2CH_3$ | $NO_2$ | CN | 661 | 98310 | 658 |
| 201 | 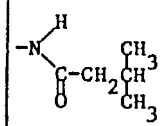 | " | $OCH_3$ | CN | H | $CH{=}C(CN)_2$ | CN | 640 | 97500 | 639 |
| 202 | " | " | $OCH_3$ | CN | H | $NO_2$ | $NO_2$ | 655 | 89270 | 654 |
| 203 | " | $N(CH_3)_2$ | H | CN | H | $SO_2N(C_2H_5)_2$ | $SO_2N(C_2H_5)_2$ | 557 | 41960 | 561 |
| 204 | 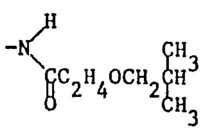 | $N(C_2H_5)_2$ | $OCH_3$ | CN | H | CN | $NO_2$ | 631 | 79060 | 630 |
| 205 | " | " | $OCH_3$ | CN | H | $NO_2$ | CN | 655 | 89070 | 656 |

Tabelle I (Fortsetzung)

| Farbstoff-Nr. | $X_1$ | $Y_1$ | $Z_1$ | $R_3$ | $R_4$ | $R_1$ | $R_2$ | $\lambda_{max}^{CHCl_3}$ | $\varepsilon_{mol}$ | $\lambda_{max}^{Gel}$ |
|---|---|---|---|---|---|---|---|---|---|---|
| 206 | 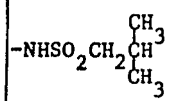 | 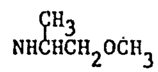 | $OCH_3$ | CN | H | H | CN | 552 | 37690 | 546 |
| 207 | $-NHCOCH_3$ | $N(C_2H_5)_2$ | $OCH_3$ | Br | H | $NO_2$ | $NO_2$ | 627 | 48900 | 625 |
| 208 | " | " | $OCH_3$ | $CF_3$ | H | $NO_2$ | CN | 649 | 72400 | 652 |
| 209 | " | " | $OCH_3$ | H | CN | H | CN | 559 | 36000 | 554 |
| 210 | OH | $NHCO(OC_2H_4)_2OCH_3$ | $OCH_3$ | H | H | 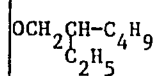 | H | 444 | 21400 | 449 |
| 211 | OH | $N(C_3H_7)_2$ | $OCH_3$ | CN | H | $C_4H_9$ | CN | 565 | 31400 | 566 |
| 212 | $NHCOC_2H_5$ | $N(C_2H_5)_2$ | $OC_2H_4OCH_3$ | CN | H | $NO_2$ | $SO_2CH_3$ | 652 | 96060 | 660 |
| 213 | 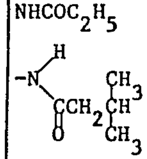 | $N(C_2H_5)_2$ | $OC_2H_4OCH_3$ | CN | H | $NO_2$ | $SO_2CH_3$ | 652 | 78860 | 659 |
| 214 | $NHCOC_2H_5$ | 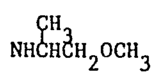 | $OC_2H_4OCH_3$ | CN | H | $CH_3$ | CN | 559 | 39410 | 535 |
| 215 | 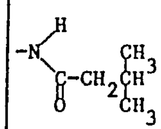 | " | $OCH_3$ | $SO_2N(C_2H_5)_2$ | H | $SO_2CH_3$ | $SO_2N(C_2H_5)_2$ | 549 | 26450 | 545 |

Tabelle I (Fortsetzung)

| Farbstoff-Nr. | $X_1$ | $Y_1$ | $Z_1$ | $R_1$ | $R_2$ | $R_3$ | $R_4$ | $\lambda_{max}^{CHCl_3}$ | $\varepsilon_{mol}$ | $\lambda_{max}^{Gel}$ |
|---|---|---|---|---|---|---|---|---|---|---|
| 216 | $NHCOCH_2CH(CH_3)_2$ | $N(CH_3)_2$ | H | $C(CH_3)_3$ | H | H | H | 453 | 30700 | 458 |
| 217 | $NHCOCH_2CH(CH_3)_2$ | $N(CH_3)_2$ | H | $O(CH_2)_3CH_3$ | H | H | H | 458 | 31600 | 460 |
| 218 | $CH_3$ | $N(C_2H_5)CH_2CH_2OCOCH_3$ | H | Cl | H | H | H | 421 | 27400 | 430 |
| 219 | $NHCOCH_2CH(CH_3)_2$ | $NHC_2H_4CN$ | H | Br | Br | Br | H | 400 | 21500 | 429 |
| 220 | $NHCOCH_2CH(CH_3)_2$ | $NHC_2H_4CN$ | H | Cl | Br | Br | H | 412 | 23800 | 435 |
| 221 | $NHCOCH(CH_3)_2$ | $NHC_2H_4CN$ | H | H | Br | Br | H | 402 | 23000 | 419 |
| 222 | $NHCOCH_2CH(CH_3)_2$ | $N(CH_3)_2$ | H | $CH_3$ | Br | Br | H | 422 | 20800 | 440 |
| 223 | $NHCOCH_2CH(CH_3)_2$ | $N(CH_3)_2$ | H | Cl | Br | Br | H | 439 | 23700 | 453 |
| 224 | $NHCOCH_2CH(CH_3)_2$ | $N(CH_3)_2$ | H | $C_2H_5$ | Br | Br | H | 426 | 22600 | 437 |
| 225 | $NHCOCH_2CH(CH_3)_2$ | $N(CH_3)_2$ | H | $(CH_2)_3CH_3$ | Br | Br | H | 430 | 24400 | 438 |
| 226 | $NHCOCH_2CH(CH_3)_2$ | $N(CH_3)_2$ | H | $OCH_2CH_2CH(CH_3)_2$ | Br | Br | H | 429 | 26400 | 430 |
| 227 | $NHCOCH_2CH(CH_3)_2$ | $NHC_2H_4CN$ | H | $CH_3$ | $CH_3$ | Br | H | 390 | 20400 | 410 |
| 228 | $NHCOCH_2CH(CH_3)_2$ | $NHC_2H_4CN$ | H | Br | $CH_3$ | $CH_3$ | H | 384 | 21300 | 409 |
| 229 | $NHCOCH_2CH(CH_3)_2$ | $NHC_2H_4CN$ | H | $CH_2CH(CH_3)_2$ | Br | Br | H | 403 | 23200 | 422 |
| 230 | $NHCOCH_2CH(CH_3)_2$ | $NHC_2H_4CN$ | H | H | Br | H | H | 416 | 28800 | 433 |

Tabelle I (Fortsetzung)

| Farbstoff-Nr. | $X_1$ | $Y_1$ | $Z_1$ | $R_1$ | $R_2$ | $R_3$ | $R_4$ | $CHCl_3$ max | mol | Gel max |
|---|---|---|---|---|---|---|---|---|---|---|
| 231 | $NHCOCH_2CH(CH_3)_2$ | $NHC_2H_4CN$ | H | $CH_3$ | Br | Br | $OC_2H_5$ | 403 | 21100 | 406 |
| 232 | $NHCOCH_2CH(CH_3)_2$ | $NHC_2H_4CN$ | H | $CH_3$ | Br | Br | $CO_2H_4CH(CH_3)_2$ | 401 | 23700 | 410 |
| 233 | $NHCOCH_2CH(CH_3)_2$ | $NHC_2H_4CN$ | H | $CH_3$ | Br | Br | $OCH_3$ | 402 | 22200 | 406 |
| 234 | $NHCOCH_2CH(CH_3)_2$ | $NHC_2H_4CN$ | H | H | H | H | $CO_2CH_2CH(CH_3)_2$ | 412 | 26000 | 455 |
| 235 | $NHCOCH_2CH(CH_3)_2$ | $NHC_2H_4CN$ | H | H | $CON(C_2H_4OCH_3)_2$ | H | H | 410 | 24270 | 420 |
| 236 | OH | $NHCOCH_3$ | $OCH_3$ | $O(C_2H_4O)_2CH_3$ | H | H | H | 441 | 20400 | 448 |
| 237 | OH | H | $OCH_2CH(CH_3)_2$ | $OC_2H_4OCH_3$ | H | H | $OC_2H_4OCH_3$ | 434 | 10900 | 438 |
| 238 | OH | $N{<}^{COCH_3}_{C_2H_4CN}$ | $OCH_3$ | $CH_2CO_2CH_2CH(CH_3)_2$ | H | H | H | 420 | 9500 | 423 |
| 239 | OH | $N{<}^{COCH_3}_{(CH_2)_3CH_3}$ | $OCH_3$ | $OC_2H_4OCH_3$ | H | H | $OC_2H_4OCH_3$ | 436 | 14800 | 443 |
| 240 | OH | $OCH_3$ | $NHCOCH_2CH(CH_3)_2$ | $OCH_2CH(CH_3)_2$ | H | H | H | 429 | 15800 | 439 |
| 241 | OH | $OCH_2CH_2CH_3$ | $CH_3$ | $OCH_2CH(CH_3)_2$ | $OCH_3$ | H | H | 436 | 19600 | 439 |
| 242 | $NHSO_2C_6H_{13}$ | $N(C_2H_5)_2$ | $OCH_3$ | CN | CN | CN | H | 624 | 77660 | 625 |
| 243 | $CH_3$ | $N(C_2H_5)C_2H_4OCOCH_3$ | H | $SO_2N(C_2H_4OCH_3)_2$ | CN | CN | H | 542 | 42500 | 550 |

Tabelle I (Fortsetzung)

| Farbstoff-Nr. | $X_1$ | $Y_1$ | $Z_1$ | $R_1$ | $R_2$ | $R_3$ | $R_4$ | $\lambda_{max}^{CHCl_3}$ | $\varepsilon_{mol}$ | $\lambda_{max}^{Gel}$ |
|---|---|---|---|---|---|---|---|---|---|---|
| 244 | $NHCOCH_2CH(CH_3)_2$ | $N(C_2H_5)_2$ | $OCH_3$ | $NO_2$ | CN | CN | H | 657 | 95220 | 656 |
| 245 | $NHCOOC_2H_5$ | $N(C_2H_5)_2$ | $OCH_3$ | $SO_2NHC_3H_6OCH_3$ | CN | CN | H | 623 | 75340 | 624 |
| 246 | $NHCOCH_2CH(CH_3)_2$ | $NHCH(CH_3)CH_2OCH_3$ | $OCH_3$ | $CH_2$ | CN | CN | H | 564 | 43110 | 567 |
| 247 | $NHCO(CH_2)_3COOC_2H_5$ | $N(C_2H_5)_2$ | $OCH_3$ | $NO_2$ | CN | CN | H | 654 | 97420 | 655 |
| 248 | $NHCOCH_2CH(CH_3)_2$ | $N(C_2H_5)_2$ | $OCH_3$ | $NO_2$ | $NO_2$ | CN | H | 655 | 89270 | 654 |
| 249 | $NHCOCH_3$ | $NHCH(CH_3)CH_2CH(CH_3)_3$ | $OCH_3$ | $CH_3$ | CN | CN | H | 567 | 45460 | 571 |
| 250 | $NHCOCH_2CH(CH_3)_2$ | $N(C_2H_5)_2$ | $OCH_3$ | Br | CN | CN | $NO_2$ | 630 | 81910 | 633 |
| 251 | $NHCOCH_2CH(CH_3)_2$ | $N(C_2H_5)_2$ | $OCH_3$ | $NO_2$ | CN | CN | $CH_3$ | 643 | 84960 | 641 |
| 252 | $NHCOCH_2CH(CH_3)_2$ | $NHCH(CH_3)CH_2CH(CH_3)_2$ | $OCH_3$ | $OC_2H_4CH(CH_3)_2$ | CN | CN | H | 566 | 43360 | 570 |
| 253 | $NHCOC_2H_5$ | $NHCH(CH_3)CH_2$ | $OC_2H_4OCH_3$ | H | CN | CN | H | 568 | 42660 | 564 |
| 254 | $NHCOCH_2CH(CH_3)_2$ | $N(C_4H_9)_2$ | $OCH_3$ | $NO_2$ | CN | CN | H | 659 | 92480 | 659 |
| 255 | $NHCOCH_2CH(CH_3)_2$ | $NHCH(CH_3)CH_2OCH_3$ | $OCH_3$ | $CH_3$ | CN | CN | $OCH_3$ | 568 | 49840 | 570 |
| 256 | $NHCOC_2H_5$ | $N(C_2H_5)_2$ | $OC_2H_4OCH_3$ | $NO_2$ | CN | CN | $CO_2CH_3$ | 663 | 92490 | 663 |
| 257 | $NHCOC_2H_5$ | $N(C_2H_5)_2$ | $OCH_3$ | $SO_2NHC_3H_6OCH_3$ | CN | $NO_2$ | H | 623 | 61370 | 622 |

Tabelle I (Fortsetzung)

| Farbstoff-Nr. | $X_1$ | $Y_1$ | $Z_1$ | $R_1$ | $R_2$ | $R_3$ | $R_4$ | $CHCl_3$ $\lambda_{max}$ | $\varepsilon_{mol}$ | Gel $\lambda_{max}$ |
|---|---|---|---|---|---|---|---|---|---|---|
| 258 | $NHCOCH_2CH(CH_3)_2$ | $N(C_2H_5)_2$ | $OC_2H_5$ | $NO_2$ | CN | CN | H | 659 | 97310 | 658 |
| 259 | $NHCOC_2H_4OC_2H_5$ | $N(C_2H_5)_2$ | $OCH_3$ | $NO_2$ | CN | CN | $CO_2C_2H_4OCH_3$ | 660 | 99710 | 662 |
| 260 | $NHCOCH_3$ | $N(C_2H_5)_2$ | $OCH_2$ | $NO_2$ | $CF_3$ | CN | H | 649 | 73900 | 652 |
| 261 | $NHCOC_2H_5$ | $NHCH(CH_3)CH_2OCH_3$ | $OC_2H_4OCH_3$ | $NO_2$ | CN | CN | $CO_2CH_3$ | 634 | 73490 | 638 |
| 262 | $NHCOC_2H_5$ | $N(C_3H_7)_2$ | $OC_2H_4OCH_3$ | $NO_2$ | $SO_2CH_3$ | CN | H | 651 | 68690 | 657 |
| 263 | $NHCOCH_2CH(CH_3)_2$ | $N(C_2H_5)_2$ | $OC_2H_5$ | $SO_2CH_2CH(CH_3)_2$ | CN | CN | $NO_2$ | 636 | 80970 | 637 |
| 264 | $NHCOCH_3$ | $N(C_2H_5)_2$ | $OCH_3$ | $NO_2$ | Cl | $NO_2$ | H | 628 | 50400 | 621 |
| 265 | $NHCOCH_3$ | $NHCH(CH_3)CH_2OCH_3$ | $OCH_3$ | $NO_2$ | $NO_2$ | $NO_2$ | H | 615 | 48130 | 615 |

Anwendungsbeispiele

Beispiel 8

34 mg Farbstoff der Formel

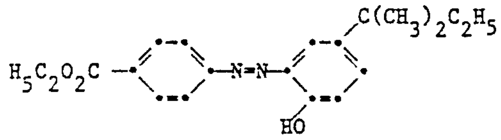

werden in 2 ml eines Gemisches von Aethylacetat und Trikresylphosphat (Mischungsverhältnis 9 : 1) gelöst und zu einer Mischung aus 6,6 ml 6 %iger wässeriger Gelatinelösung 0,9 ml destilliertem Wasser und 0,5 ml einer 8 %igen Lösung des Natriumsalzes der Dibutylnaphthalinsulfonsäure gegeben und mit Ultraschall emulgiert.

2,5 ml der erhaltenen Emulsion werden mit 5 ml Wasser, 2,5 ml einer nicht sensibilisierten Gelatinesilberbromidjodidemulsion, die etwa 22 g Silber/kg Gelatine enthält, und 1 ml einer 1 %igen Lösung eines Härters der Formel

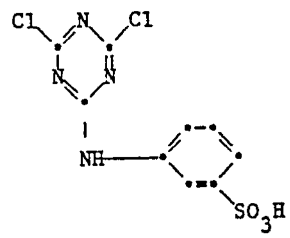

vermischt. Dieses Gemisch wird auf einen opaken Triacetatträger (Format 13 × 18 cm) gegossen und getrocknet. Hinter einem Stufenkeil wird das so erhaltene lichtempfindliche Material belichtet und bei 24 °C wie folgt verarbeitet :

| | |
|---|---|
| Entwicklung | 6 Minuten |
| Wässerung | 4 Minuten |
| Silber- und Farbbleichung | 6 Minuten |
| Wässerung | 2 Minuten |
| Fixierung | 8 Minuten |
| Wässerung | 6 Minuten |
| Trocknung | |

Entwickler- und Fixierbäder sind übliche Bäder wie sie in der Schwarzweissphotographie verwendet werden. Das Silberfarbbleichbad besitzt pro Liter Lösung folgende Zusammensetzung :

| | |
|---|---|
| Sulfaminsäure | 100 g |
| m-Nitrobenzolsulfonsäure | 10 g |
| Kaliumjodid | 6 g |
| 2,3,6-Trimethylchinoxalin | 2 g |
| 4-Mercaptobuttersäure | 1 g |

Man erhält einen gegenläufigen gelben Keil, der an der ursprünglich höchsten Silberdichte vollständig auf weiss gebleicht ist. Das Bild zeichnet sich durch hohe Brillanz und Lichtechtheit aus.

Beispiel 9

25 mg des Farbstoffes der Formel

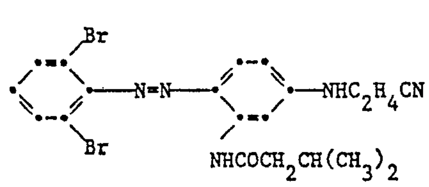

werden gemäss obigem Beispiel in lichtempfindliches photographisches Material eingearbeitet.
Nach der Belichtung wird bei 30 °C wie folgt verarbeitet.

| | |
|---|---|
| Entwicklung | 3 Minuten |
| Wässerung | 1 Minute |
| Silber- und Farbbleichung | 5 Minuten |
| Wässerung | 1 Minute |
| Fixierung | 4 Minuten |
| Wässerung | 6 Minuten |
| Trocknung | |

Die verwendeten Bäder besitzen die obengenannte Zusammensetzung. Man erhält einen brillanten, lichtechten gelben Keil, der an der Stelle maximaler Silberdichte vollständig auf weiss gebleicht ist.

Beispiel 10

14 mg Farbstoff der Formel

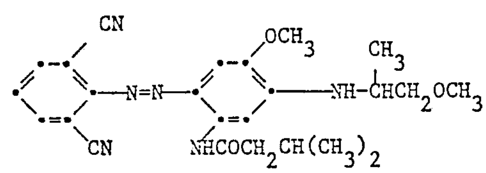

werden in 2 ml eines Gemisches (Mischungsverhältnis 9 : 1) von Aethylacetat und Tris(isopropylphenyl)-phosphat (Reofos 65, Warenzeichen) gelöst, dann mit 7 ml 5 %ige Gelatinelösung und 0,5 ml 8 %iger wässrigen Lösung des Natriumsalzes der Dibutylnaphthalinsulfonsäure zu einer homogenen Mischung emulgiert. Zu 2,5 ml dieser Farbstoffemulsion gibt man 5 ml Wasser, 98 ml einer unsensibilisierten Gelatinesilberbromoiodidemulsion, die ca. 22 g Silber pro kg Gelatine enthält, 1,7 ml 4 %ige Gelatinelösung und 1 ml 1 %iger Härterlösung. Dieses Gemisch wird auf eine opake Triacetatfolie von 13 × 18 cm gegossen und getrocknet. Das so erhaltene lichtempfindliche Material wird hinter einem Stufenkeil mit weissem Licht belichtet und bei 30 °C wie folgt verarbeitet :

| | |
|---|---|
| Entwicklung | 3 Minuten |
| Wässerung | 1 Minute |
| Silber- und Farbbleichung | 5 Minuten |
| Wässerung | 1 Minute |
| Fixierung | 4 Minuten |
| Wässerung | 6 Minuten |
| Trocknung | |

Das Entwicklerbad hat pro Liter Lösung folgende Zusammensetzung :

| | |
|---|---|
| Natriumsulfit | 50 g |
| 1-Phenyl-3-pyrazolidon | 0,2 g |
| Hydrochinon | 6 g |
| Natriumcarbonat | 35 g |
| Kaliumbromid | 4 g |
| Benztriazol | 0,3 g |

Das Silberfarbbleichbad hat pro Liter Lösung die Zusammensetzung :

| | |
|---|---|
| konzentrierter Schwefelsäure | 28 ml |
| m-Nitrobenzolsulfonsäure (Natriumsalz) | 10 g |
| Kaliumjodid | 6 g |
| Bis-(2-cyanoäthyl)-(2-sulfoäthyl)-phosphin (Natriumsalz) | 3 g |
| 2,3-Dimethylchinoxalin | 1,5 g |

Das Fixierbad enthält pro Liter Lösung :

| | |
|---|---|
| Natriumthiosulfat | 200 g |
| Natriummetabisulfit | 20 g |

Man erhält einen brillanten, lichtechten Purpurkeil, der an den Stellen der ursprünglich grössten Silberdichte vollständig auf Weiss gebleicht ist.

Beispiel 11

50 mg Farbstoff der Formel

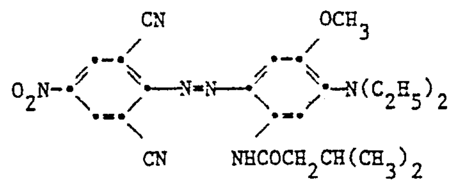

werden in 2 ml Aethylenchlorid und 0,2 ml Trikresulphosphat gelöst. Man gibt 7 ml 5 %ige Gelatinelösung, 0,5 ml einer 8 %-iger wässrigen Lösung des Natriumsalzes der Dibutylnaphthalinsulfonsäure zu und emulgiert bis dieses Gemisch homogen ist. Die Farbstoffemulsion wird mit 7 ml 4 %-iger Gelatinelösung, 16 ml Wasser, 3 ml einer stabilisierten Silberhalogenidemulsion, die 24 g Silber pro kg Gelatine enthält, und 4 ml einer 1 %-igen Härterlösung versetzt. Diese Emulsion wird auf 0,1 $m^2$ eines opaken Trägers gegossen und getrocknet.

Ein auf 3,5 × 18 cm geschnittenen Streifen wird unter einem Stufenkeil durch einen Blaufilter (Kodak 26 + 47B) 1 Sekunde lang mit weissem Licht (200 Lux/$cm^2$) bestrahlt. Der Streifen wird dann bei 24 °C wie folgt verarbeitet :

| | |
|---|---|
| Entwicklerbad | 6 Minuten |
| Wässerung | 4 Minuten |
| Silberfarbbleichbad | 6 Minuten |
| Wässerung | 2 Minuten |
| Fixierbad | 8 Minuten |
| Wässerung | 6 Minuten |
| Trocknung | |

Das Entwicklerbad enthält pro Liter Lösung folgende Komponenten :

| | |
|---|---|
| Aethylendiamintetraessigsäure (Natriumsalz) | 2 g |
| Natriumsulfit | 60 g |
| Natriumcarbonat | 25 g |
| Kaliumhydroxyd (85 %) | 7 g |
| 1-Phenyl-3-pyrazolidon | 1 g |
| Hydrochinon | 16 g |
| Natriumthiosulfat | 70 g |
| 3,3'-Dithiodibuttersäure | 2,4 g |

Als Silberfarbbleichbad wird eine Lösung verwendet, die pro Liter folgende Komponenten enthält :

| | |
|---|---|
| konzentrierte Schwefelsäure | 28 ml |
| Natriumiodid | 9 g |
| 4-Nitrophenol-2-sulfonsäure (Dinatriumsalz) | 6 g |
| 6-Methoxy-2,3-dimethylchinoxalin Bis-(2-cyanäthyl)-(2-sulfoäthyl)-phosphin-(Natriumsalz) | 3 g |

Ferner wird ein übliches Fixierbad, das pro Liter-Lösung 200 g Natriumthiosulfat enthält, verwendet.

Man erhält einen brillanten, lichtechten Blaugrünkeil, der an der Stelle der ursprünglich grössten Silberdichte vollständig auf Weiss gebleicht ist.

Analog können auch die übrigen Farbstoffe der Tabelle I in das erfindungsgemässe farbphotographische Material eingearbeitet werden.

**Ansprüche**

1. Farbphotographisches Aufzeichnungsmaterial für das Silberfarbbleichverfahren, das in mindestens einer Silberhalogenidemulsionsschicht oder in einer an die Silberhalogenidemulsionsschicht angrenzenden Kolloidschicht mindestens einen diffusionsfesten, bleichbaren und öllöslichen Monoazofarbstoff enthält, dadurch gekennzeichnet, dass der Monoazofarbstoff der Formel

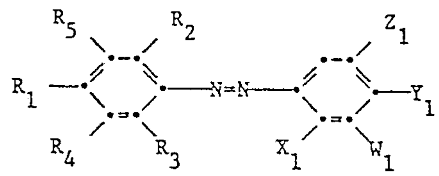 (1)

entspricht, worin

$R_1$ Wasserstoff, gegebenenfalls substituiertes Alkyl mit 1 bis 18 Kohlenstoffatomen, gegebenenfalls substituiertes Alkoxy mit 1 bis 16 Kohlenstoffatomen, gegebenenfalls substituiertes Alkenyl mit 2 bis 4 Kohlenstoffatomen, gegebenenfalls substituiertes aliphatisches Acyl mit 2 bis 5 Kohlenstoffatomen, gegebenenfalls substituiertes Benzoyl, gegebenenfalls substituiertes Carbalkoxy mit 2 bis 20 Kohlenstoffatomen, $—NV_1COU_1$, worin $V_1$ Wasserstoff oder Alkyl mit 1 bis 4 Kohlenstoffatomen und $U_1$ gegebenenfalls substituiertes Alkyl mit 1 bis 12 Kohlenstoffatomen oder gegebenenfalls substituiertes Alkenyl mit 2 bis 4 Kohlenstoffatomen ist; Carbonamido oder Sulfonamido, N-Alkyl- oder N,N-dialkylsubstituiertes Carbonamido oder Sulfonamido, wobei die Alkylteile je 1 bis 12 Kohlenstoffatome enthalten und gegebenenfalls weiter substituiert sind; gegebenenfalls substituiertes Alkylsulfon mit 1 bis 12 Kohlenstoffatomen, gegebenenfalls substituiertes Arylsulfon, gegebenenfalls substituiertes Aryloxy oder gegebenenfalls substituierter Arylsulfonsäureester, ferner Hydroxyl, Cyano, Nitro oder Halogen,

$R_2$ Wasserstoff, gegebenenfalls substituiertes Alkyl mit 1 bis 12 Kohlenstoffatomen, gegebenenfalls substituiertes Alkoxy mit 1 bis 6 Kohlenstoffatomen, gegebenenfalls substituiertes 1 bis 6 Kohlenstoffatomen, gegebenenfalls substituiertes Carbalkoxy mit 2 bis 5 Kohlenstoffatomen, N-alkyl- oder N,N-dialkylsubstituiertes Sulfonamido oder Carbonamid, wobei die Alkylreste je 1 bis 8 Kohlenstoffatome enthalten und gegebenenfalls substituiert sind; gegebenenfalls substituiertes Alkylsulfon mit 1 bis 6 Kohlenstoffatomen, gegebenenfalls substituiertes Arylsulfon oder gegebenenfalls substituiertes Aryloxy, ferner Cyano, Nitro oder Halogen,

$R_3$ Wasserstoff, gegebenenfalls substituiertes Alkyl oder Alkoxy mit je 1 bis 4 Kohlenstoffatomen, gegebenenfalls substituiertes Phenoxy, N-alkyl- oder N,N-dialkylsubstituiertes Sulfonamido oder Carbonamido, wobei die Alkylteile je 1 bis 6 Kohlenstoffatome enthalten und gegebenenfalls substituiert sind; gegebenenfalls substituiertes Alkylsulfon mit 1 bis 4 Kohlenstoffatomen, gegebenenfalls substituierter Phenylsulfonsäureester, Cyano, Nitro, Halogen, gegebenenfalls substituiertes Carbalkoxy mit 1 bis 16 Kohlenstoffatomen, $—P(O)(OT^1)_2$, worin $T^1$ Alkyl mit 1 bis 4 Kohlenstoffatomen ist,

$R_4$ Wasserstoff, gegebenenfalls substituiertes Alkyl mit 1 bis 4 Kohlenstoffatomen, gegebenenfalls substituiertes Alkoxy mit 1 bis 6 Kohlenstoffatomen, gegebenenfalls substituiertes Carbalkoxy mit 2 bis 16 Kohlenstoffatomen, N-alkyl- oder N,N-dialkylsubstituiertes Sulfonamido oder Carbonamido, wobei die Alkylteile je 1 bis 12 Kohlenstoffatome enthalten, und gegebenenfalls substituiert sind, $—NQ_1COT_1$, worin $Q_1$ Wasserstoff oder Alkyl mit 1 oder 2 Kohlenstoffatomen und $T_1$ gegebenenfalls substituiertes Alkyl mit 1 bis 4 Kohlenstoffatomen ist; gegebenenfalls substituiertes Alkylsulfon mit 1 bis 12 Kohlenstoffatomen oder gegebenenfalls substituiertes Arylsulfon, ferner Hydroxyl, Cyano, Nitro oder Halogen,

$R_5$ Wasserstoff, gegebenenfalls substituiertes Alkyl mit 1 bis 4 Kohlenstoffatomen oder gegebenenfalls substituiertes Carbalkoxy mit 2 bis 13 Kohlenstoffatomen,

$X_1$ Wasserstoff, gegebenenfalls substituiertes Alkyl oder Alkoxy mit 1 bis 6 Kohlenstoffatomen, $—NL_1COM_1$, worin $L_1$ Wasserstoff oder gegebenenfalls substituiertes Alkyl mit 1 bis 4 Kohlenstoffatomen und $M_1$ gegebenenfalls substituiertes Alkyl oder Alkoxy mit 1 bis 24 Kohlenstoffatomen ist; gegebenenfalls substituiertes Alkylsulfonylamino mit 1 bis 25 Kohlenstoffatomen oder Hydroxyl,

$Y_1$ Wasserstoff, gegebenenfalls substituiertes Alkyl mit 1 bis 6 Kohlenstoffatomen, gegebenenfalls substituiertes Alkoxy mit 1 bis 12 Kohlenstoffatomen, gegebenenfalls substituiertes Carbalkoxy mit 2 bis 5 Kohlenstoffatomen, N-alkyl- oder N,N-dialkylsubstituiertes Amino, wobei die Alkylteile je 1 bis 6 Kohlenstoffatome enthalten und gegebenenfalls substituiert sind, gegebenenfalls substituiertes Arylsulfonylamino, $—NE_1COG_1$, worin $E_1$ Wasserstoff oder gegebenenfalls substituiertes Alkyl mit 1 bis 8 Kohlenstoffatomen und $G_1$ gegebenenfalls substituiertes Alkyl mit 1 bis 12 oder gegebenenfalls substituiertes Alkoxy mit 1 bis 4 Kohlenstoffatomen ist; $—NE_1P(O)(OG^1)_2$, worin $E_1$ die oben angegebene Bedeutung hat und $G^1$ Alkyl mit 1 bis 12 Kohlenstoffatomen ist; Halogen oder Hydroxyl,

$Z_1$ Wasserstoff, gegebenenfalls substituiertes Alkyl mit 1 bis 12 Kohlenstoffatomen, gegebenenfalls substituiertes Alkoxy mit 1 bis 6 Kohlenstoffatomen, $—NA_1COD_1$, worin $A_1$ Wasserstoff oder gegebenenfalls substituiertes Alkyl mit 1 bis 8 Kohlenstoffatomen und $D_1$ gegebenenfalls substituiertes Alkyl mit 1 bis 18 Kohlenstoffatomen ist; gegebenenfalls substituiertes Acyl mit 2 bis 9 Kohlenstoffatomen, gegebenenfalls substituiertes Carbalkoxy mit 2 bis 19 Kohlenstoffatomen, gegebenenfalls substituiertes Alkylsulfonylamino mit 1 bis 6 Kohlenstoffatomen, Halogen oder diejenigen Atome bedeutet, um zusammen mit $Y_1$ einen gegebenenfalls substituiertes 5- oder 6-gliedrigen, gesättigten oder ungesättigten, gegebenenfalls ein oder 2 Heteroatome enthaltenden Ring zu bilden und

$W_1$ Wasserstoff, gegebenenfalls substituiertes Alkyl oder Alkoxy mit je 1 bis 4 Kohlenstoffatomen oder Halogen bedeutet.

2. Farbphotographisches Aufzeichnungsmaterial nach Anspruch 1, dadurch gekennzeichnet, dass es einen Farbstoff der Formel

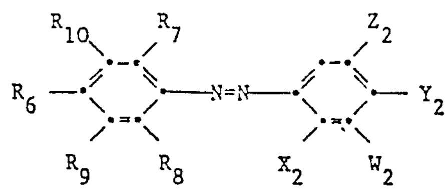

(2)

enthält, worin

$R_6$ Wasserstoff, gegebenenfalls substituiertes Alkyl mit 1 bis 12 Kohlenstoffatomen, gegebenenfalls substituiertes Alkoxy mit 1 bis 16 Kohlenstoffatomen, gegebenenfalls substituiertes Alkenyl mit 2 bis 4 Kohlenstoffatomen, gegebenenfalls substituiertes aliphatisches Acyl mit 2 oder 3 Kohlenstoffatomen, gegebenenfalls substituiertes Benzoyl, gegebenenfalls substituiertes Carbalkoxy mit 2 bis 16 Kohlenstoffatomen, $—NV_2COU_1$, worin $V_2$ Wasserstoff oder Alkyl mit 1 oder 2 Kohlenstoffatomen und $U_1$ die in Anspruch 1 angegebene Bedeutung hat ; Carbonamido oder Sulfonamido, N-Alkyl- oder N,N-dialkylsubstituiertes Carbonamido oder Sulfonamido, wobei die Alkylteile je 1 bis 10 Kohlenstoffatome enthalten und gegebenenfalls weiter substituiert sind ; gegebenenfalls substituiertes Alkylsulfon mit 1 bis 8 Kohlenstoffatomen, gegebenenfalls substituiertes Phenylsulfon, gegebenenfalls substituiertes Phenoxy oder gegebenenfalls substituierter Phenylsulfonsäureester, ferner Hydroxyl, Cyano, Nitro oder Halogen.

$R_7$ Wasserstoff, gegebenenfalls substituiertes Alkyl mit 1 bis 8 Kohlenstoffatomen, gegebenenfalls substituiertes Alkoxy mit 1 bis 6 Kohlenstoffatomen, gegebenenfalls substituiertes Carbalkoxy mit 2 oder 3 Kohlenstoffatomen, N-alkyl- oder N,N-dialky-substituiertes Sulfonamido oder Carbonamido, wobei die Alkylteile je 1 bis 8 Kohlenstoffatome enthalten und gegebenenfalls substituiert sind ; gegebenenfalls substituiertes Alkylsulfon mit 1 bis 6 Kohlenstoffatomen, gegebenenfalls substituiertes Phenylsulfon oder gegebenenfalls substituiertes Phenoxy, ferner Cyano, Nitro oder Halogen,

$R_8$ Wasserstoff, Alkyl oder Alkoxy mit je 1 bis 4 Kohlenstoffatomen, gegebenenfalls substituiertes Phenoxy, N-alkyl oder N,N-dialkylsubstituiertes Sulfonamido oder Carbonamido, wobei die Alkylteile je 1 bis 4 Kohlenstoffatome enthalten und gegebenenfalls substituiert sind ; Alkylsulfon mit 1 bis 4 Kohlenstoffatomen, gegebenenfalls substituierter Phenylsulfonsäureester, Cyano, Nitro, Halogen, gegebenenfalls substituiertes Carbalkoxy mit 1 bis 16 Kohlenstoffatomen oder $—P(O)(OT^1)_2$, worin $T^1$ die im Anspruch 1 angegebene Bedeutung hat,

$R_9$ Wasserstoff, gegebenenfalls mit Halogen substituiertes Alkyl mit 1 bis 4 Kohlenstoffatomen, gegebenenfalls substituiertes Alkoxy mit 1 bis 6 Kohlenstoffatomen, Carbalkoxy mit 2 bis 16 Kohlenstoffatomen, N-alkyl- oder N,N-dialkylsubstituiertes Sulfonamido oder Carbonamido, wobei die Alkylteile je 1 bis 8 Kohlenstoffatome enthalten und gegebenenfalls substituiert sind ; $—NQ_1COT_1$, worin $Q_1$ und $T_1$ die in Anspruch 1 angegebenen Bedeutungen haben ; Alkylfulson mit 1 bis 6 Kohlenstoffatomen, Phenylsulfon, Hydroxyl, Cyano, Nitro oder Halogen,

$R_{10}$ Wasserstoff, Alkyl mit 1 bis 4 Kohlenstoffatomen oder Carbalkoxy mit 2 bis 13 Kohlenstoffatomen,

$X_2$ Wasserstoff, Alkyl oder Alkoxy mit 1 bis 6 Kohlenstoffatomen, $—NL_2COM_2$, worin $L_2$ Wasserstoff oder Alkyl mit 1 bis 4 Kohlenstoffatomen und $M_2$ gegebenenfalls substituiertes Alkyl oder Alkoxy mit 1 bis 18 Kohlenstoffatomen ist ; Alkylsulfonylamino mit 1 bis 18 Kohlenstoffatomen oder Hydroxyl,

$Y_2$ Wasserstoff, gegebenenfalls substituiertes Alkyl mit 1 bis 4 Kohlenstoffatomen, Alkoxy mit 1 bis 12 Kohlenstoffatomen, gegebenenfalls substituiertes Carbalkoxy mit 2 bis 5 Kohlenstoffatomen, N-alkyl- oder N,N-dialkylsubstituiertes Amino, wobei die Alkylteile je 1 bis 6 Kohlenstoffatome enthalten und gegebenenfalls substituiert sind, gegebenenfalls substituiertes Phenylsulfonylamino, $—NE_2COG_2$, worin $E_2$ Wasserstoff oder gegebenenfalls mit Cyano substituiertes Alkyl mit 1 bis 8 Kohlenstoffatomen und $G_2$ Alkyl mit 1 bis 8 Kohlenstoffatomen oder gegebenenfalls substituiertes Alkoxy mit 1 bis 4 Kohlenstoffatomen ist ; $—NHP(O)(OG^2)_2$, worin $G^2$ Alkyl mit 1 bis 6 Kohlenstoffatomen ist ; Halogen oder Hydroxyl,

$Z_2$ Wasserstoff, Alkyl mit 1 bis 12 Kohlenstoffatomen, gegebenenfalls substituiertes Alkoxy mit 1 bis 6 Kohlenstoffatomen, $—NA_2COD_2$, worin $A_2$ Wasserstoff oder Alkyl mit 1 bis 8 Kohlenstoffatomen und $D_2$ Alkyl mit 1 bis 18 Kohlenstoffatomen ist ; Acyl mit 2 bis 7 Kohlenstoffatomen, gegebenenfalls substituiertes Carbalkoxy mit 2 bis 19 Kohlenstoffatomen, Alkylsulfonylamino mit 1 bis 6 Kohlenstoffatomen, Halogen oder diejenigen Atome bedeutet, um zusammen mit $Y_2$ einen gegebenenfalls mit Methyl substituierten, 6-gliedrigen, gesättigten oder ungesättigten, gegebenenfalls ein oder zwei Heteroatome enthaltenden Ring zu Bilden und

$W_2$ Wasserstoff, Alkyl oder Alkoxy mit je 1 bis 4 Kohlenstoffatome oder Halogen bedeutet.

3. Farbphotographisches Aufzeichnungsmaterial nach Anspruch 2, dadurch gekennzeichnet, dass es einen Farbstoff der Formel

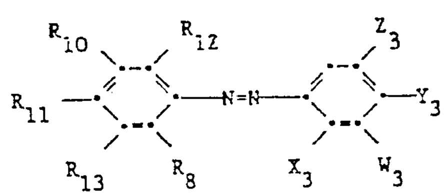

(3)

enthält, worin

$R_{11}$ Wasserstoff, gegebenenfalls mit Alkoxy mit 1 bis 4 Kohlenstoffatomen oder mit Carbalkoxy mit 2 bis 12 Kohlenstoffatomen substituiertes Alkyl mit 1 bis 12 Kohlenstoffatomen, Alkoxy mit 1 bis 16 Kohlenstoffatomen, ein Rest der Formel

$$—O—(CH_2)_{m_1}—[OC_2H_4]_n—O(CH_2)_m—CH_3$$

worin $m_1$ ganze Zahlen von 2 bis 16, n 1 oder 2 und m ganze Zahlen von 0 bis 3 bedeuten ; gegebenenfalls mit Cyano und/oder Carbalkoxy mit 2 bis 9 Kohlenstoffatomen substituiertes Alkenyl mit 2 bis 4 Kohlenstoffatomen, aliphatisches Acyl mit 2 oder 3 Kohlenstoffatomen, gegebenenfalls mit Chlor, $—CO_2B_1$, $—SO_2B_1$ oder $—COB_1$ substituiertes Benzoyl, worin $B_1$ Alkyl mit 1 bis 8 Kohlenstoffatomen ist ; Carbalkoxy mit 2 bis 16 Kohlenstoffatomen, ein Rest der Formel

$$-\overset{O}{\overset{\|}{C}}-O-(CH_2)_{m_1}-(OC_2H_4)_n-OCH_3 \quad \text{oder} \quad -\overset{O}{\overset{\|}{C}}-O-(CH_2)_{m_1}-(OC_2H_4)_n-OC_2H_5$$

worin $m_1$ und n die oben angegebene Bedeutung haben ; $—NHCOU_2$, worin $U_2$ gegebenenfalls mit Methoxy oder Hydroxyl substituiertes Alkyl mit 1 bis 12 Kohlenstoffatomen oder Alkenyl mit 2 bis 4 Kohlenstoffatomen ist ; Carbonamido, N-alkyl- oder N,N-dialkylsubstituiertes Sulfonamido, wobei die Alkylteile je 1 bis 10 Kohlenstoffatome enthalten und gegebenenfalls mit Methoxy, Hydroxyl oder Amino substituiert sind ; Alkylsulfon mit 1 bis 8 Kohlenstoffatomen, gegebenenfalls substituiertes Phenylsulfon, gegebenenfalls substituiertes Phenoxy, gegebenenfalls substituierter Phenylsulfonsäureester, Hydroxyl, Cyano, Nitro oder Halogen,

$R_{12}$ Wasserstoff, gegebenenfalls mit Halogen substituiertes Alkyl mit 1 bis 8 Kohlenstoffatomen, Alkoxy mit 1 bis 6 Kohlenstoffatomen, Carbalkoxy mit 2 oder 3 Kohlenstoffatomen, ein Rest der Formel

$$-\overset{O}{\overset{\|}{C}}-O-CH_2CH_2OC_2H_5 \quad \text{oder} \quad -\overset{O}{\overset{\|}{C}}-O-CH_2-CH_2-OCH_3$$

N-alkyl- oder N,N-dialkylsubstituiertes Sulfonamido oder Carbonamido, wobei die Alkylteile je 1 bis 8 Kohlenstoffatome enthalten und gegebenenfalls mit Methoxy substituiert sind ; Alkylsulfon mit 1 bis 6 Kohlenstoffatomen, Phenylsulfon, gegebenenfalls mit Alkyl mit 1 bis 8 Kohlenstoffatomen substituiertes Phenoxy, Cyano, Nitro oder Halogen,

$R_{13}$ Wasserstoff, gegebenenfalls mit Fluor substituiertes Alkyl mit 1 oder 2 Kohlenstoffatomen, gegebenenfalls mit Methoxy substituiertes Alkoxy mit 1 bis 6 Kohlenstoffatomen, Carbalkoxy mit 2 bis 13 Kohlenstoffatomen, N,N-dialkylsubstituiertes Sulfonamido oder Carbonamido, worin die Alkylteile je 1 bis 4 Kohlenstoffatome enthalten und gegebenenfalls mit Methoxy substituiert sind ; $—NQ_2COT_2$, worin $Q_2$ Wasserstoff und $T_2$ Alkyl mit 1 bis 4 Kohlenstoffatomen ist ; Methylsulfon, Phenylsulfon, Hydroxyl, Cyano, Nitro oder Halogen,

$X_3$ Wasserstoff, Alkyl oder Alkoxy mit je 1 bis 4 Kohlenstoffatomen, $—NL_3COM_3$, worin $L_3$ Wasserstoff oder Methyl und $M_3$ gegebenenfalls mit Halogen, Carbalkoxy mit 2 bis 5 Kohlenstoffatomen oder gegebenenfalls substituiertem Phenyl oder Phenoxy oder Alkoxy mit 1 bis 5 Kohlenstoffatomen substituiertes Alkyl oder Alkoxy mit je 1 bis 18 Kohlenstoffatomen ist ; Alkylsulfonylamino mit 1 bis 12 Kohlenstoffatomen oder Hydroxyl,

$Y_3$ Wasserstoff, Alkyl mit 1 bis 4 Kohlenstoffatomen, Alkoxy mit 1 bis 12 Kohlenstoffatomen, gegebenenfalls mit $—OC_2H_4—OCH_3$ substituiertes Carbalkoxy mit 2 bis 5 Kohlenstoffatomen, N-alkyl- oder N,N-dialkylsubstituiertes Amino, wobei die Alkylteile je 1 bis 6 Kohlenstoffatome enthalten und gegebenenfalls mit Methoxy, Carbalkoxy mit 2 bis 5 Kohlenstoffatomen, Acetyloxy, Hydroxyl, Nitro, Cyano, Phenyl oder Tosyl substituiert sind ; Pyrrolidinyl, Piperidinyl, Morpholinyl, gegebenenfalls mit Alkyl mit 1 bis 4 Kohlenstoffatomen substituiertes Phenylsulfonylamino, $—NE_3COG_3$, worin $E_3$ Wasserstoff oder gegebenenfalls mit Cyano substituiertes Alkyl mit 1 bis 4 Kohlenstoffatomen und $G_3$ Alkyl mit 1 bis 8 Kohlenstoffatomen, Alkoxy mit 1 bis 4 kohlenstoffatomen oder ein Rest der Formel

$$—O—(CH_2)_K—(OC_2H_4)_n—OCH_3$$

ist, worin k ganze Zahlen von 2 bis 4 bedeutet und n die oben angegebene Bedeutung hat ;

$$-NH\overset{O}{\overset{\|}{P}}(OG^3)_2$$

worin $G^3$ Alkyl mit 1 bis 4 Kohlenstoffatomen ist ; Halogen oder Hydroxyl,

$Z_3$ Wasserstoff, Alkyl mit 1 bis 8 Kohlenstoffatomen, Alkoxy mit 1 bis 6 Kohlenstoffatomen, ein Rest der Formel

$$—O—(CH_2)_{k_1}—O—(CH_2)_m—CH_3$$

worin $k_1$ ganze Zahlen von 2 bis 6 ist und m die angegebene Bedeutung hat ; $—NA_3COD_3$, worin $A_3$ Wasserstoff oder Alkyl mit 1 bis 4 Kohlenstoffatomen und $D_3$ Alkyl mit 1 bis 12 Kohlenstoffatomen ist ; Acyl mit 2 bis 5 Kohlenstoffatomen, Carbalkoxy mit 2 bis 5 Kohlenstoffatomen, ein Rest der Formel

$$-\overset{O}{\overset{\parallel}{C}}-O-(CH_2)_k-\!\!(-OC_2H_4-\!\!)_{\overline{n}}OCH_3$$

worin k und n die oben angegebene Bedeutung haben ; Methylsulfonylamino, Halogen oder diejenigen Atome bedeutet, um zusammen mit $Y_3$ einen gegebenenfalls mit Methyl oder Äthyl substituierten, 6-gliedrigen, gesättigten oder ungesättigten, Stickstoff oder Stickstoff und Sauerstoff enthaltenden Ring zu bilden,

$W_3$ Wasserstoff, Alkyl oder Alkoxy mit je 1 oder 2 Kohlenstoffatome oder Halogen ist, und

$R_8$ und $R_{10}$ die in Anspruch 2 angegebene Bedeutung haben.

4. Farbphotographisches Aufzeichnungsmaterial nach Anspruch 3, dadurch gekennzeichnet, dass es einen Farbstoff der Formel

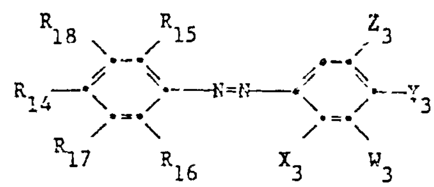

(4)

enthält, worin

$R_{14}$ Wasserstoff, gegebenenfalls mit Alkoxy mit 1 bis 4 Kohlenstoffatomen oder mit Carbalkoxy mit 2 bis 7 Kohlenstoffatomen substituiertes Alkyl mit 1 bis 12 Kohlenstoffatomen, Alkoxy mit 1 bis 12 Kohlenstoffatomen, der Rest der Formel

$$—O(CH_2)_{m_2}—(OC_2H_4)_n—O(CH_2)_m—CH_3$$

wobei $m_2$ ganze Zahlen von 2 bis 12 und n und m die in Anspruch 3 angegebenen Bedeutung haben ; gegebenenfalls mit Cyano und/oder Carbalkoxy mit 2 bis 7 Kohlenstoffatomen substituiertes Alkenyl mit 2 bis 4 Kohlenstoffatomen, aliphatisches Acyl mit 2 oder 3 Kohlenstoffatomen, gegebenenfalls mit Chlor, $—CO_2B_2$, $—SO_2B_2$ oder $—COB_2$ substituiertes Benzoyl, worin $B_2$ Alkyl mit 1 bis 4 Kohlenstoffatomen ist ; Carbalkoxy mit 2 bis 9 Kohlenstoffatomen, ein Rest der Formel

$$-\overset{O}{\overset{\parallel}{C}}-O-(CH_2)_{m_3}-\!\!(-OC_2H_4-\!\!)_{\overline{n}}OCH_3 \quad \text{oder} \quad -\overset{O}{\overset{\parallel}{C}}-O-(CH_2)_{m_3}-\!\!(-OC_2H_4-\!\!)_{\overline{n}}OC_2H_5$$

worin $m_3$ ganze Zahlen von 2 bis 8 und n die oben angegebene Bedeutung hat ; $—NHCOU_3$, worin $U_3$ Alkyl mit 1 bis 8 Kohlenstoffatomen oder Alkenyl mit 2 oder 3 Kohlenstoffatomen ist ; Carbonamido, N-alkyl- oder N,N-dialkylsubstituiertes Sulfonamid, wobei die Alkylteile je 1 bis 5 Kohlenstoffatome enthalten und gegebenenfalls mit Methoxy, Hydroxyl oder Amino substituiert sind ; Alkylsulfon mit 1 bis 6 Kohlenstoffatomen, gegebenenfalls mit Alkyl mit 1 bis 5 Kohlenstoffatomen oder Hydroxyl substituiertes Phenylsulfon oder Phenylsulfonsäureester, ferner Hydroxyl, Cyano, Nitro oder Halogen,

$R_{15}$ Wasserstoff, gegebenenfalls mit Fluor substituiertes Alkyl mit 1 bis 4 Kohlenstoffatomen, Alkoxy mit 1 oder 2 Kohlenstoffatomen, Carbalkoxy mit 2 oder 3 Kohlenstoffatomen, ein Rest der Formel

$$-\overset{O}{\overset{\parallel}{C}}-O-CH_2CH_2OC_2H_5 \quad \text{oder} \quad -\overset{O}{\overset{\parallel}{C}}-O-CH_2-CH_2-OCH_3$$

N-alkyl- oder N,N-dialkylsubstituiertes Sulfonamid oder Carbonamido, wobei die Alkylteile je 1 bis 4 Kohlenstoffatome enthalten und gegebenenfalls mit Methoxy substituiert sind ; Alkylsulfon mit 1 bis 4 Kohlenstoffatomen, Cyano, Nitro oder Halogen,

$R_{16}$ Wasserstoff, Methyl, Methoxy, N-alkyl- oder N,N-dialkylsubstituiertes Sulfonamido oder Carbonamido, worin die Alkylteile je 1 oder 2 Kohlenstoffatome enthalten und gegebenenfalls mit Methoxy

substituiert sind ; Alkylsulfon mit 1 bis 4 Kohlenstoffatomen, Phenylsulfonsäureester, Cyano, Nitro, Halogen, gegebenenfalls mit Methoxy substituiertes Carbalkoxy mit 1 bis 12 Kohlenstoffatomen, oder $—P(O)(OT^1)_2$, worin $T^1$ die in Anspruch 1 angegebenen Bedeutung hat,

$R_{17}$ Wasserstoff, Methyl, Trifluormethyl, gegebenenfalls mit Methoxy substituiertes Alkoxy mit 1 bis 4 Kohlenstoffatomen, Carbalkoxy mit 2 bis 9 Kohlenstoffatomen, N,N-dialkylsubstituiertes Sulfonamido oder Carbonamido, wobei die Alkylteile je 1 oder 2 Kohlenstoffatome enthalten und gegebenenfalls mit Methoxy substituiert sind ; $—NHCOT_2$, worin $T_2$ die in Anspruch 3 angegebene Bedeutung hat ; Methylsulfon, Phenylsulfon, Hydroxyl, Cyano, Nitro oder Halogen,

$R_{18}$ Wasserstoff, Methyl oder Carbalkoxy mit 2 bis 7 Kohlenstoffatomen ist, und $X_3$, $Y_3$, $Z_3$ und $W_3$ die in Anspruch 3 angegebene Bedeutung haben.

5. Farbphotographisches Aufzeichnungsmaterial nach Anspruch 4, dadurch gekennzeichnet, dass es einen Farbstoff der Formel

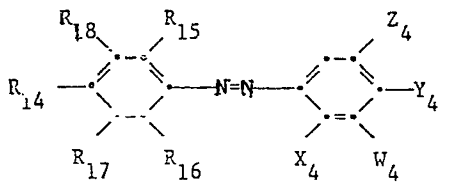

(5)

enthält, worin

$X_4$ Wasserstoff, Alkyl mit 1 bis 4 Kohlenstoffatomen, Methoxy, $—NL_3COM_4$, worin $L_3$ die im Anspruch 3 angegebene Bedeutung hat und $M_4$ gegebenenfalls mit Fluor, Chlor, Alkoxy mit 1 bis 5 Kohlenstoffatomen, Carbalkoxy mit 2 oder 3 Kohlenstoffatomen, gegebenenfalls mit Phenyl, Phenoxy oder mit para-$(C_{m_3}H_{2m_3+1})—C_6H_4—$ oder para-$(C_{m_3}H_{2m_3+1})—C_6H_4—O—$ substituiertes Alkyl mit 1 bis 13 Kohlenstoffatomen oder Alkoxy mit 1 bis 4 Kohlenstoffatomen ist, wobei $m_3$ die in Anspruch 4 angegebene Bedeutung hat ; Alkylsulfonylamino mit 1 bis 6 Kohlenstoffatomen oder Hydroxyl,

$Y_4$ Wasserstoff, Alkyl mit 1 oder 2 Kohlenstoffatomen, Alkoxy mit 1 bis 8 Kohlenstoffatomen, gegebenenfalls mit $—OC_2H_4—OCH_3$ substituiertes Carbalkoxy mit 2 oder 3 Kohlenstoffatomen, N-alkyl- oder N,N-dialkylsubstituiertes Amino, wobei die Alkylteile je 1 bis 6 Kohlenstoffatome enthalten, welche gegebenenfalls mit Methoxy, Carbalkoxy mit 2 bis 5 Kohlenstoffatomen, Acetyloxy, Hydroxyl, Nitro, Cyano oder Phenyl substituiert sind ; Pyrrolidinyl, Piperidinyl, gegebenenfalls mit Alkyl mit 1 bis 4 Kohlenstoffatomen substituiertes Phenylsulfonylamino, $—NE_3COG_4$, worin $E_3$ die in Anspruch 3 angegebene Bedeutung hat und $G_4$ Alkyl mit 1 bis 8 Kohlenstoffatomen, Alkoxy mit 1 oder 2 Kohlenstoffatomen, ein Rest der Formel

$$—O—CH_2—CH_2—OC_2H_4—OCH_3$$

ist ;

$$-NH\overset{\overset{O}{\|}}{P}(OG^3)_2$$

worin $G^3$ die in Anspruch 3 angegebene Bedeutung hat ; Halogen oder Hydroxyl,

$Z_4$ Wasserstoff, Alkyl mit 1 bis 6 Kohlenstoffatomen, Alkoxy mit 1 bis 4 Kohlenstoffatomen $—O(CH_2)_K—O(CH_2)_m—CH_3$, worin k und m die in Anspruch 3 angegebene Bedeutung hat ; $—NA_4COD_4$, worin $A_4$ Wasserstoff oder Methyl und $D_4$ Alkyl mit 1 bis 8 Kohlenstoffatomen ist ; Acetyl Carbalkoxy mit 2 bis 5 Kohlenstoffatomen, ein Rest der Formel

$$-\overset{\overset{O}{\|}}{C}-O-(CH_2)_k-(OC_2H_4)_n-OCH_3$$

worin k die in Anspruch 3 angegebene Bedeutung hat ; Methylsulfonylamino, Halogen oder diejenigen Atome bedeutet, um zusammen mit $Y_4$ Ringsysteme wie

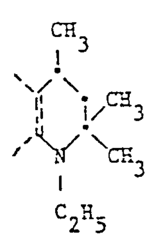

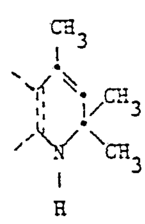

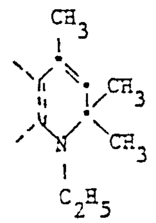 oder 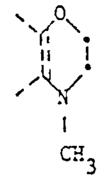

zu bilden,

$W_4$ Wasserstoff, Methyl, Methoxy oder Halogen ist, und

$R_{14}$, $R_{15}$, $R_{16}$, $R_{17}$ und $R_{18}$ die in Anspruch 4 angegebene Bedeutung haben.

6. Farbphotographisches Aufzeichnungsmaterial nach Anspruch 5, dadurch gekennzeichnet, dass es einen Farbstoff der Formel

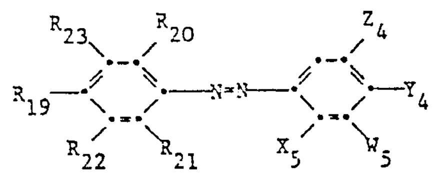 (6)

enthält, worin

$R_{19}$ Wasserstoff, gegebenenfalls mit Alkoxy mit 1 bis 4 Kohlenstoffatomen oder mit Carbalkoxy mit 2 bis 7 Kohlenstoffatomen substituiertes Alkyl mit 1 bis 6 Kohlenstoffatomen, Alkoxy mit 1 bis 8 Kohlenstoffatomen, ein Rest der Formel

$$—O—(CH_2)_{m_3}—OC_2H_4—OCH_3 \quad \text{oder} \quad —O—(CH_2)_{m_3}—OC_2H_4—OC_2H_5$$

worin $m_3$ die in Anspruch 4 angegebene Bedeutung hat ; gegebenenfalls mit Cyano und/oder Carbalkoxy mit 2 bis 7 Kohlenstoffatomen substituiertes Vinyl, Acetyl, gegebenenfalls in para-Stellung mit Chlor, $—CO_2B_2$, $—SO_2B_2—$ oder $—COB_2$ substituiertes Benzoyl, worin $B_2$ die in Anspruch 4 angegebene Bedeutung hat ; Carbalkoxy mit 2 bis 9 Kohlenstoffatomen,

$$-\overset{O}{\overset{\|}{C}}-O-(CH_2)_{m_3}-OC_2H_4-OCH_3 \quad \text{oder} \quad -\overset{O}{\overset{\|}{C}}-O(CH_2)_{m_3}-OC_2H_4-OC_2H_5$$

worin $m_3$ die in Anspruch 4 angegebene Bedeutung hat ; $—NHCOU_4$, worin $U_4$ Alkyl mit 1 bis 4 Kohlenstoffatomen oder Alkenyl mit 2 oder 3 Kohlenstoffatomen ist, Carbonamido, N-alkyl- oder N,N-dialkylsubstituiertes Sulfonamido wobei die Alkylteile je 1 bis 5 Kohlenstoffatome enthalten und gegebenenfalls mit Methoxy, Hydroxyl oder Amino substituiert sind ; Alkylsulfon mit 1 bis 6 Kohlenstoffatomen, gegebenenfalls mit Alkyl mit 1 bis 5 Kohlenstoffatomen oder Hydroxyl in para-Stellung substituiertes Phenylsulfon oder in para-Stellung substituierter Phenylsulfonsäureester, Hydroxyl, Cyano, Nitro, Chlor oder Brom,

$R_{20}$ Wasserstoff, Methyl, Trifluormethyl, Methoxy, Aethoxy, Carbalkoxy mit 2 oder 3 Kohlenstoffatomen, ein Rest der Formel

$$-\overset{O}{\overset{\|}{C}}-OCH_2CH_2OC_2H_5 \quad \text{oder} \quad -\overset{O}{\overset{\|}{C}}-O-CH_2-CH_2-OCH_3$$

N-alkyl- oder N,N-dialkylsubstituiertes Sulfonamido oder Carbonamido, wobei die Alkylteile je 1 bis 4 Kohlenstoffatome enthalten und gegebenenfalls mit Methoxy substituiert sind ; Alkylsulfon mit 1 bis 4 Kohlenstoffatomen, Cyano, Nitro, Chlor oder Brom,

$R_{21}$ Wasserstoff, Methyl, Methoxy, N-alkyl- oder N,N-dialkylsubstituiertes Sulfonamid, worin die Alkylteile je 1 oder 2 Kohlenstoffatome enthalten ; Alkylsulfon mit 1 bis 4 Kohlenstoffatomen, Cyano, Nitro, Brom, Chlor, gegebenenfalls mit Methoxy substituiertes Carbalkoxy mit 2 bis 7 Kohlenstoffatomen, oder

$$-\overset{O}{\overset{\|}{P}}(OC_2H_5)_2$$

$R_{22}$ Wasserstoff, Methyl, Trifluormethyl, gegebenenfalls mit Methoxy substituiertes Alkoxy mit 1 oder 2 Kohlenstoffatomen, Carbalkoxy mit 2 bis 9 Kohlenstoffatomen, N,N-dialkylsubstituiertes Sulfonamid oder Carbonamido, wobei die Alkylteile je 1 oder 2 Kohlenstoffatome enthalten und gegebenenfalls mit Methoxy substituiert sind ; $—NHCOT_2$, worin $T_2$ die in Anspruch 3 angegebene Bedeutung hat ; Methylsulfon, Phenylsulfon, Hydroxyl, Cyano, Chlor oder Brom,

$R_{23}$ Wasserstoff, Methyl oder Carbalkoxy mit 2 oder 3 Kohlenstoffatomen,

$X_5$ Wasserstoff, Alkyl mit 1 bis 4 Kohlenstoffatomen, Methoxy, $—NHCOM_5$, worin $M_5$ gegebenenfalls mit Fluor, Chlor, Alkoxy mit 1 bis 5 Kohlenstoffatomen, Carbalkoxy mit 2 oder 3 Kohlenstoffatomen, Phenyl, para-$(C_{m_3}H_{2m_3+1})—C_6H_4—$, Phenoxy, para-$(C_{m_3}H_{2m_3+1})—C_6H_4—O—$ substituiertes Alkyl mit 1 bis 8 Kohlenstoffatomen oder Alkoxy mit 1 oder 2 Kohlenstoffatomen ist, worin $m_3$ die in Anspruch 4 angegebene Bedeutung hat ; Alkylsulfonylamino mit 1 bis 6 Kohlenstoffatomen oder Hydroxyl,

$W_5$ Wasserstoff, Methyl, Methoxy oder Chlor ist, und

$Y_4$ und $Z_4$ die in Anspruch 5 angegebene Bedeutung haben.

7. Farbphotographisches Aufzeichnungsmaterial nach Anspruch 6, dadurch gekennzeichnet, dass es einen Farbstoff der Formel

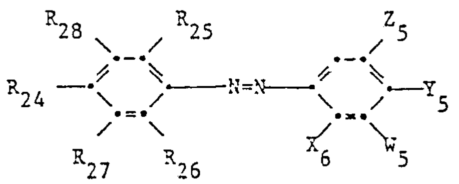

(7)

enthält, worin

$R_{24}$ Wasserstoff, gegebenenfalls mit Carbalkoxy mit 2 bis 7 Kohlenstoffatomen substituiertes Alkyl mit 1 bis 4 Kohlenstoffatomen, Alkoxy mit 1 bis 4 Kohlenstoffatomen, ein Rest der Formel

$$—O—(CH_2)_k—OC_2H_4—OCH_3 \quad \text{oder} \quad —O—(CH_2)_k—OC_2H_4—OC_2H_5$$

worin k die in Anspruch 3 angegebene Bedeutung hat ; Carbalkoxy mit 2 bis 9 Kohlenstoffatomen, ein Rest der Formel

$$-\overset{O}{\overset{\|}{C}}-O-(CH_2)_{m_3}-OC_2H_4-OCH_3$$

worin $m_3$ die in Anspruch 4 angegebene Bedeutung hat ; $—NHCOU_4$, worin $U_4$ die in Anspruch 6 angegebene Bedeutung hat ; Carbonamido, N-alkyl- oder N,N-dialkylsubstituiertes Sulfonamido, wobei die Alkylteile je 1, 2 oder 3 Kohlenstoffatome enthalten und gegebenenfalls mit Methoxy substituiert sind ; Alkylsulfon mit 1 bis 6 Kohlenstoffatomen, gegebenenfalls mit Alkyl mit 1 bis 5 Kohlenstoffatomen oder Hydroxyl in para-Stellung substituiertes Phenylsulfon oder Phenylsulfonsäureester, Hydroxyl, Nitro, Chlor oder Brom,

$R_{25}$ Wasserstoff, Methyl, Methoxy, Aethoxy, Carbalkoxy mit 2 oder 3 Kohlenstoffatomen, ein Rest der Formel

$$-\overset{O}{\overset{\|}{C}}-O-CH_2CH_2OC_2H_5 \quad \text{oder} \quad -\overset{O}{\overset{\|}{C}}-O-CH_2-CH_2-OCH_3$$

N-alkyl- oder N,N-dialkylsubstituiertes Sulfonamid oder Carbonamido, wobei die Alkylteile je 1 oder 2 Kohlenstoffatome enthalten und gegebenenfalls mit Methoxy substituiert sind ; Alkylsulfon mit 1 bis 4 Kohlenstoffatomen, Cyano, Nitro, Chlor oder Brom,

$R_{26}$ Wasserstoff, Cyano, Chlor oder Brom,

$R_{27}$ Wasserstoff, Alkoxy mit 1 oder 2 Kohlenstoffatomen, Carbalkoxy mit 2 bis 9 Kohlenstoffatomen, $—NHCOT_2$, worin $T_2$ die in Anspruch 3 angegebenen Bedeutung hat ; Hydroxyl oder Chlor,

$R_{28}$ Wasserstoff oder Carbalkoxy mit 2 oder 3 Kohlenstoffatomen,

$X_6$ Wasserstoff, Alkyl mit 1 bis 4 Kohlenstoffatomen, Methoxy, $—NHCOM_6$, worin $M_6$ gegebenenfalls mit Alkoxy mit 1 bis 5 Kohlenstoffatomen, Phenoxy oder para-$(C_kH_{2k+1})—C_6H_4—O—$ substituiertes Alkyl mit 1 bis 4 Kohlenstoffatomen ist, worin k die in Anspruch 3 angegebene Bedeutung hat ; oder Hydroxyl,

$Y_5$ Wasserstoff, Alkoxy mit 1 bis 4 Kohlenstoffatomen, gegebenenfalls mit $—OC_2H_4—OCH_3$ substituiertes Carbalkoxy mit 2 oder 3 Kohlenstoffatomen, N-alkyl- oder N,N-dialkylsubstituiertes Amino, wobei die Alkylteile je 1 bis 4 Kohlenstoffatome enthalten und gegebenenfalls mit Methoxy, Carbalkoxy mit 2 oder 3 Kohlenstoffatomen, Acetyloxy, Hydroxyl, Cyano oder Phenyl substituiert ist ; $—NE_3COG_4$, worin $E_3$ und $G_4$ die in Anspruch 3 angegebene Bedeutung haben ; oder Hydroxyl,

$Z_5$ Wasserstoff, Alkyl mit 1 bis 6 Kohlenstoffatomen, Alkoxy mit 1 bis 4 Kohlenstoffatomen, Acetyl,

Carbalkoxy mit 2 bis 5 Kohlenstoffatomen, ein Rest der Formel

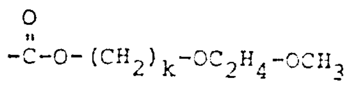

worin k die in Anspruch 3 angegebene Bedeutung hat, $NA_4COD_4$, worin $A_4$ und $D_4$ die in Anspruch 5 angegebene Bedeutung haben ; oder Chlor ist, und

$W_5$ die in Anspruch 6 angegebene Bedeutung hat.

8. Farbphotographisches Aufzeichnungsmaterial nach Anspruch 6, dadurch gekennzeichnet, dass es einen Farbstoff der Formel

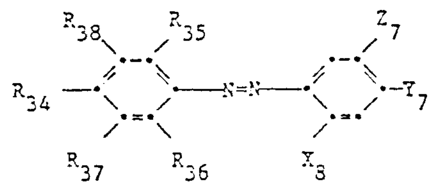

(12)

enthält, worin

$R_{34}$ Wasserstoff, gegebenenfalls mit Carbalkoxy mit 2 oder 3 Kohlenstoffatomen substituiertes Alkyl mit 1 oder 2 Kohlenstoffatomen, Carbalkoxy mit 2 oder 3 Kohlenstoffatomen, ein Rest der Formel

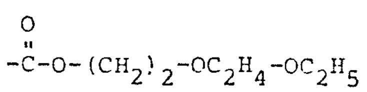

gegebenenfalls mit Cyano und/oder Carbalkoxy mit 2 bis 5 Kohlenstoffatomen substituiertes Vinyl, N-alkyl- oder N,N-dialkylsubstituiertes Sulfonamido, wobei die Alkylteile je 1 bis 3 Kohlenstoffatome enthalten und gegebenenfalls mit Methoxy substituiert sind ; Alkylsulfon mit 1 bis 6 Kohlenstoffatomen, Phenylsulfonsäureester, para-$(C_{m_3}H_{2m_3+1})$—$C_6H_4$—O—$SO_2$—, worin $m_3$ die in Anspruch 4 angegebene Bedeutung hat ; Cyano, Nitro, Chlor oder Brom,

$R_{35}$ Wasserstoff, Trifluormethyl, Carbalkoxy mit 2 oder 3 Kohlenstoffatomen, Alkylsulfon mit 1 bis 4 Kohlenstoffatomen, N-alkyl- oder N,N-dialkylsubstituiertes Sulfonamido, wobei die Alkylteile je 1 bis 4 Kohlenstoffatome enthalten und gegebenenfalls mit Methoxy substituiert sind ; Cyano, Nitro, Chlor oder Brom,

$R_{36}$ Wasserstoff, Methylsulfon, N,N-Diäthylsulfonamid, Cyano, Nitro, Chlor oder Brom,

$R_{37}$ Wasserstoff, Methyl, Carbalkoxy mit 2 bis 7 Kohlenstoffatomen, N,N-dialkylsubstituiertes Sulfonamido oder Carbonamido, wobei die Alkylteile jeweils 1 oder 2 Kohlenstoffatome enthalten, und gegebenenfalls mit Methoxy substituiert sind ; Cyano oder Chlor ;

$R_{38}$ Wasserstoff oder Methyl,

$X_8$ Wasserstoff, Methyl, —$NHCOM_7$, worin $M_7$ gegebenenfalls mit Carbalkoxy mit 2 oder 3 Kohlenstoffatomen, Fluor, Chlor, Phenyl oder Phenoxy, para-$(C_{m_3}H_{2m_3+1})$—$C_6H_4$— oder para-$(C_{m_3}H_{2m_3+1})$—$C_6H_4$—O— substituiertes Alkyl mit 1 bis 8 Kohlenstoffatomen, Alkylsulfonylamino mit 1 bis 6 Kohlenstoffatomen oder Hydroxyl,

$Y_7$ Alkyl mit 1 bis 2 Kohlenstoffatomen, Alkoxy mit 1 bis 8 Kohlenstoffatomen, gegebenenfalls mit —$OC_2H_4$—$OCH_3$ substituiertes Carbalkoxy mit 2 oder 3 Kohlenstoffatomen, N-alkyl- oder N,N-dialkylsubstituiertes Amino, wobei die Alkylteile je 1 bis 4 Kohlenstoffatome enthalten und gegebenenfalls mit Methoxy, Carbmethoxy, Acetyloxy, Cyano, Hydroxyl oder Phenyl substituiert ist ; oder —$NHCOG_5$, worin $G_5$ Alkyl mit 1 bis 4 Kohlenstoffatomen ist, und

$Z_7$ Wasserstoff, Alkoxy mit 1 oder 2 Kohlenstoffatomen, ein Rest der Formel

$$—OCH_2CH_2—O(CH_2)_m—CH_3$$

worin m die in Anspruch 3 angegebene Bedeutung hat, —$NHCOD_4$, worin $D_4$ die in Anspruch 5 angegebene Bedeutung hat ; oder Chlor ist.

9. Farbphotographisches Aufzeichnungsmaterial nach Anspruch 6, dadurch gekennzeichnet, dass es einen Farbstoff der Formel

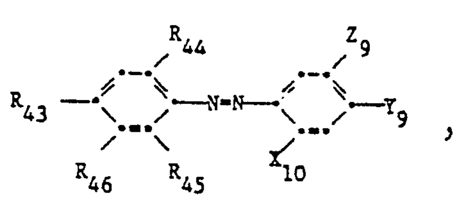

(18)

enthält, worin

$R_{43}$ gegebenenfalls mit Cyano und/oder Carbalkoxy mit 2 bis 7 Kohlenstoffatomen substituiertes Vinyl, Carbalkoxy mit 2 oder 3 Kohlenstoffatomen, N-alkyl- oder N,N-dialkylsubstituiertes Sulfonamido, wobei die Alkylteile je 1 bis 5 Kohlenstoffatome enthalten und gegebenenfalls mit Methoxy, Amino oder Hydroxyl substituiert sind ; Alkylsulfon mit 1 bis 6 Kohlenstoffatomen, Phenylsulfonsäureester, para-$(C_{m_3}-H_{2m_3+1})-C_6H_4-O-SO_2-$, worin $m_3$ die in Anspruch 6 angegebene Bedeutung hat ; Cyano oder Nitro,

$R_{44}$ N,N-Dimethyl- oder N,N-Diäthylsulfonamid, Methylsulfon, Trifluormethyl, Cyano, Nitro, Chlor oder Brom,

$R_{45}$ Wasserstoff, Cyano, Nitro, Chlor oder Brom,

$R_{46}$ Wasserstoff oder Carbalkoxy mit 2 bis 6 Kohlenstoffatomen,

$X_{10}$ Methyl, $-NH\overset{\overset{O}{\|}}{C}-M_5$, worin $M_5$ die in Anspruch 6 angegebene Bedeutung hat ; oder Alkylsulfonamido mit 1 bis 6 Kohlenstoffatomen,

$Y_9$ gegebenenfalls mit $-OC_2H_4-OCH_3$ substituiertes Carbalkoxy mit 2 oder 3 Kohlenstoffatomen, N-alkyl- oder N,N-dialkylsubstituiertes Amino, worin der Alkylteil je 1 bis 4 Kohlenstoffatome enthält und gegebenenfalls mit Methoxy, Acetyloxy, Cyano, Hydroxyl oder Phenyl substituiert ist ; und

$Z_9$ Wasserstoff, Methoxy, $-OCH_2CH_2OC_2H_5$ oder $-OCH_2CH_2-OCH_3$ ist.

10. Verfahren zur Herstellung eines farbphotographischen Aufzeichnungsmaterials, bei dem man einen diffusionsfesten, bleichbaren und öllöslichen Azofarbstoff in mindestens eine Silberhalogenidemulsionssicht oder in eine an die Silberhalogenidemulsionsschicht angrenzende Kolloidschicht des Aufzeichnungsmaterials einarbeitet, dadurch gekennzeichnet, dass ein Monoazofarbstoff der in Anspruch 1 angegebenen Formel (1) eingearbeitet wird.

11. Verwendung des farbphotographischen Aufzeichnungsmaterial nach einem der Ansprüche 1 bis 9 zur Herstellung photographischer Bilder.

12. Das mit dem farbphotographischen Aufzeichnungsmaterial nach einem der Ansprüche 1 bis 9 hergestellte photographische Bild.

**Claims**

1. A colour-photographic recording material for the silver dye bleach process which contains at least one diffusion-resistant, bleachable and oil-soluble monoazo dye in at least one silver halide emulsion layer or in a colloid layer adjoining the silver halide emulsion layer, and wherein the monoazo dye has the formula

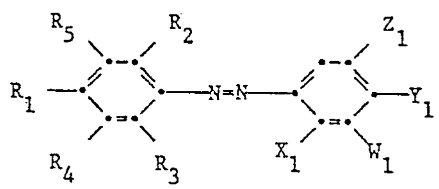

(1)

in which

$R_1$ is hydrogen, substituted or unsubstituted alkyl having 1 to 18 carbon atoms, substituted or unsubstituted alkoxy having 1 to 16 carbon atoms, substituted or unsubstituted alkenyl having 2 to 4 carbon atoms, substituted or unsubstituted aliphatic acyl having 2 to 5 carbon atoms, substituted or unsubstituted benzoyl, substituted or unsubstituted carbalkoxy having 2 to 20 carbon atoms or $-NV_1COU_1$, in which $V_1$ is hydrogen or alkyl having 1 to 4 carbon atoms and $U_1$ is substituted or unsubstituted alkyl having 1 to 12 carbon atoms or substituted or unsubstituted alkenyl having 2 to 4 carbon atoms, or $R_1$ is carboxamido or sulfonamido, N-alkyl-substituted or N,N-dialkyl-substituted carboxamido or sulfonamido, in which each alkyl moiety has 1 to 12 carbon atoms and can be substituted further, or $R_1$ is substituted or unsubstituted alkylsulfone having 1 to 12 carbon atoms, substituted or unsubstituted arylsulfone, substituted or unsubstituted aryloxy or substituted or unsubstituted arylsulfonic acid ester, or is hydroxyl, cyano, nitro or halogen,

$R_2$ is hydrogen, substituted or unsubstituted alkyl having 1 to 12 carbon atoms, substituted or unsubstituted alkoxy having 1 to 6 carbon atoms, substituted or unsubstituted carbalkoxy having 2 to 5 carbon atoms or N-alkyl-substituted or N,N-dialkyl-substituted sulfonamido or carboxamido, in which each alkyl moiety has 1 to 8 carbon atoms and can be substituted, or $R_2$ is substituted or unsubstituted alkylsulfone having 1 to 6 carbon atoms, substituted or unsubstituted arylsulfone or substituted or unsubstituted aryloxy, or is cyano, nitro or halogen,

$R_3$ is hydrogen, substituted or unsubstituted alkyl or alkoxy having 1 to 4 carbon atoms, substituted or unsubstituted phenoxy, or N-alkyl-substituted or N,N-dialkyl-substituted sulfonamido or carboxamido, in which each alkyl moiety has 1 to 6 carbon atoms and can be substituted, or $R_3$ is substituted or

unsubstituted alkylsulfone having 1 to 4 carbon atoms, substituted or unsubstituted phenylsulfonic acid ester, cyano, nitro, halogen, substituted or unsubstituted carbalkoxy having 1 to 16 carbon atoms, or $-P(O)(OT^1)_2$, in which $T^1$ is alkyl having 1 to 4 carbon atoms,

$R_4$ is hydrogen, substituted or unsubstituted alkyl having 1 to 4 carbon atoms, substituted or unsubstituted alkoxy having 1 to 6 carbon atoms, substituted or unsubstituted carbalkoxy having 2 to 16 carbon atoms or N-alkyl-substituted or N,N-dialkyl-substituted sulfonamido or carboxamido, in which each alkyl moiety has 1 to 12 carbon atoms and can be substituted, or $R_4$ is $-NQ_1COT_1$, in which $Q_1$ is hydrogen or alkyl having 1 to 2 carbon atoms and $T_1$ is substituted or unsubstituted alkyl having 1 to 4 carbon atoms, or $R_4$ is substituted or unsubstituted alkylsulfone having 1 to 12 carbon atoms, substituted or unsubstituted arylsulfone, hydroxyl, cyano, nitro or halogen,

$R_5$ is hydrogen, substituted or unsubstituted alkyl having 1 to 4 carbon atoms or substituted or unsubstituted carbalkoxy having 2 to 13 carbon atoms,

$X_1$ is hydrogen, substituted or unsubstituted alkyl or alkoxy having 1 to 6 carbon atoms or $-NL_1CO-M_1$, in which $L_1$ is hydrogen or substituted or unsubstituted alkyl having 1 to 4 carbon atoms and $M_1$ is substituted or unsubstituted alkyl or alkoxy having 1 to 24 carbon atoms, or $X_1$ is substituted or unsubstituted alkylsulfonylamino having 1 to 25 carbon atoms or hydroxyl,

$Y_1$ is hydrogen, substituted or unsubstituted alkyl having 1 to 6 carbon atoms, substituted or unsubstituted alkoxy having 1 to 12 carbon atoms, substituted or unsubstituted carbalkoxy having 2 to 5 carbon atoms or N-alkyl-substituted or N,N-dialkyl-substituted amino, in which each alkyl moiety has 1 to 6 carbon atoms and can be substituted, or $Y_1$ is substituted or unsubstituted arylsulfonylamino or $-NE_1COG_1$, in which $E_1$ is hydrogen or substituted or unsubstituted alkyl having 1 to 8 carbon atoms and $G_1$ is substituted or unsubstituted alkyl having 1 to 12 carbon atoms or substituted or unsubstituted alkoxy having 1 to 4 carbon atoms, or $Y_1$ is $-NE_1P(O)(OG^1)_2$, in which $E_1$ is as defined above and $G^1$ is alkyl having 1 to 12 carbon atoms, or $Y_1$ is halogen or hydroxyl,

$Z_1$ is hydrogen, substituted or unsubstituted alkyl having 1 to 12 carbon atoms, substituted or unsubstituted alkoxy having 1 to 6 carbon atoms or $-NA_1COD_1$, in which $A_1$ is hydrogen or substituted or unsubstituted alkyl having 1 to 8 carbon atoms and $D_1$ is substituted or unsubstituted alkyl having 1 to 18 carbon atoms, or $Z_1$ is substituted or unsubstituted acyl having 2 to 9 carbon atoms, substituted or unsubstituted carbalkoxy having 2 to 19 carbon atoms, substituted or unsubstituted alkylsulfonylamino having 1 to 6 carbon atoms, halogen or the atoms which together with $Y_1$ form a substituted or unsubstituted 5-membered or 6-membered, saturated or unsaturated ring which can contain 1 or 2 hetero-atoms, and

$W_1$ is hydrogen, substituted or unsubstituted alkyl or alkoxy, each having 1 to 4 carbon atoms, or halogen.

2. A colour-photographic recording material according to claim 1, which contains a dye of the formula

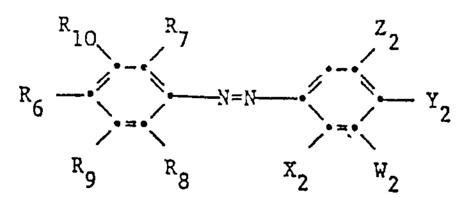

(2)

in which

$R_6$ is hydrogen, substituted or unsubstituted alkyl having 1 to 12 carbon atoms, substituted or unsubstituted alkoxy having 1 to 16 carbon atoms, substituted or unsubstituted alkenyl having 2 to 4 carbon atoms, substituted or unsubstituted aliphatic acyl having 2 or 3 carbon atoms, substituted or unsubstituted benzoyl, substituted or unsubstituted carbalkoxy having 2 to 16 carbon atoms, or $-NV_2COU_1$, in which $V_2$ is hydrogen or alkyl having 1 or 2 carbon atoms and $U_1$ is as defined in claim 1, or $R_6$ is carboxamido or sulfonamido, N-alkyl-substituted or N,N-dialkyl-substituted carboxamido or sulfonamido, in which each alkyl moiety contains 1 to 10 carbon atoms and can be substituted further, or $R_6$ is substituted or unsubstituted alkylsulfone having 1 to 8 carbon atoms, substituted or unsubstituted phenylsulfone, substituted or unsubstituted phenoxy or substituted or unsubstituted phenylsulfonic acid ester, or is hydroxyl, cyano, nitro or halogen,

$R_7$ is hydrogen, substituted or unsubstituted alkyl having 1 to 8 carbon atoms, substituted or unsubstituted alkoxy having 1 to 6 carbon atoms, substituted or unsubstituted carbalkoxy having 2 or 3 carbon atoms or N-alkyl-substituted or N,N-dialkyl-substituted sulfonamido or carboxamido, in which each alkyl moiety contains 1 to 8 carbon atoms and can be substituted, or $R_7$ is substituted or unsubstituted alkylsulfone having 1 to 6 carbon atoms, substituted or unsubstituted phenylsulfone or substituted or unsubstituted phenoxy, or is cyano, nitro or halogen,

$R_8$ is hydrogen, alkyl or alkoxy having 1 to 4 carbon atoms, substituted or unsubstituted phenoxy or N-alkyl-substituted or N,N-dialkyl-substituted sulfonamido or carboxamido, in which each alkyl moiety has 1 to 4 carbon atoms and can be substituted, or $R_8$ is alkylsulfone having 1 to 4 carbon atoms,

substituted or unsubstituted phenylsulfonic acid ester, cyano, nitro, halogen, substituted or unsubstituted carbalkoxy having 1 to 16 carbon atoms, or $—P(O)(OT^1)_2$, in which $T^1$ is as defined in claim 1,

$R_9$ is hydrogen, unsubstituted or halogen-substituted alkyl having 1 to 4 carbon atoms, substituted or unsubstituted alkoxy having 1 to 6 carbon atoms, carbalkoxy having 2 to 16 carbon atoms or N-alkyl-substituted or N,N-dialkyl-substituted sulfonamido or carboxamido, in which each alkyl moiety has 1 to 8 carbon atoms and can be substituted, or $R_9$ is $—NQ_1COT_1$, in which $Q_1$ and $T_1$ are as defined in claim 1, or $R_9$ is alkylsulfone having 1 to 6 carbon atoms, phenylsulfone, hydroxyl, cyano, nitro or halogen,

$R_{10}$ is hydrogen, alkyl having 1 to 4 carbon atoms or carbalkoxy having 2 to 13 carbon atoms,

$X_2$ is hydrogen, alkyl or alkoxy, each having 1 to 6 carbon atoms, or $—NL_2COM_2$, in which $L_2$ is hydrogen or alkyl having 1 to 4 carbon atoms and $M_2$ is substituted or unsubstituted alkyl or alkoxy having 1 to 18 carbon atoms, or $X_2$ is alkylsulfonylamino having 1 to 18 carbon atoms, or hydroxyl,

$Y_2$ is hydrogen, substituted or unsubstituted alkyl having 1 to 4 carbon atoms, alkoxy having 1 to 12 carbon atoms, substituted or unsubstituted carbalkoxy having 2 to 5 carbon atoms, or N-alkyl-substituted or N,N-dialkyl-substituted amino, in which each alkyl moiety contains 1 to 6 carbons atoms and can be substituted, or $Y_2$ is substituted or unsubstituted phenylsulfonylamino or $—NE_2COG_2$, in which $E_2$ is hydrogen or unsubstituted or cyano-substituted alkyl having 1 to 8 carbon atoms and $G_2$ is alkyl having 1 to 8 carbon atoms or substituted or unsubstituted alkoxy having 1 to 4 carbon atoms, or $Y_2$ is $—NHP(O)(OG^2)_2$, in which $G^2$ is alkyl having 1 to 6 carbon atoms, or $Y_2$ is halogen or hydroxyl,

$Z_2$ is hydrogen, alkyl having 1 to 12 carbon atoms, substituted or unsubstituted alkoxy having 1 to 6 carbon atoms or $—NA_2COD_2$, in which $A_2$ is hydrogen or alkyl having 1 to 8 carbon atoms and $D_2$ is alkyl having 1 to 18 carbon atoms, or $Z_2$ is acyl having 2 to 7 carbon atoms, substituted or unsubstituted carbalkoxy having 2 to 19 carbon atoms, alkylsulfonylamino having 1 to 6 carbon atoms, halogen or the atoms which together with $Y_2$ form an unsubstituted or methyl-substituted 6-membered, saturated or unsaturated ring which can contain one or two hetero-atoms and

$W_2$ is hydrogen, alkyl or alkoxy each having 1 to 4 carbon atoms, or halogen.

3. A colour-photographic recording material as claimed in claim 2, which contains a dye of the formula

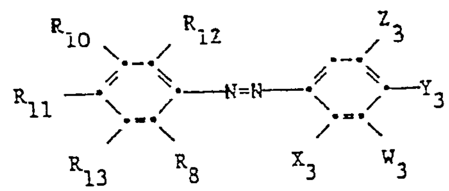

(3)

in which

$R_{11}$ is hydrogen, alkyl having 1 to 12 carbon atoms which is substituted by alkoxy having 1 to 4 carbon atoms or by carbalkoxy having 2 to 12 carbon atoms or is unsubstituted, alkoxy having 1 to 16 carbon atoms, a radical of the formula

$$—O—(CH_2)_{m_1}—[OC_2H_4]_n—O—(CH_2)_m—CH_3$$

in which $m_1$ is an integer from 2 to 16, n is 1 or 2 and m is an integer from 0 to 3, alkenyl having 2 to 4 carbon atoms, which is substituted by cyano and/or by carbalkoxy having 2 to 9 carbon atoms or is unsubstituted, aliphatic acyl having 2 or 3 carbon atoms, benzoyl which is substituted by chlorine, $—CO_2B_1$, $—SO_2B_1$ or $—COB_1$, in which $B_1$ is alkyl having 1 to 8 carbon atoms, or is unsubstituted, or $R_{11}$ is carbalkoxy having 2 to 16 carbon atoms, a radical of the formula

$$-\overset{O}{\overset{\|}{C}}-O-(CH_2)_{m_1}-(OC_2H_4)_n-OCH_3 \quad \text{or} \quad -\overset{O}{\overset{\|}{C}}-O-(CH_2)_{m_1}-(OC_2H_4)_n-OC_2H_5$$

in which $m_1$ and n are as defined above, or $—NHCOU_2$, in which $U_2$ is unsubstituted or methoxy- or hydroxyl-substituted alkyl having 1 to 12 carbon atoms or alkenyl having 2 to 4 carbon atoms, or $R_{11}$ is carboxamido or N-alkyl-substituted or N,N-dialkyl-substituted sulfonamido, in which each alkyl moiety has 1 to 10 carbon atoms and can be substituted by methoxy, hydroxyl or amino, or $R_{11}$ is alkylsulfone having 1 to 8 carbon atoms, unsubstituted or substituted phenylsulfone, unsubstituted or substituted phenoxy, unsubstituted or substituted phenylsulfonic acid ester, hydroxyl, cyano, nitro or halogen,

$R_{12}$ is hydrogen, unsubstituted or halogen-substituted alkyl having 1 to 8 carbon atoms, alkoxy having 1 to 6 carbon atoms, carbalkoxy having 2 or 3 carbon atoms, a radical of the formula

$$-\overset{O}{\overset{\|}{C}}-O-CH_2-CH_2-OC_2H_5 \quad \text{or} \quad -\overset{O}{\overset{\|}{C}}-O-CH_2-CH_2-OCH_3$$

or N-alkyl-substituted or N,N-dialkyl-substituted sulfonamido or carboxamido, in which each alkyl moiety has 1 to 8 carbon atoms and can be substituted by methoxy, or $R_{12}$ is alkylsulfone having 1 to 6 carbon atoms, phenylsulfone or phenoxy which is unsubstituted or substituted by alkyl having 1 to 8 carbon atoms, or is cyano, nitro or halogen,

$R_{13}$ is hydrogen, unsubstituted or fluorine-substituted alkyl having 1 to 2 carbon atoms, unsubstituted or methoxy-substituted alkoxy having 1 to 6 carbon atoms, carbalkoxy having 2 to 13 carbon atoms or N,N-dialkyl-substituted sulfonamido or carboxamido, in which each alkyl moiety has 1 to 4 carbon atoms and can be methoxy-substituted, or $R_{13}$ is $-NQ_2COT_2$, in which $Q_2$ is hydrogen and $T_2$ is alkyl having 1 to 4 carbon atoms, or $R_{13}$ is methylsulfone, phenylsulfone, hydroxyl, cyano, nitro or halogen,

$X_3$ is hydrogen, alkyl or alkoxy each having 1 to 4 carbon atoms, or $-NL_3COM_3$, in which $L_3$ is hydrogen or methyl and $M_3$ is alkyl or alkoxy each of which has 1 to 18 carbon atoms and is unsubstituted or substituted by halogen, by carbalkoxy having 2 to 5 carbon atoms, by substituted or unsubstituted phenyl or phenoxy or by alkoxy having 1 to 5 carbon atoms, or $X_3$ is alkylsulfonylamino having 1 to 12 carbon atoms or hydroxyl,

$Y_3$ is hydrogen, alkyl having 1 to 4 carbon atoms, alkoxy having 1 to 12 carbon atoms, unsubstituted or $-OC_2H_4-OCH_3$-substituted carbalkoxy having 2 to 5 carbon atoms or N-alkyl-substituted or N,N-dialkyl-substituted amino, in which each alkyl moiety has 1 to 6 carbon atoms and can be substituted by methoxy, by carbalkoxy having 2 to 5 carbon atoms, by acetoxy, by hydroxyl, by nitro, by cyano, by phenyl or by tosyl, or $Y_3$ is pyrrolidinyl, piperidinyl, morpholinyl or phenylsulfonylamino which is unsubstituted or substituted by alkyl having 1 to 4 carbon atoms, or $Y_3$ is $-NE_3COG_3$, in which $E_3$ is hydrogen or unsubstituted or cyano-substituted alkyl having 1 to 4 carbon atoms and $G_3$ is alkyl having 1 to 8 carbon atoms, alkoxy having 1 to 4 carbon atoms or a radical of the formula

$$-O-(CH_2)_k-(OC_2H_4)_n-OCH_3$$

in which k is an integer from 2 to 4 and n is as defined above, or $Y_3$ is

$$-NH\overset{O}{\overset{\|}{P}}(OG^3)_2$$

in which $G^3$ is alkyl having 1 to 4 carbon atoms, or $Y_3$ is halogen or hydroxyl,

$Z_3$ is hydrogen, alkyl having 1 to 8 carbon atoms, alkoxy having 1 to 6 carbon atoms, a radical of the formula

$$-O-(CH_2)_{k_1}-O-(CH_2)_m-CH_3$$

in which $k_1$ is an integer from 2 to 6 and m is as defined above, or $Z_3$ is $-NA_3COD_3$, in which $A_3$ is hydrogen or alkyl having 1 to 4 carbon atoms and $D_3$ is alkyl having 1 to 12 carbon atoms, or $Z_3$ is acyl having 2 to 5 carbon atoms, carbalkoxy having 2 to 5 carbon atoms, a radical of the formula

$$-\overset{O}{\overset{\|}{C}}-O-(CH_2)_k-(OC_2H_4)_n-OCH_3$$

in which k and n are as defined above, methylsulfonylamino, halogen or the atoms which together with $Y_3$ form an unsubstituted or methyl- or ethyl-substituted 6-membered saturated or unsaturated ring which contains nitrogen or nitrogen and oxygen,

$W_3$ is hydrogen, alkyl or alkoxy each having 1 or 2 carbon atoms, or halogen, and

$R_8$ and $R_{10}$ are as defined in claim 2.

4. A colour-photographic recording material according to claim 3, which contains a dye of the formula

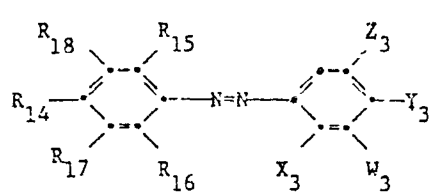

(4)

in which

$R_{14}$ is hydrogen, alkyl which has 1 to 12 carbon atoms and is unsubstituted or substituted by alkoxy having 1 to 4 carbon atoms or by carbalkoxy having 2 to 7 carbon atoms, alkoxy having 1 to 12 carbon atoms, a radical of the formula

$$-O(CH_2)_{m_2}-(OC_2H_4)_n-O(CH_2)_m-CH_3$$

in which $m_2$ is an integer from 2 to 12 and n and m are as defined in claim 3, or alkenyl which has 2 to 4 carbon atoms and is unsubstituted or substituted by cyano and/or by carbalkoxy having 2 to 7 carbon atoms, or $R_{14}$ is aliphatic acyl having 2 or 3 carbon atoms, or benzoyl which is unsubstituted or substituted by chlorine, $-CO_2B_2$, $-SO_2B_2$ or $-COB_2$, in which $B_2$ is alkyl having 1 to 4 carbon atoms, or $R_{14}$ is carbalkoxy having 2 to 9 carbon atoms, a radical of the formula

$$-\overset{O}{\overset{\|}{C}}-O-(CH_2)_{m_3}-(OC_2H_4)_n-OCH_3 \quad \text{or} \quad -\overset{O}{\overset{\|}{C}}-O-(CH_2)_{m_3}-(OC_2H_4)_n-OC_2H_5$$

in which $m_3$ is an integer from 2 to 8 and n is as defined above, or $-NHCOU_3$, in which $U_3$ is alkyl having 1 to 8 carbon atoms or alkenyl having 2 or 3 carbon atoms, or $R_{14}$ is carboxamido or N-alkyl-substituted or N,N-dialkyl-substituted sulfonamido, in which each alkyl moiety has 1 to 5 carbon atoms and can be substituted by methoxy, hydroxyl or amino, or $R_{14}$ is alkylsulfone having 1 to 6 carbon atoms, unsubstituted or $C_{1-5}$-alkyl-substituted or hydroxyl-substituted phenylsulfone or phenylsulfonic acid ester, hydroxyl, cyano, nitro or halogen,

$R_{15}$ is hydrogen, unsubstituted or fluorine-substituted alkyl having 1 to 4 carbon atoms, alkoxy having 1 or 2 carbon atoms, carbalkoxy having 2 or 3 carbon atoms, a radical of the formula

$$-\overset{O}{\overset{\|}{C}}-O-CH_2-CH_2-OC_2H_5 \quad \text{or} \quad -\overset{O}{\overset{\|}{C}}-O-CH_2-CH_2-OCH_3$$

or N-alkyl-substituted or N,N-dialkyl-substituted sulfonamido or carboxamido, in which each alkyl moiety has 1 to 4 carbon atoms and can be methoxy-substituted, or $R_{15}$ is alkylsulfone having 1 to 4 carbon atoms or $R_{15}$ is cyano, nitro or halogen,

$R_{16}$ is hydrogen, methyl, methoxy, or N-alkyl-substituted or N,N-dialkyl-substituted sulfonamido or carboxamido, in which each alkyl moiety has 1 or 2 carbon atoms and can be methoxy-substituted, or $R_{16}$ is alkylsulfone having 1 to 4 carbon atoms, phenylsulfonic acid ester, cyano, nitro, halogen, unsubstituted or methoxy-substituted carbalkoxy having 1 to 12 carbon atoms or $-P(O)(OT^1)_2$, in which $T^1$ is as defined in claim 1,

$R_{17}$ is hydrogen, methyl, trifluoromethyl, alkoxy having 1 to 4 carbon atoms which can be methoxy-substituted, carbalkoxy having 2 to 9 carbon atoms or N,N-dialkyl-substituted sulfonamido or carboxamido, in which each alkyl moiety has 1 or 2 carbon atoms and can be methoxy-substituted, or $R_{17}$ is $-NHCOT_2$, in which $T_2$ is as defined in claim 3, or $R_{17}$ is methylsulfone, phenylsulfone, hydroxyl, cyano, nitro or halogen,

$R_{18}$ is hydrogen, methyl or carbalkoxy having 2 to 7 carbon atoms and $X_3$, $Y_3$, $Z_3$ and $W_3$ are as defined in claim 3.

5. A colour-photographic recording material according to claim 4, which contains a dye of the formula

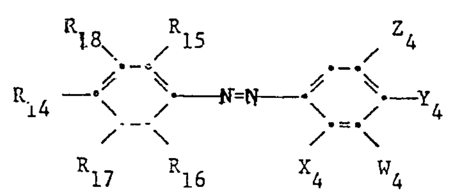

(5)

in which

$X_4$ is hydrogen, alkyl having 1 to 4 carbon atoms, methoxy or $-NL_3COM_4$, in which $L_3$ is as defined in claim 3 and $M_4$ is alkyl having 1 to 13 carbon atoms, or alkoxy having 1 to 4 carbon atoms, which can both be substituted by phenyl or phenoxy or by para-$(C_{m_3}H_{2m_3+1})-C_6H_4-$ or para-$(C_{m_3}H_{2m_3+1})-C_6H_4-O-$ or by fluorine, chlorine, alkoxy having 1 to 5 carbon atoms or by carbalkoxy having 2 or 3 carbon atoms, $m_3$ being as defined in claim 4, or $X_4$ is alkyl-sulfonylamino having 1 to 6 carbon atoms, or hydroxyl,

$Y_4$ is hydrogen, alkyl having 1 or 2 carbon atoms, alkoxy having 1 to 8 carbon atoms, unsubstituted or $-OC_2H_4-OCH_3$-substituted carbalkoxy having 2 or 3 carbon atoms or N-alkyl-substituted or N,N-dialkyl-substituted amino, in which each alkyl moiety has 1 to 6 carbon atoms and can be substituted by methoxy, carbalkoxy having 2 to 5 carbon atoms, acetoxy, hydroxyl, nitro, cyano or phenyl, or $Y_4$ is pyrrolidinyl, piperidinyl or phenylsulfonylamino which can be substituted by alkyl having 1 to 4 carbon atoms, or $Y_4$ is $-NE_3COG_4$, in which $E_3$ is as defined in claim 3, and $G_4$ is alkyl having 1 to 8 carbon atoms, alkoxy having 1 or 2 carbon atoms, or a radical of the formula

$$-O-CH_2-CH_2-OC_2H_4-OCH_3$$

or $Y_4$ is

$$-NH\overset{O}{\overset{\|}{P}}(OG^3)_2$$

in which $G^3$ is as defined in claim 3, or $Y_4$ is halogen or hydroxyl,

$Z_4$ is hydrogen, alkyl having 1 to 6 carbon atoms, alkoxy having 1 to 4 carbon atoms, $-O(CH_2)_k-O(CH_2)_m-CH_3$, in which k and m are as defined in claim 3, or $-NA_4COD_4$, in which $A_4$ is hydrogen or methyl and $D_4$ is alkyl having 1 to 8 carbon atoms, or $Z_4$ is acetyl, carbalkoxy having 2 to 5 carbon atoms, a radical of the formula

$$-\overset{O}{\overset{\|}{C}}-O-(CH_2)_k-OC_2H_4-OCH_3$$

in which k is as defined in claim 3, methylsulfonylamino, halogen or the atoms which together with $Y_4$ form ring systems such as

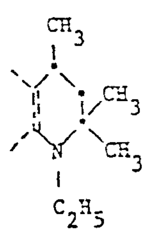

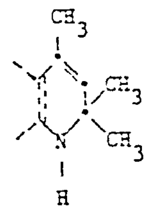

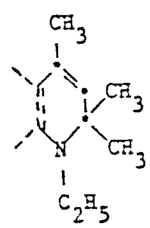

or

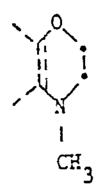

$W_4$ is hydrogen, methyl, methoxy or halogen and

$R_{14}$, $R_{15}$, $R_{16}$, $R_{17}$ and $R_{18}$ are as defined in claim 4.

6. A colour-photographic recording material according to claim 5, which contains a dye of the formula

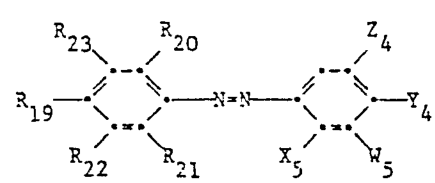

(6)

in which

$R_{19}$ is hydrogen, alkyl having 1 to 6 carbon atoms which can be substituted by alkoxy having 1 to 4 carbon atoms or by carbalkoxy having 2 to 7 carbon atoms, alkoxy having 1 to 8 carbon atoms, a radical of the formula

$$-O-(CH_2)_{m_3}-OC_2H_4-OCH_3 \quad \text{or} \quad -O-(CH_2)_{m_3}-OC_2H_4-OC_2H_5$$

in which $m_3$ is as defined in claim 4, vinyl which can be substituted by cyano and/or by carbalkoxy having 2 to 7 carbon atoms, acetyl, benzoyl which can be substituted in the para-position by chlorine, $-CO_2B_2$, $-SO_2B_2-$ or $-COB_2$, in which $B_2$ is as defined in claim 4, carbalkoxy having 2 to 9 carbon atoms, a radical of the formula

$$-\overset{O}{\overset{\|}{C}}-O-(CH_2)_{m_3}OC_2H_4-OCH_3 \quad \text{or} \quad -\overset{O}{\overset{\|}{C}}-O(CH_2)_{m_3}OC_2H_4-OC_2H_5$$

in which $m_3$ is as defined in claim 4, or —$NHCOU_4$, in which $U_4$ is alkyl having 1 to 4 carbon atoms or alkenyl having 2 or 3 carbon atoms, or $R_{19}$ is carboxamido or N-alkyl-substituted or N,N-dialkyl-substituted sulfonamido, in which each alkyl moiety has 1 to 5 carbon atoms and can be substituted by methoxy, hydroxyl or amino, or $R_{19}$ is alkylsulfone having 1 to 6 carbon atoms or phenylsulfone or phenylsulfonic acid ester, which two radicals can be substituted in the para-position by alkyl having 1 to 5 carbon atoms or hydroxyl, or $R_{19}$ is hydroxyl, cyano, nitro, chlorine or bromine,

$R_{20}$ is hydrogen, methyl, trifluoromethyl, methoxy, ethoxy, carbalkoxy having 2 or 3 carbon atoms, a radical of the formula

$$-\overset{O}{\overset{\|}{C}}-OCH_2-CH_2-OC_2H_5 \quad \text{or} \quad -\overset{O}{\overset{\|}{C}}-O-CH_2-CH_2-OCH_3$$

or N-alkyl-substituted or N,N-dialkyl-substituted sulfonamido or carboxamido, in which each alkyl moiety has 1 to 4 carbon atoms and can be substituted by methoxy, or $R_{20}$ is alkylsulfone having 1 to 4 carbon atoms, phenylsulfone or $R_{20}$ is cyano, nitro, chlorine or bromine,

$R_{21}$ is hydrogen, methyl, methoxy, or N-alkyl-substituted or N,N-dialkyl-substituted sulfonamido, in which each alkyl moiety has 1 to 2 carbon atoms, or $R_{21}$ is alkylsulfone having 1 to 4 carbon atoms, cyano, nitro, bromine, chlorine or unsubstituted or methoxy-substituted carbalkoxy having 2 to 7 carbon atoms, or $R_{21}$ is

$$-\overset{O}{\overset{\|}{P}}(OC_2H_5)_2$$

$R_{22}$ is hydrogen, methyl, trifluoromethyl, unsubstituted or methoxy-substituted alkoxy having 1 or 2 carbon atoms, carbalkoxy having 2 to 9 carbon atoms or N,N-dialkyl-substituted sulfonamido or carboxamido, in which each alkyl moiety has 1 or 2 carbon atoms and can be substituted by methoxy, or $R_{22}$ is —$NHCOT_2$, in which $T_2$ is as defined in claim 3, or $R_{22}$ is methylsulfone, phenylsulfone, hydroxyl, cyano, chlorine or bromine,

$R_{23}$ is hydrogen, methyl or carbalkoxy having 2 or 3 carbon atoms,

$X_5$ is hydrogen, alkyl having 1 to 4 carbon atoms, methoxy or —$NHCOM_5$, in which $M_5$ is alkyl having 1 to 8 carbon atoms, or alkoxy or 2 carbon atoms, which radicals can be substituted by fluorine, chlorine, alkoxy having 1 to 5 carbon atoms, carbalkoxy having 2 or 3 carbon atoms, phenyl, para-$(C_{m_3}H_{2m_3+1})$—$C_6H_4$—, phenoxy, or para-$(C_{m_3}H_{2m_3+1})$—$C_6H_4$—O—, $m_3$ being as defined in claim 4, or $X_5$ is alkylsulfonylamino having 1 to 6 carbon atoms, or hydroxyl,

$W_5$ is hydrogen, methyl, methoxy or chlorine and

$Y_4$ and $Z_4$ are as defined in claim 5.

7. A colour-photographic recording material as claimed in claim 6, which contains a dye of the formula

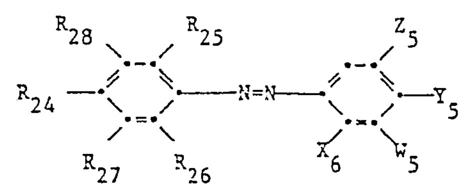

(7)

in which

$R_{24}$ is hydrogen or alkyl having 1 to 4 carbon atoms, which can be substituted by carbalkoxy having 2 to 7 carbon atoms, or $R_{24}$ is alkoxy having 1 to 4 carbon atoms, a radical of the formula

$$—O—(CH_2)_k—OC_2H_4—OCH_3 \quad \text{or} \quad —O—(CH_2)_k—OC_2H_4—OC_2H_5$$

in which k is as defined in claim 3, carbalkoxy having 2 to 9 carbon atoms, a radical of the formula

$$-\overset{O}{\overset{\|}{C}}-O-(CH_2)_{m_3}-OC_2H_4-OCH_3$$

in which $m_3$ is as defined in claim 4, —$NHCOU_4$, in which $U_4$ is as defined in claim 6, carboxamido or N-alkyl-substituted or N,N-dialkyl-substituted sulfonamido, in which each alkyl moiety has 1, 2 or 3 carbon atoms and can be substituted by methoxy, or $R_{24}$ is alkylsulfone having 1 to 6 carbon atoms or is phenylsulfone or phenylsulfonic acid ester, each of which two radicals can be substituted in the para-position by alkyl having 1 to 5 carbon atoms or hydroxyl, or $R_{24}$ is hydroxyl, nitro, chlorine or bromine,

$R_{25}$ is hydrogen, methyl, methoxy, ethoxy, carbalkoxy having 2 or 3 carbon atoms, a radical of the formula

$$-\overset{O}{\overset{\|}{C}}-O-CH_2-CH_2-OC_2H_5 \quad \text{or} \quad -\overset{O}{\overset{\|}{C}}-O-CH_2-CH_2-OCH_3$$

or N-alkyl-substituted or N,N-dialkyl-substituted sulfonamido or carboxamido, in which each alkyl moiety has 1 or 2 carbon atoms and can be substituted by methoxy, or $R_{25}$ is alkylsulfone having 1 to 4 carbon atoms or $R_{25}$ is cyano, nitro, chlorine or bromine,

$R_{26}$ is hydrogen, cyano, chlorine or bromine,

$R_{27}$ is hydrogen or alkoxy having 1 or 2 carbon atoms, or $R_{27}$ is carbalkoxy having 2 to 9 carbon atoms, —$NHCOT_2$, in which $T_2$ is as defined in claim 3, hydroxyl or chlorine,

$R_{28}$ is hydrogen or carbalkoxy having 2 or 3 carbon atoms,

$X_6$ is hydrogen, alkyl having 1 to 4 carbon atoms, methoxy or —$NHCOM_6$, in which $M_6$ is alkyl having 1 to 4 carbon atoms which is optionally substituted by alkoxy having 1 to 5 carbon atoms, by phenoxy or para-($C_kH_{2k+1}$)—$C_6H_4$—O—, k being as defined in claim 3, or $X_6$ is hydroxyl,

$Y_5$ is hydrogen, alkoxy having 1 to 4 carbon atoms, unsubstituted or —$OC_2H_4$—$OCH_3$-substituted carbalkoxy having 2 or 3 carbon atoms or N-alkyl-substituted or N,N-dialkyl-substituted amino, in which each alkyl moiety has 1 to 4 carbon atoms and can be substituted by methoxy, carbalkoxy having 2 or 3 carbon atoms, acetoxy, hydroxyl, cyano or phenyl, or $Y_5$ is —$NE_3COG_4$, in which $E_3$ and $G_4$ are as defined in claim 3, or $Y_5$ is hydroxyl,

$Z_5$ is hydrogen, alkyl having 1 to 6 carbon atoms, alkoxy having 1 to 4 carbon atoms, acetyl, carbalkoxy having 2 to 5 carbon atoms, a radical of the formula

$$-\overset{O}{\overset{\|}{C}}-O-(CH_2)_k-OC_2H_4-OCH_3$$

in which k is as defined in claim 3, —$NA_4COD_4$, in which $A_4$ and $D_4$ are as defined in claim 5, or chlorine, and

$W_5$ is as defined in claim 6.

8. A colour-photographic recording material according to claim 6, which contains a dye of the formula

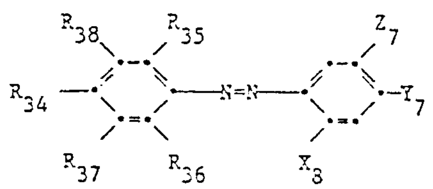

(12)

in which

$R_{34}$ is hydrogen or alkyl having 1 or 2 carbon atoms, which can be substituted by carbalkoxy having 2 or 3 carbon atoms, or is carbalkoxy having 2 or 3 carbon atoms, a radical of the formula

$$-\overset{O}{\overset{\|}{C}}-O-(CH_2)_2-OC_2H_4-OC_2H_5$$

or vinyl which can be substituted by cyano and/or carbalkoxy having 2 to 5 carbon atoms, or $R_{34}$ is N-alkyl-substituted or N,N-dialkyl-substituted sulfonamido, in which each alkyl moiety has 1 to 3 carbon atoms and can be methoxy-substituted, alkylsulfone having 1 to 6 carbon atoms, phenylsulfonic acid ester, para-($C_{m_3}H_{2m_3+1}$)—$C_6H_4$—O—$SO_2$—, in which $m_3$ is as defined in claim 4, cyano, nitro, chlorine or bromine,

$R_{35}$ is hydrogen, trifluoromethyl, carbalkoxy having 2 or 3 carbon atoms, alkylsulfone having 1 to 4 carbon atoms, N-alkyl-substituted or N,N-dialkyl-substituted sulfonamido, in which each alkyl moiety has 1 to 4 carbon atoms and can be methoxy-substituted, cyano, nitro, chlorine or bromine,

$R_{36}$ is hydrogen, methylsulfone, N,N-diethylsulfonamide, cyano, nitro, chlorine or bromine,

$R_{37}$ is hydrogen, methyl, carbalkoxy having 2 to 7 carbon atoms, N,N-dialkyl-substituted sulfonamido or carboxamido, in which each alkyl moiety has 1 or 2 carbon atoms and can be methoxy-substituted, cyano or chlorine,

$R_{38}$ is hydrogen or methyl,

$X_8$ is hydrogen, methyl or —$NHCOM_7$, in which $M_7$ is alkyl having 1 to 8 carbon atoms which is unsubstituted or substituted by carbalkoxy having 2 or 3 carbon atoms, fluorine, chlorine, phenyl, phenoxy, para-($C_{m_3}H_{2m_3+1}$)—$C_6H_4$— or para-($C_{m_3}H_{2m_3+1}$)—$C_6H_4O$—, or $X_8$ is alkylsulfonylamino having 1 to 6 carbon atoms, or hydroxyl,

$Y_7$ is alkyl having 1 or 2 carbon atoms, alkoxy having 1 to 8 carbon atoms, unsubstituted or $-OC_2H_4-OCH_3$-substituted carbalkoxy having 2 or 3 carbon atoms, or N-alkyl-substituted or N,N-dialkyl-substituted amino, in which each alkyl moiety has 1 to 4 carbon atoms and can be substituted by methoxy carbomethoxy, acetoxy, cyano, hydroxyl or phenyl, or $Y_7$ is $-NHCOG_5$, in which $G_5$ is alkyl having 1 to 4 carbon atoms, and

$Z_7$ is hydrogen, alkoxy having 1 or 2 carbon atoms, a radical of the formula

$$-OCH_2CH_2-O(CH_2)_m-CH_3$$

in which m is as defined in claim 3, $-NHCOD_4$, in which $D_4$ is as defined in claim 5, or chlorine.

9. A colour-photographic recording material according to claim 6, which contains a dye of the formula

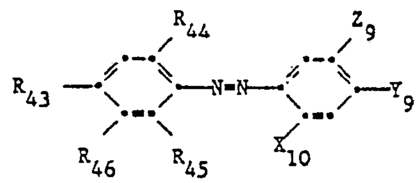 ,

(18)

in which

$R_{43}$ is vinyl which can be substituted by cyano and/or carbalkoxy having 2 to 7 carbon atoms, or $R_{43}$ is carbalkoxy having 2 or 3 carbon atoms, N-alkyl-substituted or N,N-dialkyl-substituted sulfonamido, in which each alkyl moiety has 1 to 5 carbon atoms and can be methoxy-, amino- or hydroxyl-substituted, alkylsulfone having 1 to 6 carbon atoms, phenylsulfonic acid ester, para-$(C_{m_3}H_{2m_3+1})-C_6H_4-O-SO_2-$, in which $m_3$ is as defined in claim 6, cyano or nitro,

$R_{44}$ is N,N-dimethylsulfonamido or N,N-diethylsulfonamido, cyano, nitro, chlorine, bromine, methylsulfone or trifluoromethyl,

$R_{45}$ is hydrogen, cyano, nitro, chlorine or bromine,

$R_{46}$ is hydrogen or carbalkoxy having 2 to 6 carbon atoms,

$X_{10}$ is methyl, $-NH\overset{O}{\overset{\|}{C}}-M_5$, in which $M_5$ is as defined in claim 6, or alkylsulfonamide having 1 to 6 carbon atoms,

$Y_9$ is unsubstituted or $-OC_2H_4-OCH_3$-substituted carbalkoxy having 2 or 3 carbon atoms or N-alkyl-substituted or N,N-dialkyl-substituted amino, in which each alkyl moiety has 1 to 4 carbon atoms and can be substituted by methoxy, acetoxy, cyano, hydroxyl or phenyl, and

$Z_9$ is hydrogen, methoxy, $-OCH_2-CH_2-OC_2H_5$ or $-OCH_2CH_2-OCH_3$.

10. A process for the preparation of a colour-photographic recording material, which comprises incorporating a non-diffusible, bleachable and oil-soluble azo dye into at least one silver halide emulsion layer or into a colloid layer adjacent to the silver halide emulsion layer of the recording material, characterised in that a monoazo dye of the formula (1) given in claim 1 is incorporated.

11. Use of a colour-photographic recording material according to any one of claims 1 to 9 for the production of photographic images.

12. A photographic image produced with the colour-photographic recording material according to any one of claims 1 to 9.

**Revendications**

1. Matériau utilisable dans la photographie en couleurs pour procédés par blanchiment des couleurs à l'argent, qui contient dans au moins une couche d'émulsion à l'halogénure d'argent ou dans une couche de colloïde jouxtant la couche d'émulsion à l'halogénure d'argent au moins un colorant monoazoïque non diffusible, blanchissable et soluble dans l'huile, caractérisé en ce que le colorant monoazoïque correspond à la formule

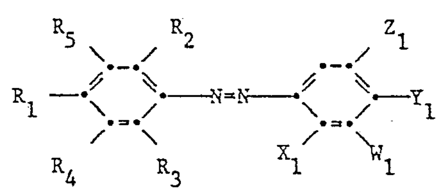

(1)

où

$R_1$ est l'hydrogène, un radical alkyle éventuellement substitué à 1 à 18 atomes de carbone, alcoxy

éventuellement substitué à 1 à 16 atomes de carbone, alcényle éventuellement substitué à 2 à 4 atomes de carbone, acyle aliphatique éventuellement substitué à 2 à 5 atomes de carbone, benzoyle éventuellement substitué, carbalcoxy éventuellement substitué à 2 à 20 atomes de carbone, —$NV_1COU_1$ où $V_1$ est l'hydrogène ou un radical alkyle à 1 à 4 atomes de carbone et $U_1$ est un radical alkyle éventuellement substitué à 1 à 12 atomes de carbone ou alcényle éventuellement substitué à 2 à 4 atomes de carbone ; carbonamido ou sulfonamido, carbonamido ou sulfonamido N-alkyl- ou N,N-dialkyl-substitué où chaque partie alkyle contient 1 à 12 atomes de carbone et est éventuellement de plus substituée ; alkylsulfonyle éventuellement substitué à 1 à 12 atomes de carbone, arylsulfonyle éventuellement substitué, aryloxy éventuellement substitué ou arylsulfonate éventuellement substitué, ou encore hydroxyle, cyano, nitro ou un halogène,

$R_2$ est l'hydrogène, un radical alkyle éventuellement substitué à 1 à 12 atomes de carbone, alcoxy éventuellement substitué à 1 à 6 atomes de carbone, carbalcoxy éventuellement substitué à 2 à 5 atomes de carbone, sulfonamido ou carbonamido N-alkyl- ou N,N-dialkyl-substitué où les radicaux alkyle contiennent chacun 1 à 8 atomes de carbone et sont éventuellement substitués ; alkylsulfonyle éventuellement substitué à 1 à 6 atomes de carbone, arylsulfonyle éventuellement substitué ou aryloxy éventuellement substitué, ou encore cyano, nitro ou un halogène,

$R_3$ est l'hydrogène, un radical alkyle ou alcoxy éventuellement substitué ayant chacun 1 à 4 atomes de carbone, phénoxy éventuellement substitué, sulfonamido ou carbonamido N-alkyl- ou N,N-dialkyl-substitué où les parties alkyle contiennent chacune 1 à 6 atomes de carbone et sont éventuellement substituées ; alkylsulfonyle éventuellement substitué à 1 à 4 atomes de carbone, phénylsulfonate éventuellement substitué, cyano, nitro, halogéno, carbalcoxy éventuellement substitué à 1 à 16 atomes de carbone, —$P(O)(OT^1)_2$ où $T^1$ est un reste alkyle à 1 à 4 atomes de carbone,

$R_4$ est l'hydrogène, un radical alkyle éventuellement substitué à 1 à 4 atomes de carbone, alcoxy éventuellement substitué à 1 à 6 atomes de carbone, carbalcoxy éventuellement substitué à 2 à 16 atomes de carbone, sulfonamido ou carbonamido N-alkyl- ou N,N-dialkyl-substitué, où les parties alkyle contiennent chacune 1 à 12 atomes de carbone et sont éventuellement substituées, —$NQ_1COT_1$ où $Q_1$ est l'hydrogène ou un radical alkyle à 1 ou 2 atomes de carbone et $T_1$ un radical alkyle éventuellement substitué à 1 à 4 atomes de carbone ; alkylsulfonyle éventuellement substitué à 1 à 12 atomes de carbone ou arylsulfonyle éventuellement substitué, ou encore hydroxyle, cyano, nitro ou un halogène,

$R_5$ est l'hydrogène, un radical alkyle éventuellement substitué à 1 à 4 atomes de carbone ou carbalcoxy éventuellement substitué à 2 à 13 atomes de carbone,

$X_1$ est l'hydrogène, un radical alkyle ou alcoxy éventuellement substitué à 1 à 6 atomes de carbone, —$NL_1COM_1$ où $L_1$ est l'hydrogène ou un radical alkyle éventuellement substitué à 1 à 4 atomes de carbone, et $M_1$ est un radical alkyle ou alcoxy, éventuellement substitué à 1 à 24 atomes de carbone ; alkylsulfonylamino éventuellement substitué à 1 à 25 atomes de carbone, ou hydroxyle,

$Y_1$ est l'hydrogène, un radical alkyle éventuellement substitué à 1 à 6 atomes de carbone, alcoxy éventuellement substitué à 1 à 12 atomes de carbone, carbalcoxy éventuellement substitué à 2 à 5 atomes de carbone, amino N-alkyl- ou N,N-dialkyl-substitué où les parties alkyle contiennent chacune 1 à 6 atomes de carbone et sont éventuellement substituées, arylsulfonylamino éventuellement substitué, —$NE_1COG_1$ où $E_1$ est l'hydrogène ou un radical alkyle éventuellement substitué à 1 à 8 atomes de carbone et $G_1$ est un radical alkyle éventuellement substitué à 1 à 12 atomes de carbone ou alcoxy éventuellement substitué à 1 à 4 atomes de carbone ; —$NE_1P(O)(OG^1)_2$ où $E_1$ a la signification donnée ci-dessus et $G^1$ est un radical alkyle à 1 à 12 atomes de carbone ; un halogène ou un hydroxyle,

$Z_1$ est l'hydrogène, un radical alkyle éventuellement substitué à 1 à 12 atomes de carbone, alcoxy éventuellement substitué à 1 à 6 atomes de carbone, —$NA_1COD_1$ où $A_1$ est l'hydrogène ou un radical alkyle éventuellement substitué à 1 à 8 atomes de carbone, et $D_1$ est un radical alkyle éventuellement substitué à 1 à 18 atomes de carbone ; acyle éventuellement substitué à 2 à 9 atomes de carbone, carbalcoxy éventuellement substitué à 2 à 19 atomes de carbone, alkylsulfonylamino éventuellement substitué à 1 à 6 atomes de carbone, un halogène ou désigne les atomes qui, ensemble avec $Y_1$, peuvent former un noyau éventuellement substitué, à cinq ou six chaînons, saturé ou insaturé, contenant éventuellement 1 ou 2 hétéroatomes, et

$W_1$ est l'hydrogène, un radical alkyle ou alcoxy éventuellement substitué ayant chacun 1 à 4 atomes de carbone, ou un halogène.

2. Matériau utilisable pour la photographie en couleurs selon la revendication 1, caractérisé en ce qu'il contient un colorant de formule

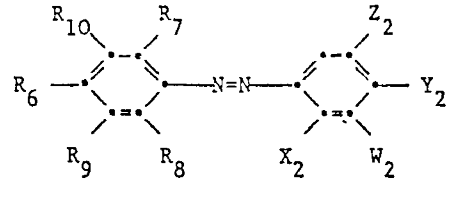

(2)

où

$R_6$ est l'hydrogène, un radical alkyle éventuellement substitué à 1 à 12 atomes de carbone, alcoxy

éventuellement substitué à 1 à 16 atomes de carbone, alcényle éventuellement substitué à 2 à 4 atomes de carbone, acyle aliphatique éventuellement substitué à 2 ou 3 atomes de carbone, benzoyle éventuellement substitué, carbalcoxy éventuellement substitué à 2 à 16 atomes de carbone, $—NV_2COU_1$ où $V_2$ est l'hydrogène ou un radical alkyle à 1 ou 2 atomes de carbone et $U_1$ a la signification donnée dans la revendication 1 ; carbonamido ou sulfonamido, carbonamido ou sulfonamido N-alkyl- ou N,N-dialkyl-substitué où les parties alkyle contiennent chacune 1 à 10 atomes de carbone et sont éventuellement de plus substituées ; alkylsulfonyle éventuellement substitué à 1 à 8 atomes de carbone, phénylsulfonyle éventuellement substitué, phénoxy éventuellement substitué ou phénylsulfonate éventuellement substitué, ou encore hydroxyle, cyano, nitro ou un halogène,

$R_7$ est l'hydrogène, un radical alkyle éventuellement substitué à 1 à 8 atomes de carbone, alcoxy éventuellement substitué à 1 à 6 atomes de carbone, carbalcoxy éventuellement substitué à 2 ou 3 atomes de carbone, sulfonamido ou carbonamido N-alkyl- ou N,N-dialkyl-substitué où les parties alkyle contiennent chacune 1 à 8 atomes de carbone et sont éventuellement substituées ; alkylsulfonyle éventuellement substitué à 1 à 6 atomes de carbone, phénylsulfonyle éventuellement substitué ou phénoxy éventuellement substitué, ou encore cyano, nitro ou un halogène,

$R_8$ est l'hydrogène, un radical alkyle ou alcoxy ayant chacun 1 à 4 atomes de carbone, phénoxy éventuellement substitué, sulfonamido ou carbonamido N-alkyl- ou N,N-dialkyl-substitué où les parties alkyle contiennent chacune 1 à 4 atomes de carbone et sont éventuellement substituées ; alkylsulfonyle à 1 à 4 atomes de carbone, phénylsulfonate éventuellement substitué, cyano, nitro, halogéno, carbalcoxy éventuellement substitué à 1 à 16 atomes de carbone ou $—P(O)(OT^1)_2$ où $T^1$ a la signification donnée dans la revendication 1,

$R_9$ est l'hydrogène, un radical alkyle à 1 à 4 atomes de carbone éventuellement substitué par un halogène, alcoxy éventuellement substitué à 1 à 6 atomes de carbone, carbalcoxy à 2 à 16 atomes de carbone, sulfonamido ou carbonamido N-alkyl- ou N,N-dialkyl-substitué où les parties alkyle contiennent chacune 1 à 8 atomes de carbone et sont éventuellement substituées ; $—NQ_1COT_1$ où $Q_1$ et $T_1$ ont la signification donnée dans la revendication 1 ; alkylsulfonyle à 1 à 6 atomes de carbone, phénylsulfonyle, hydroxyle, cyano, nitro ou un halogène,

$R_{10}$ est l'hydrogène, un radical alkyle à 1 à 4 atomes de carbone ou carbalcoxy à 2 à 13 atomes de carbone,

$X_2$ est l'hydrogène, un radical alkyle ou alcoxy à 1 à 6 atomes de carbone, $—NL_2COM_2$ où $L_2$ est l'hydrogène ou un radical alkyle à 1 à 4 atomes de carbone, et $M_2$ un radical alkyle ou alcoxy, éventuellement substitué, à 1 à 18 atomes de carbone ; alkylsulfonylamino à 1 à 18 atomes de carbone ou hydroxyle,

$Y_2$ est l'hydrogène, un radical alkyle éventuellement substitué à 1 à 4 atomes de carbone, alcoxy à 1 à 12 atomes de carbone, carbalcoxy éventuellement substitué à 2 à 5 atomes de carbone, amino N-alkyl- ou N,N-dialkyl-substitué où les parties alkyle contiennent chacune 1 à 6 atomes de carbone et sont éventuellement substituées, phénylsulfonylamino éventuellement substitué, $—NE_2COG_2$ où $E_2$ est l'hydrogène ou un radical alkyle à 1 à 8 atomes de carbone éventuellement substitué par un radical cyano, et $G_2$ est un radical alkyle à 1 à 8 atomes de carbone ou alcoxy éventuellement substitué à 1 à 4 atomes de carbone ; $—NHP(O)(OG^2)_2$ où $G^2$ est un radical alkyle à 1 à 6 atomes de carbone ; un halogène ou un hydroxyle,

$Z_2$ est l'hydrogène, un radical alkyle à 1 à 12 atomes de carbone, alcoxy éventuellement substitué à 1 à 6 atomes de carbone, $—NA_2COD_2$ où $A_2$ est l'hydrogène ou un radical alkyle à 1 à 8 atomes de carbone, et $D_2$ un radical alkyle à 1 à 18 atomes de carbone : acyle à 2 à 7 atomes de carbone, carbalcoxy éventuellement substitué à 2 à 19 atomes de carbone, alkylsulfonylamino à 1 à 6 atomes de carbone, un halogène ou désigne les atomes qui, ensemble avec $Y_2$, peuvent former un noyau à 6 chaînons éventuellement substitué par un radical méthyle, saturé ou insaturé, contenant éventuellement 1 ou 2 hétéroatomes, et

$W_2$ est l'hydrogène, un radical alkyle ou alcoxy ayant chacun 1 à 4 atomes de carbone, ou un halogène.

3. Matériau utilisable dans la photographie en couleurs selon la revendication 2, caractérisé en ce qu'il contient un colorant de formule

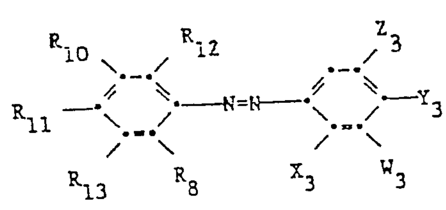

(3)

où

$R_{11}$ est l'hydrogène, un radical alkyle à 1 à 12 atomes de carbone éventuellement substitué par un radical alcoxy à 1 à 4 atomes de carbone ou carbalcoxy à 2 à 12 atomes de carbone, alcoxy à 1 à 16 atomes de carbone, un radical de formule

$$-O-(CH_2)_{m_1}-(OC_2H_4)_n-O-(CH_2)_m-CH_3$$

où $m_1$ est un nombre entier de 2 à 16, n vaut 1 ou 2, et m est un nombre entier de 0 à 3 ; alcényle à 2 à 4 atomes de carbone éventuellement substitué par un radical cyano et/ou carbalcoxy à 2 à 9 atomes de carbone, acyle aliphatique à 2 ou 3 atomes de carbone, benzoyle éventuellement substitué par un radical chloro, $-CO_2B_1$, $-SO_2B_1$ ou $-COB_1$ où $B_1$ est un radical alkyle à 1 à 8 atomes de carbone ; carbalcoxy à 2 à 16 atomes de carbone, un radical de formule

$$-\overset{O}{\overset{\|}{C}}-O-(CH_2)_{m_1}-(OC_2H_4)_n-OCH_3 \quad \text{ou} \quad -\overset{O}{\overset{\|}{C}}-O-(CH_2)_{m_1}-(OC_2H_4)_n-OC_2H_5$$

où $m_1$ et n ont la signification donnée ci-dessus ; $-NHCOU_2$ où $U_2$ est un radical alkyle à 1 à 12 atomes de carbone ou alcényle à 2 à 4 atomes de carbone éventuellement substitué par un radical méthoxy ou hydroxyle ; carbonamido, sulfonamido N-alkyl- ou N,N-dialkyl-substitué où les parties alkyle contiennent chacune 1 à 10 atomes de carbone et sont éventuellement substituées par un radical méthoxy, hydroxyle ou amino ; alkylsulfonyle à 1 à 8 atomes de carbone, phénylsulfonyle éventuellement substitué, phénoxy éventuellement substitué, phénylsulfonate éventuellement substitué, hydroxyle, cyano, nitro ou un halogène,

$R_{12}$ est l'hydrogène, un radical alkyle à 1 à 8 atomes de carbone éventuellement substitué par un halogène, alcoxy à 1 à 6 atomes de carbone, carbalcoxy à 2 ou 3 atomes de carbone, un radical de formule

$$-\overset{O}{\overset{\|}{C}}-O-CH_2CH_2OC_2H_5 \quad \text{ou} \quad -\overset{O}{\overset{\|}{C}}-O-CH_2-CH_2-OCH_3$$

sulfonamido ou carbonamido N-alkyl- ou N,N-dialkyl-substitué où les parties alkyle contiennent chacune 1 à 8 atomes de carbone et sont éventuellement substituées par un radical méthoxy ; alkylsulfonyle à 1 à 6 atomes de carbone, phénylsulfonyle, phénoxy éventuellement substitué par un radical alkyle à 1 à 8 atomes de carbone, cyano, nitro ou un halogène,

$R_{13}$ est l'hydrogène, un radical alkyle à 1 ou 2 atomes de carbone éventuellement substitué par le fluor, alcoxy à 1 à 6 atomes de carbone éventuellement substitué par un radical méthoxy, carbalcoxy à 2 à 13 atomes de carbone, sulfonamido ou carbonamido N,N-dialkyl-substitué où les parties alkyle contiennent chacune 1 à 4 atomes de carbone et sont éventuellement substituées par le radical méthoxy ; $-NQ_2COT_2$ où $Q_2$ est l'hydrogène et $T_2$ un alkyle à 1 à 4 atomes de carbone ; méthylsulfonyle, phénylsulfonyle, hydroxyle, cyano, nitro ou un halogène,

$X_3$ est l'hydrogène, un radical alkyle ou alcoxy ayant chacun 1 à 4 atomes de carbone, $-NL_3COM_3$ où $L_3$ est l'hydrogène ou méthyle et $M_3$ est un radical alkyle ou alcoxy, éventuellement substitué par un halogène, un radical carbalcoxy à 2 à 5 atomes de carbone ou phényle ou phénoxy éventuellement substitué ou alcoxy à 1 à 5 atomes de carbone, ayant chacun 1 à 18 atomes de carbone ; alkylsulfonylamino à 1 à 12 atomes de carbone ou un hydroxyle,

$Y_3$ est l'hydrogène, un radical alkyle à 1 à 4 atomes de carbone, alcoxy à 1 à 12 atomes de carbone, carbalcoxy à 2 à 5 atomes de carbone éventuellement substitué par $-OC_2H_4-OCH_3$, amino N-alkyl- ou N,N-dialkyl-substitué où les parties alkyle contiennent chacune 1 à 6 atomes de carbone et sont éventuellement substituées par un radical méthoxy, carbalcoxy à 2 à 5 atomes de carbone, acétyloxy, hydroxyle, nitro, cyano, phényle ou tosyle ; pyrrolidinyle, pipéridinyle, morpholinyle, phénylsulfonylamino éventuellement substitué par un radical alkyle à 1 à 4 atomes de carbone, $-NE_3COG_3$ où $E_3$ est l'hydrogène ou un radical alkyle à 1 à 4 atomes de carbone éventuellement substitué par un radical cyano, et $G_3$ est un reste alkyle à 1 à 8 atomes de carbone, alcoxy à 1 à 4 atomes de carbone ou un radical de formule

$$-O-(CH_2)_k-(OC_2H_4)_n-OCH_3$$

où k est un nombre entier de 2 à 4 et n a la signification donnée ci-dessus ;

$$-NH\overset{O}{\overset{\|}{P}}(OG^3)_2$$

où $G^3$ est un radical alkyle à 1 à 4 atomes de carbone ; un halogène ou un hydroxyle,

$Z_3$ est l'hydrogène, un radical alkyle à 1 à 8 atomes de carbone, alcoxy à 1 à 6 atomes de carbone, un radical de formule

$$-O-(CH_2)_{k_1}-O-(CH_2)_m-CH_3$$

où $k_1$ est un nombre entier de 2 à 6 et m a la signification donnée ; $—NA_3COD_3$ où $A_3$ est l'hydrogène ou un radical alkyle à 1 à 4 atomes de carbone, et $D_3$ est un radical alkyle à 1 à 12 atomes de carbone ; acyle à 2 à 5 atomes de carbone, carbalcoxy à 2 à 5 atomes de carbone, un radical de formule

$$-\overset{O}{\overset{\parallel}{C}}-O-(CH_2)_k-(OC_2H_4)_n-OCH_3$$

où k et n ont la signification donnée ci-dessus ; méthylsulfonylamino, halogéno ou désigne des atomes qui ensemble avec $Y_3$, peuvent former un noyau à 6 chaînons éventuellement substitué par un radical méthyle ou éthyle, saturé ou insaturé, contenant de l'azote ou de l'azote et de l'oxygène,

$W_3$ est l'hydrogène, un radical alkyle ou alcoxy ayant chacun 1 ou 2 atomes de carbone ou un halogène, et

$R_8$ et $R_{10}$ ont la signification donnée dans la revendication 2.

4. Matériau utilisable dans la photographie en couleurs selon la revendication 3, caractérisé en ce qu'il contient un colorant de formule

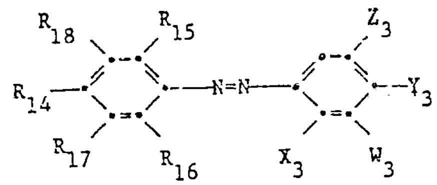

(4)

où

$R_{14}$ est l'hydrogène, un radical alkyle à 1 à 12 atomes de carbone éventuellement substitué par un radical alcoxy à 1 à 4 atomes de carbone ou carbalcoxy à 2 à 7 atomes de carbone, alcoxy à 1 à 12 atomes de carbone, radical de formule

$$—O(CH_2)_{m_2}—(OC_2H_4)_n—O(CH_2)_m—CH_3$$

où $m_2$ est un nombre entier de 2 à 12 et n et m ont la signification donnée dans la revendication 3 ; un radical alcényle à 2 à 4 atomes de carbone éventuellement substitué par un radical cyano et/ou carbalcoxy à 2 à 7 atomes de carbone, acyle aliphatique à 2 ou 3 atomes de carbone, benzoyle éventuellement substitué par un radical chloro, $—CO_2B_2$, $—SO_2B_2$ ou $—COB_2$ où $B_2$ est un radical alkyle à 1 à 4 atomes de carbone ; carbalcoxy à 2 à 9 atomes de carbone, un radical de formule

$$-\overset{O}{\overset{\parallel}{C}}-O(CH_2)_{m_3}-(OC_2H_4)_n-OCH_3 \quad \text{ou} \quad -\overset{O}{\overset{\parallel}{C}}-O-(CH_2)_{m_3}-(OC_2H_4)_n-OC_2H_5$$

où $m_3$ est un nombre entier de 2 à 8 et n a la signification donnée ci-dessus ; $—NHCOU_3$ où $U_3$ est un radical alkyle à 1 à 8 atomes de carbone ou alcényle à 2 ou 3 atomes de carbone ; carbonamido, sulfonamido N-alkyl- ou N,N-dialkyl-substitué où les parties alkyle contiennent chacune 1 à 5 atomes de carbone et sont éventuellement substituées par un radical méthoxy, hydroxyle ou amino ; alkylsulfonyle à 1 à 6 atomes de carbone, phénylsulfonyle ou phénylsulfonate éventuellement substitué par un radical alkyle à 1 à 5 atomes de carbone ou hydroxyle, ou encore hydroxyle, cyano, nitro ou un halogène,

$R_{15}$ est l'hydrogène, un radical alkyle à 1 à 4 atomes de carbone éventuellement substitué par le fluor, alcoxy à 1 ou 2 atomes de carbone, carbalcoxy à 2 ou 3 atomes de carbone, un radical de formule

$$-\overset{O}{\overset{\parallel}{C}}-O-CH_2CH_2OC_2H_5 \quad \text{ou} \quad -\overset{O}{\overset{\parallel}{C}}-O-CH_2-CH_2-OCH_3$$

sulfonamido ou carbonamido N-alkyl- ou N,N-dialkyl-substitué où les parties alkyle contiennent chacune 1 à 4 atomes de carbone et sont éventuellement substituées par un radical méthoxy ; alkylsulfonyle à 1 à 4 atomes de carbone, cyano, nitro ou un halogène,

$R_{16}$ est l'hydrogène, un radical méthyle, méthoxy, sulfonamido ou carbonamido N-alkyl- ou N,N-dialkyl-substitué où les parties alkyle contiennent chacune 1 ou 2 atomes de carbone et sont éventuellement substituées par un radical méthoxy ; alkylsulfonyle à 1 à 4 atomes de carbone, phénylsulfonate, cyano, nitro, halogène, carbalcoxy à 1 à 12 atomes de carbone éventuellement substitué par un radical méthoxy, ou $—P(O)(OT^1)_2$ où $T^1$ a la signification donnée dans la revendication 1,

$R_{17}$ est l'hydrogène, un radical méthyle, trifluorométhyle, alcoxy à 1 à 4 atomes de carbone éventuellement substitué par un radical méthoxy, carbalcoxy à 2 à 9 atomes de carbone, sulfonamido ou carbonamido N,N-dialkyl-substitué où les parties alkyle contiennent chacune 1 ou 2 atomes de carbone et sont éventuellement substituées par un radical méthoxy ; $-NHCOT_2$ où $T_2$ a la signification donnée dans la revendication 3 ; méthylsulfonyle, phénylsulfonyle, hydroxyle, cyano, nitro ou un halogène,

$R_{18}$ est l'hydrogène, un radical méthyle ou carbalcoxy à 2 à 7 atomes de carbone, et $X_3$, $Y_3$, $Z_3$ et $W_3$ ont la signification donnée dans la revendication 3.

5. Matériau utilisable pour la photographie en couleurs selon la revendication 4, caractérisé en ce qu'il contient un colorant de formule

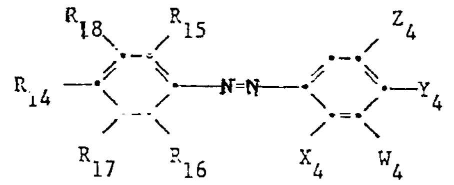

(5)

où

$X_4$ est l'hydrogène, un radical alkyle à 1 à 4 atomes de carbone, méthoxy, $-NL_3COM_4$, où $L_3$ a la signification donnée dans la revendication 3, et $M_4$ est un reste alkyle à 1 à 13 atomes de carbone ou alcoxy à 1 à 4 atomes de carbone, éventuellement substitué par un radical fluoro, chloro, alcoxy à 1 à 5 atomes de carbone, carbalcoxy à 2 ou 3 atomes de carbone, éventuellement par un radical phényle, phénoxy ou para-$(C_{m_3}H_{2m_3+1})-C_6H_4-$ ou para-$(C_{m_3}H_{2m_3+1})-C_6H_4-O-$, où $m_3$ a la signification donnée dans la revendication 4 ; alkylsulfonylamino à 1 à 6 atomes de carbone ou hydroxyle,

$Y_4$ est l'hydrogène, un radical alkyle à 1 ou 2 atomes de carbone, alcoxy à 1 à 8 atomes de carbone, carbalcoxy à 2 ou 3 atomes de carbone éventuellement substitué par $-OC_2H_4-OCH_3$, amino N-alkyl- ou N,N-dialkyl-substitué où les parties alkyle contiennent chacune 1 à 6 atomes de carbone et sont éventuellement substituées par un radical méthoxy, carbalcoxy à 2 à 5 atomes de carbone, acétyloxy, hydroxyle, nitro, cyano ou phényle ; pyrrolidinyle, pipéridinyle, phénylsulfonylamino éventuellement substitué par un radical alkyle à 1 à 4 atomes de carbone, $-NE_3COG_4$ où $E_3$ a la signification donnée dans la revendication 3 et $G_4$ est un radical alkyle à 1 à 8 atomes de carbone, alcoxy à 1 ou 2 atomes de carbone, un radical de formule

$$-O-CH_2-CH_2-OC_2H_4-OCH_3$$

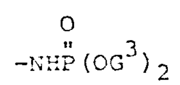

où $G^3$ a la signification donnée dans la revendication 3 ; un halogène ou un hydroxyle,

$Z_4$ est l'hydrogène, un radical alkyle à 1 à 6 atomes de carbone, alcoxy à 1 à 4 atomes de carbone, $-O(CH_2)_k-O(CH_2)_m-CH_3$ où k et m ont la signification donnée dans la revendication 3 ; $-NA_4COD_4$ où $A_4$ est l'hydrogène ou un méthyle, et $D_4$ est un radical alkyle à 1 à 8 atomes de carbone ; acétyle, carbalcoxy à 2 à 5 atomes de carbone, un radical de formule

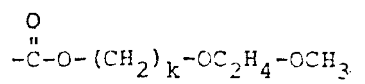

où k a la signification donnée dans la revendication 3 ; méthylsulfonylamino, halogéno ou désigne des atomes qui ensemble avec $Y_4$, peuvent former des systèmes cycliques comme

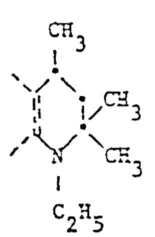

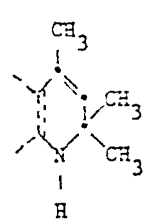

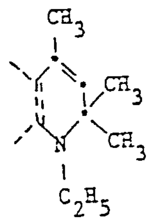 ou 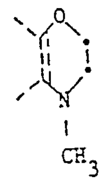

$W_4$ est l'hydrogène, un radical méthyle, méthoxy ou un halogène, et

$R_{14}$, $R_{15}$, $R_{16}$, $R_{17}$ et $R_{18}$ ont la signification donnée dans la revendication 4.

6. Matériau utilisable dans la photographie en couleurs selon la revendication 5, caractérisé en ce qu'il contient un colorant de formule

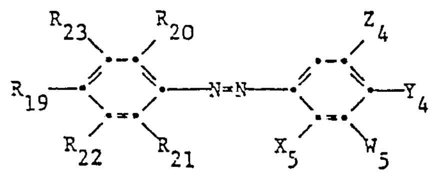 (6)

où

$R_{19}$ est l'hydrogène, un radical alkyle à 1 à 6 atomes de carbone éventuellement substitué par un reste alcoxy à 1 à 4 atomes de carbone ou carbalcoxy à 2 à 7 atomes de carbone, alcoxy à 1 à 8 atomes de carbone, un radical de formule

$$—O—(CH_2)_{m_3}—OC_2H_4—OCH_3 \quad ou \quad —O—(CH_2)_{m_3}—OC_2H_4—OC_2H_5$$

où $m_3$ a la signification donnée dans la revendication 4 ; vinyle éventuellement substitué par un radical cyano et/ou carbalcoxy à 2 à 7 atomes de carbone, acétyle, benzoyle éventuellement substitué en position para par un radical chloro, $—CO_2B_2$, $—SO_2B_2—$ ou $—COB_2$ où $B_2$ a la signification donnée dans la revendication 4 ; carbalcoxy à 2 à 9 atomes de carbone,

$$-\overset{O}{\overset{\|}{C}}-O-(CH_2)_{m_3}-OC_2H_4-OCH_3 \quad ou \quad -\overset{O}{\overset{\|}{C}}-O(CH_2)_{m_3}-OC_2H_4-OC_2H_5$$

où $m_3$ a la signification donnée dans la revendication 4 ; $—NHCOU_4$ où $U_4$ est un reste alkyle à 1 à 4 atomes de carbone ou alcényle à 2 ou 3 atomes de carbone, carbonamido, sulfonamido N-alkyl- ou N,N-dialkyl-substitué où les parties alkyle contiennent chacune 1 à 5 atomes de carbone et sont éventuellement substituées par un radical méthoxy, hydroxyle ou amino ; alkylsulfonyle à 1 à 6 atomes de carbone, phénylsulfonyle éventuellement substitué en position para par un radical alkyle à 1 à 5 atomes de carbone ou hydroxyle, ou phénylsulfonate substitué en position para, hydroxyle, cyano, nitro, chloro ou bromo,

$R_{20}$ est l'hydrogène, un radical méthyle, trifluorométhyle, méthoxy, éthoxy, carbalcoxy à 2 ou 3 atomes de carbone, un radical de formule

$$-\overset{O}{\overset{\|}{C}}-OCH_2CH_2OC_2H_5 \quad ou \quad -\overset{O}{\overset{\|}{C}}-O-CH_2-CH_2-OCH_3$$

sulfonamido ou carbonamido N-alkyl- ou N,N-dialkyl-substitué où les parties alkyle contiennent chacune 1 à 4 atomes de carbone et sont éventuellement substituées par un radical méthoxy ; alkylsulfonyle à 1 à 4 atomes de carbone, cyano, nitro, chloro ou bromo,

$R_{21}$ est l'hydrogène, un radical méthyle, méthoxy, sulfonamido N-alkyl- ou N,N-dialkyl-substitué où les parties alkyle contiennent chacune 1 ou 2 atomes de carbone ; alkylsulfonyle à 1 à 4 atomes de carbone, cyano, nitro, bromo, chloro, carbalcoxy à 2 à 7 atomes de carbone éventuellement substitué par un radical méthoxy, ou

$$-\overset{O}{\overset{\|}{P}}(OC_2H_5)_2$$

$R_{22}$ est l'hydrogène, un radical méthyle, trifluorométhyle, alcoxy à 1 ou 2 atomes de carbone éventuellement substitué par un radical méthoxy, carbalcoxy à 2 à 9 atomes de carbone, sulfonamido ou carbonamido N,N-dialkyl-substitué où les parties alkyle contiennent chacune 1 ou 2 atomes de carbone et

sont éventuellement substituées par un radical méthoxy ; —$NHCOT_2$ où $T_2$ a la signification donnée dans la revendication 3 ; méthylsulfonyle, phénylsulfonyle, hydroxyle, cyano, chloro ou bromo,

$R_{23}$ est l'hydrogène, un radical méthyle ou carbalcoxy à 2 ou 3 atomes de carbone,

$X_5$ est l'hydrogène, un radical alkyle à 1 à 4 atomes de carbone, méthoxy, —$NHCOM_5$ où $M_5$ est un reste alkyle à 1 à 8 atomes de carbone ou alcoxy à 1 ou 2 atomes de carbone, éventuellement substitué par un radical fluoro, chloro, alcoxy à 1 à 5 atomes de carbone, carbalcoxy à 2 ou 3 atomes de carbone, phényle, para-$(C_{m_3}H_{2m_3+1})$—$C_6H_4$—, phénoxy, para-$(C_{m_3}H_{2m_3+1})$—$C_6H_4$—O—, où $m_3$ a la signification donnée dans la revendication 4 ; alkylsulfonylamino à 1 à 6 atomes de carbone ou hydroxyle,

$W_5$ est l'hydrogène, un radical méthyle, méthoxy ou chloro, et

$Y_4$ et $Z_4$ ont la signification donnée dans la revendication 5.

7. Matériau utilisable pour la photographie en couleurs selon la revendication 6, caractérisé en ce qu'il contient un colorant de formule

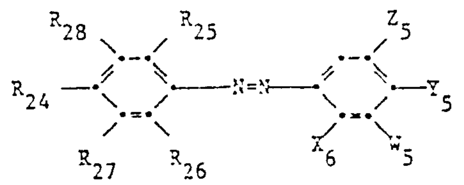

(7)

où

$R_{24}$ est l'hydrogène, un radical alkyle à 1 à 4 atomes de carbone éventuellement substitué par un radical carbalcoxy à 2 à 7 atomes de carbone, alcoxy à 1 à 4 atomes de carbone, un radical de formule

$$—O—(CH_2)_k—OC_2H_4—OCH_3 \quad ou \quad —O—(CH_2)_k—OC_2H_4—OC_2H_5$$

où k a la signification donnée dans la revendication 3 ; carbalcoxy à 2 à 9 atomes de carbone, un radical de formule

$$-\overset{O}{\overset{\|}{C}}-O-(CH_2)_{m_3}-OC_2H_4-OCH_3$$

où $m_3$ a la signification donnée dans la revendication 4 ; —$NHCOU_4$ où $U_4$ a la signification donnée dans la revendication 6 ; carbonamido, sulfonamido N-alkyl- ou N,N-dialkyl-substitué où les parties alkyle contiennent chacune 1, 2 ou 3 atomes de carbone et sont éventuellement substituées par un radical méthoxy ; alkylsulfonyle à 1 à 6 atomes de carbone, phénylsulfonyle ou phénylsulfonate éventuellement substitué en position para par un radical alkyle à 1 à 5 atomes de carbone ou hydroxyle ; hydroxyle, nitro, chloro ou bromo,

$R_{25}$ est l'hydrogène, un radical méthyle, méthoxy, éthoxy, carbalcoxy à 2 ou 3 atomes de carbone, un radical de formule

$$-\overset{O}{\overset{\|}{C}}-O-CH_2CH_2OC_2H_5 \quad ou \quad -\overset{O}{\overset{\|}{C}}-O-CH_2-CH_2-OCH_3$$

sulfonamido ou carbonamido N-alkyl- ou N,N-dialkyl-substitué où les parties alkyle contiennent chacune 1 ou 2 atomes de carbone et sont éventuellement substituées par un radical méthoxy ; alkylsulfonyle à 1 à 4 atomes de carbone, cyano, nitro, chloro ou bromo,

$R_{26}$ est l'hydrogène, un radical cyano, chloro ou bromo,

$R_{27}$ est l'hydrogène, un radical alcoxy à 1 ou 2 atomes de carbone, carbalcoxy à 2 à 9 atomes de carbone, —$NHCOT_2$ où $T_2$ a la signification donnée dans la revendication 3 ; hydroxyle ou chloro,

$R_{28}$ est l'hydrogène ou un radical carbalcoxy à 2 ou 3 atomes de carbone,

$X_6$ est l'hydrogène, un radical alkyle à 1 à 4 atomes de carbone, méthoxy, —$NHCOM_6$ où $M_6$ est un reste alkyle à 1 à 4 atomes de carbone éventuellement substitué par un radical alcoxy à 1 à 5 atomes de carbone, phénoxy ou para-$(C_kH_{2k+1})$—$C_6H_4$—O—, où k a la signification donnée dans la revendication 3 ; ou hydroxyle,

$Y_5$ est l'hydrogène, un radical alcoxy à 1 à 4 atomes de carbone, carbalcoxy à 2 ou 3 atomes de carbone éventuellement substitué par —$OC_2H_4$—$OCH_3$, amino N-alkyl- ou N,N-dialkyl-substitué où les parties alkyle contiennent chacune 1 à 4 atomes de carbone et sont éventuellement substituées par un radical méthoxy, carbalcoxy à 2 ou 3 atomes de carbone, acétyloxy, hydroxyle, cyano ou phényle ; —$NE_3COG_4$ où $E_3$ et $G_4$ ont la signification donnée dans la revendication 3 ; ou hydroxyle,

$Z_5$ est l'hydrogène, un radical alkyle à 1 à 6 atomes de carbone, alcoxy à 1 à 4 atomes de carbone, acétyle, carbalcoxy à 2 à 5 atomes de carbone, un radical de formule

$$-\overset{O}{\overset{\|}{C}}-O-(CH_2)_k-OC_2H_4-OCH_3$$

où k a la signification donnée dans la revendication 3, $NA_4COD_4$ où $A_4$ et $D_4$ ont la signification donnée dans la revendication 5 ; ou chloro, et

$W_5$ a la signification donnée dans la revendication 6.

8. Matériau utilisable dans la photographie en couleurs selon la revendication 6, caractérisé en ce qu'il contient un colorant de formule

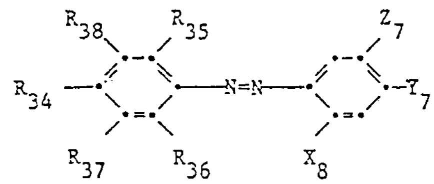

(12)

où

$R_{34}$ est l'hydrogène, un radical alkyle à 1 ou 2 atomes de carbone éventuellement substitué par un radical carbalcoxy à 2 ou 3 atomes de carbone, carbalcoxy à 2 ou 3 atomes de carbone, un radical de formule

$$-\overset{O}{\overset{\|}{C}}-O-(CH_2)_2-OC_2H_4-OC_2H_5$$

vinyle éventuellement substitué par un radical cyano et/ou carbalcoxy à 2 à 5 atomes de carbone, sulfonamido N-alkyl- ou N,N-dialkyl-substitué où les parties alkyle contiennent chacune 1 à 3 atomes de carbone et sont éventuellement substituées par un radical méthoxy ; alkylsulfonyle à 1 à 6 atomes de carbone, phénylsulfonate, para-$(C_{m_3}H_{2m_3+1})-C_6H_4-O-SO_2-$ où $m_3$ a la signification donnée dans la revendication 4 ; cyano, nitro, chloro ou bromo,

$R_{35}$ est l'hydrogène, un radical trifluorométhyle, carbalcoxy à 2 ou 3 atomes de carbone, alkylsulfonyle à 1 à 4 atomes de carbone, sulfonamido N-alkyl- ou N,N-dialkyl-substitué où les parties alkyle contiennent chacune 1 à 4 atomes de carbone et sont éventuellement substituées par un radical méthoxy ; cyano, nitro, chloro ou bromo,

$R_{36}$ est l'hydrogène, un radical méthylsulfonyle, N,N-diéthylsulfonamide, cyano, nitro, chloro ou bromo,

$R_{37}$ est l'hydrogène, un radical méthyle, carbalcoxy à 2 à 7 atomes de carbone, sulfonamido ou carbonamido N,N-dialkyl-substitué où les parties alkyle contiennent chacune 1 ou 2 atomes de carbone et sont éventuellement substituées par un radical méthoxy ; cyano ou chloro,

$R_{38}$ est l'hydrogène ou un méthyle,

$X_8$ est l'hydrogène, un radical méthyle, $-NHCOM_7$, où $M_7$ est un reste alkyle à 1 à 8 atomes de carbone, éventuellement substitué par un radical carbalcoxy à 2 ou 3 atomes de carbone, fluoro, chloro, phényle ou phénoxy, para-$(C_{m_3}H_{2m_3+1})-C_6H_4-$ ou para-$(C_{m_3}H_{2m_3+1})-C_6H_4-O-$, alkylsulfonylamino à 1 à 6 atomes de carbone ou hydroxyle,

$Y_7$ est un radical alkyle à 1 ou 2 atomes de carbone, alcoxy à 1 à 8 atomes de carbone, carbalcoxy à 2 ou 3 atomes de carbone éventuellement substitué par $-OC_2H_4-OCH_3$, amino N-alkyl- ou N,N-dialkyl-substitué où les parties alkyle contiennent chacune 1 à 4 atomes de carbone et sont éventuellement substituées par un radical méthoxy, carbométhoxy, acétyloxy, cyano, hydroxyle ou phényle ; ou $-NHCOG_5$ où $G_5$ est un radical alkyle à 1 à 4 atomes de carbone et,

$Z_7$ est l'hydrogène, un radical alcoxy à 1 ou 2 atomes de carbone, un radical de formule

$$-OCH_2CH_2-O(CH_2)_m-CH_3$$

où m a la signification donnée dans la revendication 3, $-NHCOD_4$ où $D_4$ a la signification donnée dans la revendication 5 ; ou chloro.

9. Matériau utilisable dans la photographie en couleurs selon la revendication 6, caractérisé en ce qu'il contient un colorant de formule

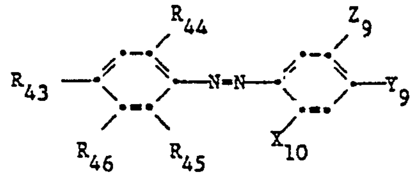

(18)

où

$R_{43}$ est un radical vinyle éventuellement substitué par un radical cyano et/ou carbalcoxy à 2 à 7 atomes de carbone, carbalcoxy à 2 ou 3 atomes de carbone, sulfonamido N-alkyl- ou N,N-dialkyl-substitué où les parties alkyle contiennent chacune 1 à 5 atomes de carbone et sont éventuellement substituées par un radical méthoxy, amino ou hydroxyle ; alkylsulfonyle à 1 à 6 atomes de carbone, phénylsulfonate, para-$(C_{m_3}—H_{2m_3+1})$-$C_6H_4$—O—$SO_2$— où $m_3$ a la signification donnée dans la revendication 6 ; cyano ou nitro,

$R_{44}$ est un radical N,N-diméthyl- ou N,N-diéthylsulfonamido, méthylsulfonyle, trifluorométhyle, cyano, nitro, chloro ou bromo,

$R_{45}$ est l'hydrogène, un radical cyano, nitro, chloro ou bromo,

$R_{46}$ est l'hydrogène, ou un radical carbalcoxy à 2 à 6 atomes de carbone,

$X_{10}$ est un radical méthyle, $—NH\overset{O}{\overset{\|}{C}}—M_5$ où $M_5$ a la signification donnée dans la revendication 6 ; ou alkylsulfonamido à 1 à 6 atomes de carbone,

$Y_9$ est un radical carbalcoxy à 2 ou 3 atomes de carbone éventuellement substitué par $—OC_2H_4—OCH_3$, amino N-alkyl- ou N,N-dialkyl-substitué où les parties alkyle contiennent chacune 1 à 4 atomes de carbone et sont éventuellement substituées par un radical méthoxy, acétyloxy, cyano, hydroxyle ou phényle ; et

$Z_9$ est l'hydrogène, un radical méthoxy, $—OCH_2CH_2OC_2H_5$ ou $—OCH_2CH_2—OCH_3$.

10. Procédé de préparation d'un matériau utilisable pour la photographie en couleurs, dans lequel on incorpore un colorant azoïque non-diffusible, blanchissable et soluble dans l'huile dans au moins une couche d'émulsion à l'halogénure d'argent ou dans une couche de colloïde du matériau, jouxtant la couche d'émulsion à l'halogénure d'argent, caractérisé en ce qu'on incorpore un colorant monoazoïque ayant la formule donnée dans la revendication 1.

11. Utilisation du matériau utilisable dans la photographie en couleurs selon l'une des revendications 1 à 9 pour la réalisation d'images photographiques.

12. L'image photographique réalisée avec le matériau utilisable dans la photographie en couleurs selon l'une des revendications 1 à 9.